(19) Europäisches Patentamt
European Patent Office
Office européen des brevets

(11) **EP 4 736 995 A1**

(12) **EUROPEAN PATENT APPLICATION**
published in accordance with Art. 153(4) EPC

(43) Date of publication:
06.05.2026 Bulletin 2026/19

(21) Application number: 24832141.6

(22) Date of filing: 28.06.2024

(51) International Patent Classification (IPC):
*B01D 69/02* (2006.01)    *B01D 53/22* (2006.01)
*B01D 63/06* (2006.01)    *B01D 69/12* (2006.01)
*B01D 71/02* (2006.01)    *B01D 71/56* (2006.01)
*B01D 71/64* (2006.01)    *C01B 3/56* (2006.01)
*C01B 39/40* (2006.01)

(52) Cooperative Patent Classification (CPC):
**B01D 63/06; B01D 67/0051; B01D 67/0088;**
**B01D 69/02; B01D 69/108; B01D 69/12;**
**B01D 71/02; B01D 71/0281; B01D 71/56;**
**B01D 71/64; C01B 3/56; C01B 39/40;**
B01D 53/228; B01D 2256/16; B01D 2325/02831;
(Cont.)

(86) International application number:
**PCT/JP2024/023643**

(87) International publication number:
**WO 2025/005285 (02.01.2025 Gazette 2025/01)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 30.06.2023 JP 2023108757
30.06.2023 JP 2023108758

(71) Applicant: **Mitsubishi Chemical Corporation**
**Tokyo 100-8251 (JP)**

(72) Inventors:
• **HORIE, Hideyoshi**
**Tokyo 100-8251 (JP)**

• **SATOU, Kiminori**
**Tokyo 100-8251 (JP)**
• **RI, Morihiro**
**Tokyo 100-8251 (JP)**
• **MIYAGI, Hidekazu**
**Tokyo 100-8251 (JP)**
• **TAKEWAKI, Takahiko**
**Tokyo 100-8251 (JP)**
• **HORIUCHI, Kaoru**
**Tokyo 100-8251 (JP)**

(74) Representative: **Hoffmann Eitle**
**Patent- und Rechtsanwälte PartmbB**
**Arabellastraße 30**
**81925 München (DE)**

(54) **SEPARATION MEMBRANE, SEPARATION MEMBRANE LAYERED BODY, SEPARATION MODULE OR SEPARATION TOWER, HYDROGEN RECOVERY SYSTEM, AND HYDROGEN SEPARATION AND RECOVERY METHOD**

(57) A separation membrane for separating hydrogen and a gas L, in which an activation energy $Ep(S)$ (kJ/mol) of a permeance $P(S)$ (mol/(m$^2$·s·Pa)) of hydrogen through the separation membrane derived within a range of a temperature Tam (°C) satisfying Formula (1-I) described below and an activation energy $Ep(L)$ (kJ/mol) of a permeance $P(L)$ (mol/(m$^2$·s·Pa)) of a gas L (provided that hydrogen is excluded) through the separation membrane derived within the same temperature range satisfy Formula (1-II) described below: 5 (°C) ≤ Tam (°C) ≤ 200 (°C) (1-I) $|Ep(L)| < |Ep(S)|$ (1-II). There can be provided a separation membrane for separating and recovering hydrogen, a separation membrane laminated body, a separation module or separation tower, a hydrogen recovery system, and a method for separating and recovering hydrogen, which enable safe and highly efficient separation and recovery of hydrogen from a mixed gas composed of molecules having relatively close dynamic molecular diameters even when a supply pressure is relatively low, including separation and recovery of hydrogen

EP 4 736 995 A1

from a hydrogen-oxygen mixed gas.

(52) Cooperative Patent Classification (CPC): (Cont.)
    B01D 2325/20

**Description**

Technical Field

The present invention relates to a separation membrane that separates and recovers a desired component from a mixed gas containing a plurality of gas components, a separation membrane laminated body including the separation membrane, a separation module or separation tower equipped with the separation membrane, a hydrogen recovery system using the separation membrane, and a method for separating and recovering hydrogen.

Background Art

Active utilization of hydrogen as a next-generation energy source is expected, and various hydrogen production methods have been proposed. In particular, with regard to the production of so-called green hydrogen, there have been proposed a method of electrolyzing water using renewable energy such as sunlight, a method of simultaneously generating hydrogen and oxygen by total decomposition of water with a photocatalyst and separating and recovering hydrogen therefrom, and the like.

In the case of electrolysis, oxygen and hydrogen will be obtained from positive and negative electrodes, but in practice, hydrogen and oxygen are mixed to some extent, and therefore, it is necessary to separate and recover hydrogen from the mixture. In the case of total decomposition of water by a photocatalyst, it is necessary to separate and recover hydrogen from a mixed gas having a stoichiometric composition, i.e., a ratio of hydrogen:oxygen = 2:1.

A gas separation or concentration method has been proposed in which a mixed gas containing a plurality of gas components is brought into contact with a separation membrane, and a component having high permeability in the mixed gas is allowed to permeate the separation membrane to separate the component having high permeability from the mixed gas, or a component having low permeability is concentrated by allowing the component having high permeability to permeate the separation membrane from the mixed gas (e.g., see Patent Literature 1), and a porous support-zeolite membrane composite has been proposed as the separation membrane (e.g., see Patent Literatures 2 and 3).

However, the mixed gas having a ratio of hydrogen:oxygen = 2:1 is also called hydrogen detonating gas, and once ignited, a detonation phenomenon in which a flame accompanied by a shock wave propagates at a speed exceeding the sound speed may occur, and it is necessary to consider sufficient safety in handling the mixed gas.

For example, an explosion range and a detonation range of a hydrogen-oxygen mixed gas at ordinary pressure are described, and a hydrogen-oxygen mixed gas having a hydrogen concentration of from 3.9 vol% to 95.8 vol% is defined as being in the explosion range, and a hydrogen-oxygen mixed gas having a hydrogen concentration ranging from 15.5 vol% to 92.6 vol% is particularly defined as being in the detonation range (see Non-Patent Literature 1).

From the above viewpoint, the generated hydrogen-oxygen mixed gas needs to be separated into hydrogen (or a hydrogen-rich gas having a composition equal to or higher than an appropriate composition) and oxygen (or an oxygen-rich gas having a composition equal to or higher than an appropriate composition) safely and highly efficiently.

However, since the mixed gas is inherently difficult to handle and dynamic molecular diameters of hydrogen and oxygen are very close to each other, a technique of separating and recovering hydrogen from a hydrogen-oxygen mixed gas has not been sufficiently studied.

For example, Non-Patent Literature 2 describes dynamic molecular diameters, and describes that hydrogen has a dynamic molecular diameter of 0.289 nm, oxygen has a dynamic molecular diameter of 0.346 nm, carbon dioxide has a dynamic molecular diameter of 0.330 nm, argon has a dynamic molecular diameter of 0.34 nm, nitrogen has a dynamic molecular diameter of 0.364 nm, and methane has a dynamic molecular diameter of 0.38 nm. It is hard to say that the separation and recovery techniques for such a mixed gas having dynamic molecular diameters close to each other have been sufficiently studied.

Further, it is known that, when a desired component is separated from a mixed gas, the efficiency of the separation process is usually improved by pressurizing the supply side, but if the hydrogen-oxygen mixed gas is pressurized, its handling becomes more difficult and damage at the time of ignition becomes more serious. Therefore, a high-performance separation membrane is desired which can constitute a safe and highly efficient hydrogen-oxygen separation process at a low supply pressure of about tens of kPa (G) or less or at ordinary pressure.

In the case of separating a mixed gas containing an additional component, for example, a hydrogen-methane mixed gas, in the case of separating a hydrogen-carbon dioxide mixed gas, or the like, further improvements in safety and efficiency of the technique of separating and recovering a desired molecule under a low supply pressure condition are desired.

As a specific aspect, a separation process of a hydrogen-oxygen mixed gas in an artificial photosynthesis plant through which the hydrogen-oxygen mixed gas flows is exemplified. The artificial photosynthesis plant may involve a process of decomposing water into hydrogen and oxygen by a photocatalyst, then separating the resultant hydrogen-oxygen mixed gas into a hydrogen-rich gas and an oxygen-rich gas by a gas separation membrane or the like, and subsequently improving the purity of hydrogen by various methods.

In the subsequent stage, it is possible to produce a lower olefin by using the hydrogen and carbon dioxide gas.

In this case, particularly on the upstream side, i.e., in the separation process of the hydrogen-oxygen mixed gas, the hydrogen-oxygen mixed gas having a stoichiometric composition flows through various places, and therefore, it is preferable to have a flame extinction function in preparation for ignition and subsequent detonation in case of emergency, in addition to safe and highly efficient separation by the separation membrane.

In general, the separation membrane used in the hydrogen-oxygen separation step can be selected from an inorganic membrane mainly formed of an inorganic material, an organic membrane mainly formed of an organic material, a mixed matrix membrane having these membranes in combination, and the like, depending on the material thereof.

In the case of separating and recovering hydrogen from a mixed gas containing hydrogen and oxygen, hydrogen permeance is often improved by increasing the temperature of any of the membranes. However, the flame extinction characteristics and the like when the hydrogen-oxygen mixed gas is warmed have not necessarily been clarified because the experiment itself may involve a risk.

Citation List

Patent Literature

Patent Literature 1: JP 2015-44162 A
Patent Literature 2: JP 2015-44163 A
Patent Literature 3: JP 2020-131184 A

Non-Patent Literature

Non-Patent Literature 1: Shozo Yagyu, Explosive Limits of Gas and Vapor, Japan Society for Safety Engineering, 1977.4
Non-Patent Literature 2: Masakoto Kanezashi, Tailoring the Silica Network Structure for Highly Permeable Gas Separation Membranes and Evaluation of Gas Permeation Properties, MEMBRANE 41 (4), 183 to 188, 2016

Summary of Invention

Technical Problem

Under the above-described circumstances, an object of the present invention is to provide a separation membrane, a separation membrane laminated body, a separation module or separation tower, a hydrogen recovery system, and a method for separating and recovering hydrogen, which enable safe and highly efficient separation and recovery of hydrogen from a mixed gas composed of molecules having relatively close dynamic molecular diameters even when a supply pressure is relatively low, including separation and recovery of hydrogen from a hydrogen-oxygen mixed gas.

Another object of the present invention is to provide a method for separating and recovering hydrogen from a mixed gas containing at least hydrogen and oxygen with high separation performance and high permeability, a separation module or separation tower that separates and recovers hydrogen with high separation performance and high permeability, and a hydrogen recovery system.

Solution to Problem

The present inventors have conducted intensive studies to solve the above problems, and as a result, have found a separation membrane in which temperature dependency of permeation performance of a plurality of types of molecules constituting a mixed gas is unique as compared with that of a general separation membrane. The present inventors have also found that a separation module or separation tower equipped with the separation membrane and further a recovery system using the separation membrane have excellent adaptability to separation and recovery of hydrogen from a mixed gas, particularly a mixed gas containing hydrogen, and have arrived at the present invention. A separation module or separation tower using the separation membrane of the present invention and further a recovery system using the separation membrane can exhibit excellent separation capability even when a supply pressure is relatively low.

Furthermore, the present inventors have found that a separation and recovery method that positively uses the unique temperature characteristics of the separation membrane or the like to simultaneously improve the permeation characteristics of a desired component and the separation characteristics of the desired component from other components has excellent characteristics that can achieve both safety and efficiency in the separation of a mixed gas, for example, characteristics that enable separation and recovery of hydrogen even under a low supply pressure condition, and have arrived at the present invention.

That is, the present invention provides the following [1] to [27], which are a first aspect of the present invention.

As a result of intensive studies to solve the above problems, the present inventors have also found that, in a case where a hydrogen-oxygen mixed gas flows through an artificial photosynthesis plant or an electrolysis plant and the mixed gas is separated by, for example, membrane separation, both permeation performance of the membrane separation and flame extinction performance for the hydrogen-oxygen mixed gas which should be provided for safety can be achieved in a certain temperature range, and have arrived at the present invention.

That is, the present invention provides the following [28] to [56], which are a second aspect of the present invention.

[1] A separation membrane in which an activation energy Ep(S) (kJ/mol) of a permeance P(S) (mol/(m$^2$·s·Pa)) of hydrogen through the separation membrane derived within a range of a temperature Tam (°C) satisfying Formula (1-I) described below and an activation energy Ep(L) (kJ/mol) of a permeance P(L) (mol/(m$^2$·s·Pa)) of a gas L (provided that the gas is at least one selected from the group consisting of carbon dioxide, argon, oxygen, nitrogen, and methane) through the separation membrane derived within the same temperature range satisfy Formula (1-II) described below:

$$5\ (°C) \le \text{Tam}\ (°C) \le 200\ (°C) \qquad (1\text{-}I)$$

$$|Ep(L)| < |Ep(S)| \qquad (1\text{-}II).$$

[2] The separation membrane according to [1], wherein the Formula (1-III) described below is satisfied:

$$P(L) < P(S) \qquad (1\text{-}III).$$

[3] The separation membrane according to [1] or [2], wherein Formula (1-IV) described below is satisfied:

$$0 < Ep(L) < Ep(S) \qquad (1\text{-}IV).$$

[4] The separation membrane according to any of [1] to [3], wherein the separation membrane is an inorganic membrane.

[5] The separation membrane according to any of [1] to [4], wherein the separation membrane includes a surface-modified zeolite membrane.

[6] A separation membrane laminated body including a separation membrane on a support, wherein the separation membrane is the separation membrane described in any of [1] to [5], the support is tubular, and an inner diameter φi (mm) of the support satisfies Formula (1-VI) described below:

$$6\ (mm) \le φi\ (mm) \le 16\ (mm) \qquad (1\text{-}VI).$$

[7] A separation module or separation tower including a separation membrane, wherein the separation membrane is the separation membrane described in any of [1] to [5], and a temperature Tos (°C) of the separation module or separation tower satisfies Formula (1-VII) described below:

$$45\ (°C) \le \text{Tos}\ (°C) \le 200\ (°C) \qquad (1\text{-}VII).$$

[8] The separation module or separation tower according to [7], wherein a distance between an inner wall of the separation module or separation tower and the separation membrane closest to the inner wall is 0.1 cm or more and 50 cm or less.

[9] A separation module or separation tower including the separation membrane laminated body described in [6], wherein a temperature Tos (°C) of the separation module or separation tower satisfies Formula (1-VII) described

below:

$$45 \; (^\circ C) \le Tos \; (^\circ C) \le 200 \; (^\circ C) \qquad (1\text{-}VII).$$

[10] The separation module or separation tower according to any of [7] to [9], further including at least one of a dehumidification mechanism, a warming mechanism, or a flame propagation suppression mechanism.

[11] A hydrogen recovery system including a separation membrane, wherein the separation membrane is the separation membrane described in any of [1] to [5], and

at least one temperature Tgm (°C) of a temperature of a mixed gas M to be separated and recovered in the hydrogen recovery system or a temperature of the separation membrane satisfies Formula (1-IX) described below:

$$45 \; (^\circ C) \le Tgm \; (^\circ C) \le 200 \; (^\circ C) \qquad (1\text{-}IX).$$

[12] A hydrogen recovery system including the separation membrane laminated body described in [6], wherein at least one temperature Tgm (°C) of a temperature of a mixed gas M to be separated and recovered in the hydrogen recovery system or a temperature of the separation membrane satisfies Formula (1-IX) described below:

$$45 \; (^\circ C) \le Tgm \; (^\circ C) \le 200 \; (^\circ C) \qquad (1\text{-}IX).$$

[13] The hydrogen recovery system according to [11] or [12], wherein the separation membrane is included in a separation module or separation tower, and a distance between an inner wall of the separation membrane module or separation tower and the separation membrane closest to the inner wall is 0.1 cm or more and 50 cm or less.

[14] The hydrogen recovery system according to any of [11] to [13], further including a pressurization mechanism for the mixed gas M to be supplied to the separation membrane.

[15] The hydrogen recovery system according to any of [11] to [14], further including at least one of a dehumidification mechanism, a warming mechanism, or a flame propagation suppression mechanism.

[16] The hydrogen recovery system according to any of [11] to [15], further including a decompression mechanism on a permeation side of the separation membrane.

[17] A method for separating and recovering hydrogen from a mixed gas M of hydrogen and a gas L1 by a separation membrane, the gas L1 having a larger dynamic molecular diameter than hydrogen, wherein

the separation membrane is the separation membrane described in any of [1] to [5], and at least one temperature Tgm (°C) of a temperature of the mixed gas M or a temperature of the separation membrane satisfies Formula (1-IX) described below:

$$45 \; (^\circ C) \le Tgm \; (^\circ C) \le 200 \; (^\circ C) \qquad (1\text{-}IX).$$

[18] The method for separating and recovering hydrogen according to [17], wherein a pressure $F_M$ (MPa (G)) of the mixed gas M to be supplied to the separation membrane satisfies Formula (1-XI) described below:

$$0.0 \; (MPa(G)) \le F_M \; (MPa(G)) \le 0.2 \; (MPa(G)) \qquad (1\text{-}XI).$$

[19] The method for separating and recovering hydrogen according to [17] or [18], wherein a pressure on a permeation side of the separation membrane is set to a reduced pressure.

[20] The method for separating and recovering hydrogen according to [19], wherein the pressure on the permeation side of the separation membrane is -0.101 MPa (G) or more and - 0.065 MPa (G) or less.

[21] The method for separating and recovering hydrogen according to any of [17] to [20], wherein a relative humidity $RH_M$ (%) in the mixed gas M satisfies Formula (1-XIII) described below:

$$0.0 \; (\%) \le RH_M \; (\%) \le 5 \; (\%) \qquad (1\text{-}XIII).$$

[22] The method for separating and recovering hydrogen according to any of [18] to [21], wherein warming is performed so that at least one temperature Tgm (°C) of a temperature of the mixed gas M or a temperature of the separation membrane satisfies Formula (1-IX) described below:

$$45 \ (°C) \leq Tgm \ (°C) \leq 200 \ (°C) \qquad (1\text{-}IX).$$

[23] The method for separating and recovering hydrogen according to any of [17] to [22], wherein the mixed gas M passes through the separation membrane after passing through a flame propagation suppression mechanism.

[24] The method for separating and recovering hydrogen according to any of [17] to [23], wherein a separation membrane module or separation tower including the separation membrane is provided, and the mixed gas M is supplied so that, in the separation membrane module or separation tower, a supply-side maximum Reynolds number is 5 or more and 2000 or less and/or a permeation-side maximum Reynolds number is 5 or more and 2000 or less.

[25] The method for separating and recovering hydrogen according to any of [17] to [24], wherein the gas L is oxygen, and a hydrogen-oxygen mixed gas is supplied so that the hydrogen-oxygen mixed gas on a permeation side after a separation and recovery step has a hydrogen concentration of more than 95.8 vol%.

[26] The method for separating and recovering hydrogen according to [25], wherein the hydrogen-oxygen mixed gas is supplied so that, after the separation and recovery step, the hydrogen-oxygen mixed gas on the permeation side has a hydrogen concentration of 96.0 vol% or more and the hydrogen-oxygen mixed gas on a non-permeation side has a hydrogen concentration of 15.5 vol% or less.

[27] A separation membrane in which an activation energy Ep(S) (kJ/mol) of a permeance P(S) (mol/(m$^2$·s·Pa)) of hydrogen through the separation membrane derived within a range of a temperature Tam (°C) satisfying Formula (1-I) described below and an activation energy Ep(L) (kJ/mol) of a permeance P(L) (mol/(m$^2$·s·Pa)) of a gas L (provided that hydrogen is excluded) through the separation membrane derived within the same temperature range satisfy Formula (1-II) described below:

$$5 \ (°C) \leq Tam \ (°C) \leq 200 \ (°C) \qquad (1\text{-}I)$$

$$|Ep(L)| < |Ep(S)| \qquad (1\text{-}II).$$

[28] A separation and recovery method for separating and recovering hydrogen from a mixed gas M containing at least hydrogen and oxygen, wherein a temperature Tgm (°C) in a separation and recovery step satisfies Formula (2-I) described below:

$$45 \ (°C) \leq Tgm \ (°C) \leq 200 \ (°C) \qquad (2\text{-}I).$$

[29] The separation and recovery method according to [28], wherein a composition ratio of hydrogen to oxygen in the mixed gas M to be supplied to the separation and recovery step is 2:1 or more, with hydrogen in excess.

[30] The separation and recovery method according to [28] or [29], wherein the mixed gas M to be supplied to the separation and recovery step is within an explosion range.

[31] The separation and recovery method according to any of [28] to [30], wherein a separation membrane is used in the separation and recovery step.

[32] The separation and recovery method according to [31], wherein the separation membrane is an inorganic membrane.

[33] The separation and recovery method according to [32], wherein the separation membrane includes a surface-modified zeolite membrane.

[34] The separation and recovery method according to any of [31] to [33], wherein the separation membrane is a polyimide membrane or a polyamide membrane.

[35] The separation and recovery method according to any of [31] to [34], wherein a pressure $F_M$ (MPa (G)) of the mixed gas M to be supplied to the separation membrane satisfies Formula (2-III) described below:

$$0.0 \ (MPa(G)) \leq F_M \ (MPa(G)) \leq 0.2 \ (MPa(G)) \qquad (2\text{-}III).$$

[36] The separation and recovery method according to any of [31] to [35], wherein a pressure on a permeation side of the separation membrane is reduced.

[37] The separation and recovery method according to [36], wherein the pressure on the permeation side of the separation membrane is lower than -0.9 MPa (G).

[38] The separation and recovery method according to any of [31] to [37], wherein a relative humidity $RH_M$ (%) in the mixed gas M satisfies Formula (2-V) described below:

$$0.0\ (\%) \leq RH_M\ (\%) \leq 5.0\ (\%) \qquad (2\text{-}V).$$

[39] The separation and recovery method according to any of [31] to [38], wherein at least one of the mixed gas M or the separation membrane is warmed so that the temperature Tgm satisfies Formula (2-I).

[40] The separation and recovery method according to any of [31] to [39], wherein the mixed gas M passes through the separation membrane after passing through a flame propagation suppression mechanism.

[41] The separation and recovery method according to any of [31] to [40], wherein the mixed gas M is supplied so that a supply-side maximum Reynolds number and/or a permeation-side maximum Reynolds number is 5 or more and 2000 or less.

[42] The separation and recovery method according to any of [31] to [41], wherein the mixed gas M is supplied so that the mixed gas after permeation in the separation and recovery step has a hydrogen concentration of more than 95.8 vol%.

[43] The separation and recovery method according to [42], wherein the mixed gas M is supplied so that, after the separation and recovery step, the mixed gas on a permeation side has a hydrogen concentration of 96.0 vol% or more and the mixed gas on a non-permeation side has a hydrogen concentration of 15.5 vol% or less.

[44] A separation module or separation tower that separates and recovers hydrogen from a mixed gas M containing at least hydrogen and oxygen, the separation module or separation tower including a temperature adjustment mechanism.

[45] The separation module or separation tower according to [44], wherein the temperature adjustment mechanism includes a tubular flow path through which a heat medium flows and/or a heat insulation section.

[46] The separation module or separation tower according to [44] or [45], wherein a temperature Tos (°C) of the separation module or the separation tower satisfies Formula (2-VII) described below:

$$51\ (°C) \leq Tos\ (°C) \leq 220\ (°C) \qquad (2\text{-}VII).$$

[47] The separation module or separation tower according to any of [44] to [46], wherein the separation module or separation tower includes a separation membrane.

[48] The separation module or separation tower according to [47], wherein the separation membrane is an inorganic membrane.

[49] The separation module or separation tower according to [47] or [48], wherein the separation membrane includes a surface-modified zeolite membrane.

[50] The separation module or separation tower according to any of [47] to [49], wherein a distance between an inner wall of the separation module or separation tower and the separation membrane closest to the inner wall is 0.1 cm or more and 50 cm or less.

[51] The separation module or separation tower according to any of [47] to [50], wherein the separation membrane includes a tubular support, and an inner diameter φi (mm) of the support satisfies Formula (2-IX) described below:

$$6 \leq \varphi i \leq 16 \qquad (2\text{-}IX).$$

[52] A hydrogen recovery system that separates and recovers hydrogen from a mixed gas M containing at least hydrogen and oxygen, the hydrogen recovery system including the separation module or separation tower described in any of [44] to [51].

[53] The hydrogen recovery system according to [52], further including a pressurization mechanism for the mixed gas M to be supplied to the separation module or separation tower.

[54] The hydrogen recovery system according to [52] or [53], further including a dehumidification section for the mixed gas M and/or a warming section for the mixed gas M.

[55] The hydrogen recovery system according to any of [52] to [54], further including a flame propagation suppression section.

[56] The hydrogen recovery system according to any of [52] to [55], further including a decompression mechanism on a downstream side of the separation module or separation tower.

Advantageous Effects of Invention

The present invention can provide a separation membrane for separating and recovering hydrogen, a separation membrane laminated body, a separation module or separation tower, a hydrogen recovery system, and a method for separating and recovering hydrogen, which enable safe and highly efficient separation and recovery of hydrogen from a mixed gas composed of molecules having relatively close dynamic molecular diameters even when a supply pressure is relatively low, including separation and recovery of hydrogen from a hydrogen-oxygen mixed gas.

Also, the present invention can provide a method of separating and recovering hydrogen from a mixed gas containing at least hydrogen and oxygen with high separation performance and high permeability, a separation module or separation tower that separates and recovers hydrogen, and a hydrogen recovery system.

Brief Description of Drawings

FIG. 1 is a schematic view of a composite separation membrane of the present invention.

FIG. 2 is a schematic view of a gas flow type apparatus used for forming a second separation section.

FIG. 3 is a schematic view of the inside of a reaction tube of the gas flow type apparatus used for forming the second separation section.

FIG. 4 is a schematic view of a measuring apparatus (or a separating apparatus) used for separating a mixed gas.

FIG. 5 is an Arrhenius plot from which an activation energy of each of hydrogen permeance and oxygen permeance was derived (Example 1-1).

FIG. 6 is a schematic view of a separation module including a warming mechanism.

FIG. 7 is an Arrhenius plot from which an activation energy of each of hydrogen permeance and oxygen permeance was derived (Example 1-6).

FIG. 8 is an Arrhenius plot from which an activation energy of each of hydrogen permeance and oxygen permeance was derived (Example 1-7).

FIG. 9 is an Arrhenius plot from which an activation energy of each of hydrogen permeance and nitrogen permeance was derived (Example 1-8).

FIG. 10 is an Arrhenius plot from which an activation energy of each of hydrogen permeance and nitrogen permeance was derived (Comparative Example 1-1).

FIG. 11 is an Arrhenius plot from which an activation energy of each of hydrogen permeance and oxygen permeance was derived (Example 1-11).

FIG. 12 is a schematic view of an experimental apparatus for determining a limit flame extinction pressure.

FIG. 13 is a graph illustrating the relationship between the temperature of a hydrogen-oxygen mixed gas and a flame extinction limit pressure with the value at 20°C as a reference.

Description of Embodiments

Embodiments of the present invention will be described in more detail below; however, description of constitutional requirements provided below is an example of embodiments of the present invention, and the present invention is not limited to these contents and can be implemented with various modifications within the scope of the gist.

The first aspect of the present invention relates to a separation membrane, a separation membrane laminated body, a separation module or separation tower, a hydrogen recovery system, and a method for separating and recovering hydrogen.

Separation Membrane

The separation membrane of the present invention is characterized in that an activation energy $Ep(S)$ (kJ/mol) of a permeance $P(S)$ (mol/(m$^2$·s·Pa)) of hydrogen through the separation membrane derived within a range of a temperature Tam (°C) satisfying Formula (1-I) described below and an activation energy $Ep(L)$ (kJ/mol) of a permeance $P(L)$ (mol/(m$^2$·s·Pa)) of a gas L (provided that hydrogen is excluded) through the separation membrane derived within the same temperature range satisfy Formula (1-II) described below.

$$5\ (°C) \leq Tam\ (°C) \leq 200\ (°C) \qquad (1\text{-}I)$$

$$|Ep(L)| < |Ep(S)| \qquad (1\text{-}II)$$

In the case of using a mixed gas M described below, at least one of the gases L constituting the mixed gas M may satisfy Formula (1-II), but it is preferable that the gas other than hydrogen in the mixed gas M, which shows the largest vol%, satisfies Formula (1-II), it is more preferable that 80 vol% or more of the gas other than hydrogen in the mixed gas M satisfies Formula (1-II), it is even more preferable that 95 vol% or more of the gas other than hydrogen in the mixed gas M satisfies Formula (1-II), and it is most preferable that all of the gases L constituting the mixed gas M satisfy Formula (1-II).

In the present specification, permeance (also referred to as "permeability") is obtained by dividing an amount of a substance permeating a separation membrane by a membrane area ($m^2$), time (seconds), and a partial pressure difference (Pa) between a supply side and a permeation side of the permeating substance, and the unit is [mol/($m^2 \cdot s \cdot Pa$)].

Separation Target Gas

The separation target gas in the present invention is a mixed gas containing hydrogen, and is not particularly limited as long as hydrogen can be suitably separated and recovered by the separation membrane, the separation membrane laminated body, the separation module or separation tower, the hydrogen recovery system, and the method for separating and recovering hydrogen of the present invention. In the present invention, when hydrogen is separated and recovered from the mixed gas M containing at least hydrogen having a relatively small dynamic molecular diameter and the gas L having a relatively large dynamic molecular diameter, any type of gas having a dynamic molecular diameter relatively larger than that of hydrogen can be selected as the gas L.

Specific examples of the gas L include carbon dioxide, argon, oxygen, nitrogen, and methane, and a gas selected from at least one of these is preferably contained. Furthermore, the gas L is more preferably composed of a gas selected from carbon dioxide, argon, oxygen, nitrogen, and methane, even more preferably composed of a gas selected from oxygen and nitrogen, and most preferably oxygen. The mixed gas may be a wet gas, but is more preferably a dry gas.

The separation membrane of the present invention is, for example, surface-modified in order to separate a gas having a dynamic molecular diameter equal to or smaller than a pore diameter of the separation membrane with high selectivity, and is based on the finding that a specific tendency may be exhibited in the temperature dependency of the permeation performance (permeance) of each gas.

For comparison, the following two examples are given as general examples.

A first general example is a zeolite membrane having a CHA-type framework structure, which is widely known. The pore diameter of the zeolite membrane is 0.38 nm, but the activation energy of a permeance of hydrogen gas having a dynamic molecular diameter of 0.289 nm has a negative value, and the permeation performance is lowered when the temperature is raised.

Meanwhile, the activation energy of a permeance of nitrogen gas having a relatively large dynamic molecular diameter of 0.364 nm also has a negative value, but the value is smaller (an absolute value is larger), and the permeation performance is more significantly lowered when the temperature is raised. That is, a relationship is established in which the temperature dependency of a molecule having a large dynamic molecular diameter is large (the absolute value of the activation energy is large).

From the viewpoint of process performance, when the temperature is raised to perform gas separation to realize high selectivity for separating and recovering hydrogen gas in a hydrogen-nitrogen mixed gas, the permeation performance of the hydrogen gas is sacrificed, and a sufficient recovery rate cannot be expected. Alternatively, when gas separation is performed at a reduced temperature to realize high permeation performance for separating and recovering hydrogen gas, selectivity is sacrificed, and the hydrogen purity of the permeate gas is not increased.

As a second general example, a case of a silica membrane formed by a widely known CVD method is exemplified. The pore diameter of the silica membrane depends on the production method, and the silica membrane usually has a distribution of pore diameters due to its amorphous structure. However, the pore diameter of silica is small enough to sufficiently exhibit a molecular sieve function, and the pore diameter is subnanometer.

Here, the activation energy of the permeance of the hydrogen gas having a dynamic molecular diameter of 0.289 nm has a positive value, and the permeation performance is improved when the temperature is raised. Meanwhile, the activation energy of the permeance of the nitrogen gas having a relatively large dynamic molecular diameter of 0.364 nm also has a positive value, but the value is larger (the absolute value is also larger), and the permeation performance is more significantly improved when the temperature is raised.

That is, also in this case, the relationship is established in which the temperature dependency of a molecule having a large dynamic molecular diameter is large (the absolute value of the activation energy is large).

From the viewpoint of process performance, when the temperature is reduced to perform gas separation to realize high selectivity for separating and recovering hydrogen gas in a hydrogen-nitrogen mixed gas, the permeation performance of the hydrogen gas is sacrificed, and a sufficient recovery rate cannot be expected. Alternatively, when gas separation is performed at a raised temperature to realize high permeation performance for separating and recovering hydrogen gas, selectivity is sacrificed, and the hydrogen purity of the permeate gas is not increased.

As seen in these two general cases, in a gas having a dynamic molecular diameter equal to or smaller than the pore diameter of the separation membrane, the absolute value of the activation energy of the permeance of a gas composed of molecules having a large dynamic molecular diameter is larger than the absolute value of the activation energy of the permeance of hydrogen. Consequently, from the viewpoint of process performance, when the separation and recovery temperature is adjusted to realize high selectivity for separating and recovering hydrogen, the permeation performance of hydrogen is sacrificed, and a sufficient recovery rate usually cannot be expected. Alternatively, when the separation and recovery temperature is adjusted to realize high permeation performance for separating and recovering hydrogen, the selectivity is sacrificed, and the purity of the hydrogen gas on the permeation side is not increased.

That is, in the case of separating and recovering hydrogen from the mixed gas M containing hydrogen having a relatively small dynamic molecular diameter and the gas L having a relatively large dynamic molecular diameter, even when the separation and recovery temperature is adjusted, it is difficult to improve the performance of the entire hydrogen separation and recovery process using the separation membrane, due to the relationship between the activation energies of the permeances of hydrogen and the gas L of a normal separation membrane, particularly an inorganic membrane, and the dynamic molecular diameters.

However, by using the separation membrane of the present invention obtained by, for example, a treatment described below in detail, the gas having a dynamic molecular diameter equal to or smaller than the pore diameter of the separation membrane can be separated with high selectivity. This is because a tendency not generally seen in the temperature dependency of the permeance of each gas is exhibited. When a gas separation and recovery process is performed using this separation membrane, it is possible to improve the performance of the entire hydrogen separation and recovery process, i.e., to achieve both high selectivity and high permeation performance, and this shows a result that cannot be achieved by typical findings.

Specifically, as described above, the separation membrane of the present invention is a separation membrane in which, for hydrogen having a relatively small dynamic molecular diameter and a gas L having a relatively large dynamic molecular diameter, the activation energy $Ep(S)$ (kJ/mol) of the permeance $P(S)$ (mol/(m$^2$·s·Pa)) of hydrogen through the separation membrane and the activation energy $Ep(L)$ (kJ/mol) of the permeance $P(L)$ (mol/(m$^2$·s·Pa)) of the gas L (provided that hydrogen is excluded) through the separation membrane derived within the same temperature range satisfy the relationship of $|Ep(L)| < |Ep(S)|$.

That is, the separation membrane is a "separation membrane having a feature opposite to that of a general separation membrane", in which the absolute value of the activation energy of the permeance of hydrogen having a small dynamic molecular diameter is larger than the absolute value of the activation energy of the permeance of the gas L having a relatively large dynamic molecular diameter. The large absolute value of the activation energy means a large temperature dependency, and also means that the gas permeance (i.e., the permeation characteristics) of the target gas changes greatly regardless of whether the temperature is raised or reduced.

Two typical cases will be described as examples below.

The first case is a case where diffusion is considered to be dominant as a main factor determining the gas permeance (gas permeation performance) of each separation target gas. In a usual case, when the temperature is raised, the gas permeance of each of molecules having a small dynamic molecular diameter and molecules having a large dynamic molecular diameter is improved. However, the molecules having a large dynamic molecular diameter tend to have a relatively large temperature dependency, and the molecules having a small dynamic molecular diameter such as hydrogen tend to have a relatively small temperature dependency. Therefore, when the temperature is raised and molecules having a small dynamic molecular diameter are recovered by allowing the molecules to permeate the membrane, the gas permeation performance is improved, but the gas separation performance is lowered. When the gas permeances are improved by raising the temperature, the activation energies of the gas permeances have a positive value. Thus, the relation of $0 < Ep(S) < Ep(L)$ is provided.

The second case is a case where adsorption is considered to be dominant as a main factor determining the gas permeance (gas permeation performance) of each separation target gas. In a usual case, when the temperature is lowered, the gas permeance of each of molecules having a small dynamic molecular diameter and molecules having a large dynamic molecular diameter is improved. However, the molecules having a large dynamic molecular diameter tend to have a relatively large temperature dependency, and the molecules having a small dynamic molecular diameter such as hydrogen tend to have a relatively small temperature dependency. Therefore, when the temperature is lowered and molecules having a small dynamic molecular diameter are recovered by allowing the molecules to permeate the membrane, the gas permeation performance is improved, but the gas separation performance is lowered. When the gas permeances are improved by lowering the temperature, the activation energies of the gas permeances have a negative value. Therefore, the relation of $Ep(L) < Ep(S) < 0$ is provided.

Integrating the relationships for the first case and the second case can give the relationship $|Ep(S)| < |Ep(L)|$. In addition, depending on the combination of gases to be separated, one of the gases may be "adsorption dominant" and the other may be "diffusion dominant", and also in this case, $|Ep(S)| < |Ep(L)|$ is usually satisfied.

In contrast, in the present invention, by using a separation membrane having a feature opposite to that of a general separation membrane, i.e., a separation membrane having a large absolute value of activation energy exhibiting temperature dependency of permeance of a gas having a relatively small dynamic molecular diameter such as hydrogen and a small absolute value of activation energy exhibiting temperature dependency of permeance of a gas having a relatively large dynamic molecular diameter, the separation performance can be enhanced while improving the permeation performance of the gas having a relatively small dynamic molecular diameter such as hydrogen by changing the temperature. It is optional whether both the improvement of the permeation performance and the improvement of the separation performance can be achieved by increasing the temperature or both the improvement of the permeation performance and the improvement of the separation performance can be achieved by lowering the temperature, but in either case, the relationship $|Ep(L)| < |Ep(S)|$ can be given.

In the separation membrane of the present invention, the permeance of the hydrogen gas having a small dynamic molecular diameter is preferably always larger than the permeance of the gas L having a relatively large dynamic molecular diameter. The separation membrane of the present invention has such properties, and thus can efficiently and safely separate hydrogen from the mixed gas M.

That is, Formula (1-III) described below is preferably satisfied.

$$P(L) < P(S) \quad (1\text{-}III)$$

Furthermore, in the separation membrane of the present invention, hydrogen having a relatively small dynamic molecular diameter and the gas L having a relatively large dynamic molecular diameter preferably satisfy Formula (1-IV) described below.

$$0 < Ep(L) < Ep(S) \quad (1\text{-}IV)$$

When the separation membrane has such characteristics, selectivity $\alpha$ (S/L) = P(S)/P(L) of the hydrogen gas to the gas L can be improved at the same time while improving the permeance P(S) of the hydrogen gas by "warming separation" in which the mixed gas to be separated, the separation membrane, the separation module or separation tower, the hydrogen recovery system, and the like are warmed to an appropriate temperature, which is very preferable.

Activation Energy

The activation energy can be derived as follows.

In a range of from 5°C to 200°C (Tam (°C) in Formula (1-I)), a temperature range for deriving the activation energy of the permeance is set as appropriate; at a plurality of temperatures in the temperature range, the permeance of each constituent gas in the mixed gas M to be separated is actually measured; least square approximation is performed using the Arrhenius equation; and the activation energy can thus be derived.

Reasonably, the temperature range for deriving the activation energy includes a temperature range in which the separation membrane of the present invention is actually used. In particular, since the separation membrane of the present invention can be suitably used for the application of separating and recovering hydrogen gas from a hydrogen-oxygen mixed gas (hydrogen detonating gas) having a ratio of hydrogen:oxygen = 2:1, safety is improved by setting the temperature to 200°C or lower, and high hydrogen permeance can be achieved by setting the temperature to 5°C or higher. Therefore, the lower limit of the temperature range for deriving the activation energy is 5°C or higher, and preferably 10°C or higher, whereas the upper limit of the temperature range for deriving the activation energy is 200°C or lower, and preferably 150°C or lower. That is, the range represented by Formula (1-V) described below is preferable.

$$10 \ (°C) \leq Tam \ (°C) \leq 150 \ (°C) \quad (1\text{-}V)$$

The lower limit value is more preferably 15°C or higher, even more preferably 20°C or higher, and particularly preferably 25°C or higher. Also, the upper limit is more preferably 140°C or lower, even more preferably 130°C or lower, and particularly preferably 120°C or lower.

As for the form of supplying the gas when the activation energy is derived, the gas may be supplied as a single gas or may be supplied in the form of a mixed gas for the purpose of separation and recovery. The former is preferable from the viewpoint of being able to eliminate the influence of interaction between different types of molecules when passing through the pores in the separation membrane, and the latter is preferable from the viewpoint of being able to derive the activation energy also including interaction between different types of molecules occurring in the actual separation and recovery process, and the like, and constituting the separation and recovery process using the separation membrane. In any of the gas supply forms, the activation energy of the permeance of each gas is preferably derived by supplying the gas in the form of a dry gas. This is because a dehumidification process is provided to avoid the influence of water vapor adsorption to the separation membrane in the actual separation and recovery process.

Regarding the supply pressure of the gas when the activation energy is derived, the separation membrane of the present invention can be suitably used for the application of separating and recovering hydrogen gas from a hydrogen-oxygen mixed gas (hydrogen detonating gas) having a ratio of hydrogen:oxygen = 2:1, and thus, in consideration of the possibility of suppressing flame propagation in an unlikely event of ignition, separation is preferably performed at a pressure as low as possible, and the upper limit of the supply pressure (gauge pressure, hereinafter referred to as (G)) is preferably 0.20 MPa (G) or less, more preferably 0.10 MPa (G) or less, even more preferably 0.05 MPa (G) or less, and particularly preferably 0.02 MPa (G) or less.

Meanwhile, the lower limit of the gas supply pressure when the activation energy is derived is preferably ordinary pressure, i.e., 0.0 MPa (G) or more, more preferably 0.005 MPa (G) or more, even more preferably 0.010 MPa (G) or more, and particularly preferably 0.015 MPa (G) or more, since pressurization needs to be performed in consideration of a pipe pressure loss.

The permeation-side pressure when the activation energy is derived is preferably a reduced pressure. The separation membrane of the present invention can be suitably used for the application of separating and recovering hydrogen gas from a hydrogen-oxygen mixed gas (hydrogen detonating gas) having a ratio of hydrogen:oxygen = 2:1, and thus, as described above, the supply pressure is preferably as low as possible from the viewpoint of safety, and the permeation-side pressure is preferably a reduced pressure to secure a differential pressure between the supply side and the permeation side for separation.

In the separation membrane of the present invention, the temperature range in which the activation energy is derived, the supply form of the separation target gas, the supply pressure of the mixed gas M to be supplied, and the permeation-side pressure described above are preferably set such that the permeance of the hydrogen gas having a small dynamic molecular diameter is always larger than the permeance of the gas L having a relatively large dynamic molecular diameter.

The separation membrane of the present invention is preferably an inorganic membrane, more preferably of zeolite, and particularly preferably includes a surface-modified zeolite membrane. These membranes are nonflammable and therefore highly safe, and have high separation performance. Details will be described below.

Separation Membrane Laminated Body

The separation membrane laminated body of the present invention includes a separation membrane on a support. The separation membrane used here is not particularly limited as long as it is the above-described separation membrane of the present invention, i.e., a separation membrane having the above-described physical properties. Here, the support is preferably tubular, and an inner diameter $\varphi i$ (mm) thereof preferably satisfies Formula (1-VI) described below.

$$6 \, (\text{mm}) \leq \varphi i \, (\text{mm}) \leq 16 \, (\text{mm}) \qquad (1\text{-VI})$$

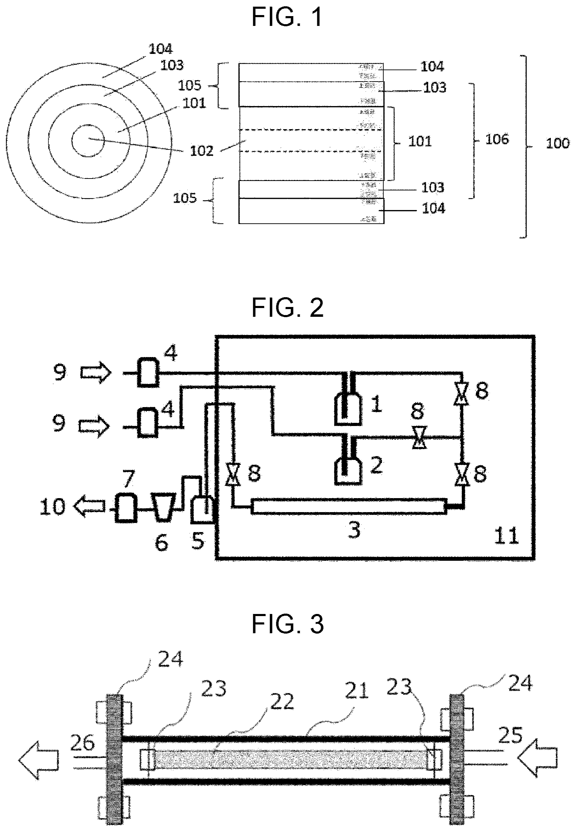

As a specific structure, for example, as shown in FIG. 1, a separation membrane laminated body 100 including a support 101, a first separation section 103 disposed in contact with the support, and a second separation section 104 having an amorphous structure disposed in contact with the first separation section without being in contact with the support is preferable.

The inner diameter may be an average equivalent circular diameter, but when there is no variation of 1 mm or more, a value (diameter) at an end may be used without determining the average.

The separation membrane laminated body of the present invention can be used in a separation module or separation tower as described below.

Hereinafter, the separation membrane laminated body will be described in detail.

Support

The support is not particularly limited as long as the first separation section can be formed on an upper end portion thereof, but is preferably chemically stable in forming the first separation section. Further, the support preferably has mechanical strength in the separation step. From this viewpoint, a ceramic, a ceramic sintered body, a metal, a metal sintered body, any insulator, and the like can be exemplified, and an inorganic porous material is preferable.

In particular, when the first separation section is zeolite having various structures, the support is preferably an inorganic porous material. The support may be composed of a plurality of inorganic porous materials having different pore diameters. When the first separation section is zeolite, for example, a ceramic sintered body such as silica, $\alpha$-alumina, $\gamma$-alumina, mullite, zirconia, titania, yttria, silicon nitride, or silicon carbide is preferable. Among them, an inorganic porous support containing at least one of alumina, silica, or mullite is preferable. When such an inorganic porous support is used, partial zeolitization easily occurs, and therefore, the bond between the support and the zeolite becomes strong, and a dense membrane having high separation performance is easily formed.

The shape of the inorganic porous support is not particularly limited as long as the separation target mixed gas M can be effectively separated, and specific examples thereof include a flat plate shape, a tubular shape, and a cylindrical shape. In the present invention, it is preferable to form zeolite in a membrane form on the inorganic porous support, i.e., at the upper end portion of the support. The upper end portion of the inorganic porous support is defined as a surface on which the first separation section is formed, and means a surface portion of the inorganic porous support on which the zeolite is crystallized. The surface may be any surface of each shape, and may be a plurality of surfaces. For example, in the case of a cylindrical tubular support, the surface may be an outer surface or an inner surface, or may be both the outer surface and the inner surface in some cases. In this case, both surfaces are the upper end portions.

The average pore diameter at the upper end portion of the inorganic porous support is not particularly limited, but the pore diameter is preferably controlled. The average pore diameter at the upper end portion of the inorganic porous support is usually 0.02 $\mu$m or more, preferably 0.05 $\mu$m or more, and more preferably 0.1 $\mu$m or more, and is usually 20 $\mu$m or less, preferably 10 $\mu$m or less, and more preferably 5 $\mu$m or less. When the average pore diameter is 0.02 $\mu$m or more, a sufficient permeation amount is achieved, whereas when the average pore diameter is 20 $\mu$m or less, the strength of the support itself becomes sufficient.

In addition, the proportion of the pores at the upper end portion of the inorganic porous support is appropriate, and a sufficiently dense zeolite membrane is formed. The average pore diameter of the support from a lower end portion to the upper end portion may also be changed depending on the purpose. In particular, it is also preferable to make the average pore diameter at the upper end portion of the support, where the first separation section is to be formed, smaller than those of the other portions of the support for the purpose of obtaining a dense zeolite membrane.

The average pore diameter can be determined by mercury intrusion porosimetry, gas adsorption, or the like.

The average thickness (wall thickness) of the inorganic porous support is usually 0.1 mm or more, preferably 0.3 mm or more, and more preferably 0.5 mm or more, and is usually 7 mm or less, preferably 5 mm or less, and more preferably 3 mm or less. The inorganic porous support is used for the purpose of imparting mechanical strength to a single-component separation structure including the support and the zeolite membrane (hereinafter may be referred to simply as "single-component separation structure"), but when the average thickness of the inorganic porous support is 0.1 mm or more, the single-component separation structure has sufficient strength, and becomes resistant to impact, vibration, and the like. When the average thickness of the inorganic porous support is 7 mm or less, the diffusion of the permeated substance is favorable, and sufficient permeability is achieved.

The porosity of the inorganic porous support is usually 20 vol% or more, preferably 25 vol% or more, and more preferably 30 vol% or more, and is usually 70 vol% or less, preferably 60 vol% or less, and more preferably 50 vol% or less. The porosity of the inorganic porous support affects the permeation flow rate at the time of gas separation. When the porosity is 20 vol% or more, sufficient diffusion of the permeated substance is easily achieved. Meanwhile, when the porosity is 70% or less, the inorganic porous support is likely to have sufficient strength.

The porosity can be easily determined by a measurement method such as mercury intrusion porosimetry, Archimedes' method, or scanning electron microscope (SEM) observation of a cross section. The porosity can also be calculated from volume and mass using true specific gravity.

The upper end portion of the inorganic porous support may be polished with a file or the like, if necessary. By polishing with a file or the like, for example, when there is a burr on the surface, the surface can be smoothed, and, conversely, by roughening the smooth surface, the efficiency of the subsequent treatment such as supporting of the crystal, growth of the crystal, and the like can be improved.

First Separation Section

The constituent of the first separation section is not particularly limited, and for example, an inorganic porous thin layer composed of ceramic, a silica membrane, or the like can be employed, but a zeolite polycrystalline thin film body is preferably employed for the first separation section. That is, it is preferable to form the first separation section by forming a polycrystalline thin film body of zeolite on the inorganic porous support by crystal growth.

The component constituting the first separation section may contain, in addition to zeolite, an inorganic binder such as silica or alumina, and an organic compound such as a polymer, as necessary, but the first separation section is preferably composed substantially only of zeolite.

The thickness of the first separation section made of zeolite is not particularly limited, but is usually 0.1 $\mu$m or more, preferably 0.6 $\mu$m or more, and more preferably 1.0 $\mu$m or more, and is usually 100 $\mu$m or less, preferably 60 $\mu$m or less, and more preferably 20 $\mu$m or less. When the thickness is 100 $\mu$m or less, a sufficient permeation amount is achieved, whereas when the thickness is 0.1 $\mu$m or more, the selectivity of the gas to be permeated becomes favorable, and a sufficient membrane strength is achieved.

The particle diameter of the zeolite is not particularly limited, but is usually preferably 30 nm or more, more preferably 50 nm or more, and even more preferably 100 nm or more, and the upper limit is equal to or smaller than the thickness of the membrane. When the particle diameter of the zeolite is 30 nm or more, the grain boundary does not become large, and sufficient permeation selectivity is achieved. Therefore, the case where the particle diameter of the zeolite is the same as the thickness of the membrane is particularly preferable. When the particle diameter of the zeolite is the same as the thickness of the membrane, the grain boundary of the zeolite is smallest. A zeolite membrane obtained by hydrothermal synthesis described below is particularly preferable because the particle diameter of the zeolite and the thickness of the membrane are likely to be the same.

The average particle diameter can be determined, for example, by observation with an electron microscope or the like, or by diffraction of a laser at the time of irradiation with the laser or the like.

For example, specifically, since the grain boundaries of the zeolite crystals can be easily visually recognized by observation with an electron microscope, an average equivalent circular particle diameter may be determined by image processing excluding extremely large and small ones.

The shape of the zeolite single-component separation structure (portions corresponding to 101 and 103 in FIG. 1) in which the zeolite membrane is formed on the support is not particularly limited, and any shape such as a tubular (cylindrical) shape, a hollow fiber shape, a monolithic shape, or a honeycomb shape can be employed. Among these, the tubular (cylindrical) shape is preferable from the viewpoint of ease of separation and recovery.

The size of the zeolite single-component separation structure is not particularly limited, and for example, in the case of the tubular (cylindrical) shape, the length is usually 2 cm or more and 200 cm or less, the inner diameter is 0.05 cm or more and 2 cm or less, and the thickness is 0.5 mm or more and 4 mm or less, which is practically preferable.

As described above, the membrane length is usually 2 cm or more and 200 cm or less. However, an extremely short membrane may cause difficulty in handling, and also cause inconvenience such as an extremely small processable amount during actual gas separation. Further, even in the case of an extremely long membrane, there is an inconvenience that an extremely large apparatus is required at the time of production. Therefore, the lower limit of the membrane length is preferably 5 cm or more, more preferably 8 cm or more, even more preferably 17.5 cm or more, and most preferably 35 cm or more. The upper limit of the membrane length is preferably 170 cm or less, more preferably 150 cm or less, even more preferably 130 cm or less, and most preferably 110 cm or less.

In particular, a separation membrane having a membrane length of from about 38 cm to about 102 cm at the time of production is further most preferable from various viewpoints such as a viewpoint of the size of production apparatus, a viewpoint of production cost, and a viewpoint of handling.

One of the separation functions of the zeolite single-component separation structure is separation as a molecular sieve, and gas molecules having a size equal to or larger than an effective pore diameter of the zeolite used and gas molecules having a size equal to or smaller than the effective pore diameter can be suitably separated. There is no upper limit for the molecules to be separated, but the size of the molecules is usually about 100 Å or less.

The type of the main zeolite constituting the zeolite single-component separation structure is not particularly limited. All of the zeolite structure types defined by the International Zeolite Association are included. More preferably, the zeolite has a pore structure of a 12-membered oxygen ring or smaller, even more preferably a pore structure of an 8-membered oxygen ring or smaller. The zeolite may have a pore structure of a 6-membered oxygen ring. The smaller the number of oxygen atoms in the ring in the pore, the higher the effect of narrowing the pore due to a modification reaction, and the more likely the molecular sieve effect is to occur.

In the present invention, it is particularly preferable to use a zeolite having a 6-membered oxygen ring or 8-membered oxygen ring structure.

The value n of the zeolite having an n-membered oxygen ring as used herein refers to the largest number of oxygen atoms in pores composed of oxygen atoms forming the zeolite framework and T elements (elements other than oxygen atoms constituting the framework). For example, when pores of a 12-membered oxygen ring and an 8-membered oxygen ring are present as in the case of MOR type zeolite, the zeolite is regarded as 12-membered oxygen ring zeolite.

Examples of the zeolite having a pore structure of an 8-membered oxygen ring or smaller include AEI, AFG, AFX, ANA, BRE, CAS, CDO, CHA, DDR, DOH, EAB, EPI, ERI, ESV, FAR, FRA, GIS, GIU, GOO, ITE, KFI, LEV, LIO, LOS, LTN, MAR, MEP, MER, MEL, MON, MSO, MTF, MTN, MWF, NON, PAU, PHI, RHO, RTE, RTH, RUT, SGT, SOD, TOL, TSC, UFI, VNI, and YUG.

Examples of the zeolite having a 6- to 8-membered oxygen ring structure include AEI, AFG, AFX, ANA, CHA, EAB, ERI, ESV, FAR, FRA, GIS, ITE, KFI, LEV, LIO, LOS, LTN, MAR, MWF, PAU, RHO, RTH, SOD, TOL, and UFI.

In the present specification, the structure of zeolite is indicated by a code that defines the structure of zeolite defined by the International Zeolite Association (IZA) as described above.

The n-membered oxygen ring structure determines the size of the pore of zeolite. In the case of a zeolite of an oxygen ring smaller than the 6-membered oxygen ring, the pore diameter is smaller than the kinetic diameter of the $H_2O$ molecule, and therefore the permeability is low, which may be impractical. In a case where the oxygen ring structure is larger than the 8-membered oxygen ring structure, the pore diameter is large, and the separation performance for a gas component having a small size may be deteriorated, and the application may be limited.

The framework density (T/1000 Å) of the zeolite is not particularly limited, but is usually 17 or less, preferably 16 or less, more preferably 15.5 or less, and particularly preferably 15 or less, and is usually 10 or more, preferably 11 or more, and more preferably 12 or more.

The framework density means the number of elements (T elements) other than oxygen constituting the framework per 1000 Å of zeolite, and this value is determined by the structure of the zeolite. The relationship between the framework density and the structure of the zeolite is shown in ATLAS OF ZEOLITE FRAMEWORK TYPES Fifth Revised Edition 2001 ELSEVIER.

In the present invention, the structure of the zeolite is preferably AEI, AFG, AFX, CHA, EAB, ERI, ESV, FAR, FRA, GIS, ITE, KFI, LEV, LIO, LOS, LTN, MAR, MWF, PAU, RHO, RTH, SOD, TOL, or UFI, more preferably AEI, CHA, ERI, KFI, LEV, PAU, RHO, RTH, or UFI, even more preferably CHA or LEV, and most preferably CHA.

In the present invention, the CHA-type zeolite refers to a zeolite having a CHA structure as indicated by the code that defines the structure of zeolite defined by the International Zeolite Association (IZA). This is a zeolite having a crystal structure equivalent to that of naturally occurring chabazite. The CHA-type zeolite has a structure characterized by having three dimensional pores including an 8-membered oxygen ring having a diameter of $3.8 \times 3.8$ Å, and the structure is characterized by X-ray diffraction data.

The framework density (T/1000 Å) of the CHA-type zeolite is 14.5.

In the present invention, in a case where the zeolite single-component separation structure contains a CHA-type zeolite, the intensity of a peak near $2\theta = 17.9°$ is preferably 0.5 or more of the intensity of a peak near $2\theta = 20.8°$, in an X-ray diffraction pattern, in the zeolite single-component separation structure.

Here, the intensity of peak refers to a value obtained by subtracting a background value from a measured value. The peak intensity ratio represented by (intensity of peak near $2\theta = 17.9°$)/(intensity of peak near $2\theta = 20.8°$) (hereinafter may be referred to as "peak intensity ratio A") is usually 0.5 or more, preferably 1 or more, more preferably 1.2 or more, and particularly preferably 1.5 or more. The upper limit is not particularly limited, but is usually 1000 or less.

Also, in a case where the zeolite single-component separation structure contains a CHA-type zeolite, the intensity of a peak near $2\theta = 9.6°$ is preferably equal to or more than twice the intensity of the peak near $2\theta = 20.8°$, in the X-ray diffraction pattern.

The peak intensity ratio represented by (intensity of peak near $2\theta = 9.6°$)/(intensity of peak near $2\theta = 20.8°$) (hereinafter may be referred to as "peak intensity ratio B") is usually 2 or more, preferably 2.5 or more, more preferably 3 or more, more preferably 4 or more, even more preferably 6 or more, particularly preferably 8 or more, and most preferably 10 or more. The upper limit is not particularly limited, but is usually 1000 or less.

The X-ray diffraction pattern as used herein is obtained by irradiating the surface on a side where zeolite is mainly attached with X-rays using CuK$\alpha$ as a radiation source and setting a scanning axis to $\theta/2\theta$. The shape of a sample to be measured is not particularly limited as long as the surface of the single-component separation structure on the side where zeolite is mainly attached can be irradiated with X-rays. The shape that well represents the features of the single-component separation structure is preferably, for example, a shape of the single-component separation structure as produced, or a shape obtained by cutting the structure into an appropriate size restricted by an apparatus.

In a case where the upper end portion of the zeolite single-component separation structure is a curved surface, the X-ray diffraction pattern may be measured by fixing an irradiation width using an automatic variable slit. The X-ray diffraction pattern when the automatic variable slit is used refers to a pattern obtained by performing a variable-to-fixed slit correction.

Here, the peak near $2\theta = 17.9°$ refers to the largest peak among peaks present in a range of $17.9° \pm 0.6°$ among peaks not derived from the substrate.

The peak near $2\theta = 20.8°$ refers to the largest peak among peaks present in a range of $20.8° \pm 0.6°$ among peaks not derived from the substrate.

The peak near $2\theta = 9.6°$ refers to the largest peak among peaks present in a range of $9.6° \pm 0.6°$ among peaks not derived from the substrate.

According to COLLECTION OF SIMULATED XRD POWDER PATTERNS FOR ZEOLITE Third Revised Edition 1996 ELSEVIER, the peak near $2\theta = 9.6°$ in the X-ray diffraction pattern is a peak derived from a plane with indices (1,0,0) in the CHA structure when the space group is

[Math. 1]

$$R\bar{3}m$$

(No. 166) in the rhombohedral setting.

In addition, the peak near $2\theta = 17.9°$ in the X-ray diffraction pattern is a peak derived from a plane with indices (1,1,1) in the CHA structure when the space group is

[Math. 2]

$$\overline{R\,3\,m}$$

(No. 166) in the rhombohedral setting.

The peak near $2\theta = 20.8°$ in the X-ray diffraction pattern is a peak derived from a plane with indices (2,0,-1) in the CHA structure when the space group is

[Math. 3]

$$\overline{R\,3\,m}$$

(No. 166) in the rhombohedral setting.

The typical ratio (peak intensity ratio B) of the peak intensity derived from the (1,0,0) plane to the peak intensity derived from the (2,0,-1) plane in the zeolite single-component separation structure of a CHA-type aluminosilicate is less than 2, according to Halil Kalipcilar et al., "Synthesis and Separation Performance of SSZ-13 Zeolite Membranes on Tubular Supports", Chem. Mater. 2002, 14, 3458-3464.

Therefore, it is considered that the peak intensity ratio B being 2 or more means that, for example, zeolite crystals are oriented and grown so that the (1,0,0) plane, in a case where the CHA structure is in the rhombohedral setting, is in an orientation nearly parallel to the upper end portion of the single-component separation structure. The oriented growth of zeolite crystals in the zeolite single-component separation structure is advantageous in that a dense membrane having high separation performance can be formed.

The typical ratio (peak intensity ratio A) of the intensity of the peak derived from the (1,1,1) plane to the intensity of the peak derived from the (2,0,-1) plane in the zeolite single-component separation structure of the CHA-type aluminosilicate is less than 0.5.

Hence, it is considered that the peak intensity ratio A being 0.5 or more means that, for example, zeolite crystals are oriented and grown so that the (1,1,1) plane, in a case where the CHA structure is in the rhombohedral setting, is in an orientation nearly parallel to the upper end portion of the single-component separation structure. The oriented growth of zeolite crystals in the zeolite single-component separation structure is advantageous in that a dense membrane having high separation performance can be formed.

Thus, the fact that either of the peak intensity ratios A and B is a value within the above-described specific range indicates that zeolite crystals are oriented and grown, and that a dense membrane having high separation performance is formed.

The larger the peak intensity ratios A and B, the higher the degree of orientation, and in general, the higher the degree of orientation, the denser the membrane formed. In general, the stronger the orientation, the higher the separation performance tends to be. However, the optimal degree of orientation for achieving high separation performance varies depending on the mixture to be separated (separation target gas), and therefore it is desirable to appropriately select and use a zeolite single-component separation structure having an optimal degree of orientation depending on the mixture to be separated.

Method for Producing Single-Component Separation Structure

The method for producing the single-component separation structure is not particularly limited as long as the method is a method capable of forming the first separation section in the support. Hereinafter, the method for producing the single-component separation structure will be described in detail.

In the present invention, the method for producing the zeolite single-component separation structure is not particularly limited, but a method of forming zeolite on an inorganic porous support by hydrothermal synthesis is preferable, for example.

Specifically, for example, the zeolite single-component separation structure can be prepared by charging a reaction mixture for hydrothermal synthesis (hereinafter, the mixture may be referred to as "aqueous reaction mixture"), which is homogenized by adjusting the composition, into a heat-resistant and pressure-resistant container such as an autoclave, in which an inorganic porous support is loosely fixed, sealing the container, and heating the container for a certain period of time.

The aqueous reaction mixture contains an Si element source, an Al element source, an alkali source, and water, and may further contain an organic template as necessary.

Examples of the Si element source that can be used in the aqueous reaction mixture include amorphous silica, colloidal silica, silica gel, sodium silicate, amorphous aluminosilicate gel, tetraethoxysilane (TEOS), and trimethylethoxysilane.

Examples of the Al element source that can be used include sodium aluminate, aluminum hydroxide, aluminum sulfate, aluminum nitrate, aluminum oxide, and amorphous aluminosilicate gel. In addition to the Al element source, other element sources such as Ga, Fe, B, Ti, Zr, Sn, and Zn may be contained.

In crystallization of zeolite, an organic template (structure directing agent) can be used as necessary, and zeolite synthesized using the organic template is preferable. When zeolite is synthesized using the organic template, the proportion of silicon atoms to aluminum atoms in the crystallized zeolite is increased, and acid resistance and water vapor resistance are improved.

The organic template may be of any type as long as it can form a desired zeolite single-component separation structure, and any organic template may be used. One of the templates may be used alone or two or more thereof may be used in combination.

When the zeolite is of the CHA type, an amine or a quaternary ammonium salt is usually used as the organic template. For example, the organic templates described in US 4544538 B and US 2008/0075656 A are preferable.

Specific examples of the organic template include cations derived from alicyclic amines, such as a cation derived from 1-adamantanamine, a cation derived from 3-quinacridal, and a cation derived from 3-exo-aminonorbornene. Among these, the cation derived from 1-adamantanamine is more preferable. When the cation derived from 1-adamantanamine is used as the organic template, a CHA-type zeolite capable of forming a dense membrane is crystallized. By forming a dense membrane, a CHA-type zeolite having high separation performance is obtained.

Among the cations derived from 1-adamantanamine, an N,N,N-trialkyl-1-adamantanammonium cation is even more preferable. The three alkyl groups of the N,N,N-trialkyl-1-adamantanammonium cation are usually independent alkyl groups, preferably lower alkyl groups, and more preferably methyl groups. The most preferable compound among them is an N,N,N-trimethyl-1-adamantanammonium cation.

Such a cation is accompanied by anions which are not detrimental to the formation of the CHA-type zeolite. Typical examples of such anions include halogen ions such as $Cl^-$, $Br^-$, and $I^-$, a hydroxide ion, and carboxylic acid radicals such as sulfate radical and acetate radical. Among these, a hydroxide ion is particularly preferably used.

As other organic templates, an N,N,N-trialkylbenzylammonium cation can also be used. In this case, the alkyl groups are each independently an alkyl group, preferably a lower alkyl group, and more preferably a methyl group. Among them, the most preferable compound is an N,N,N-trimethylbenzylammonium cation. The anion accompanying this cation is the same as described above.

Examples of the alkali source used in the aqueous reaction mixture include a hydroxide ion as a counter anion of the organic template, alkali metal hydroxides such as NaOH and KOH, and alkaline earth metal hydroxides such as $Ca(OH)_2$. The type of alkali is not particularly limited, and Na, K, Li, Rb, Cs, Ca, Mg, Sr, Ba, or the like is usually used. Among them, Li, Na, and K are preferable, and K is more preferable. Two or more types of the alkalis may be used in combination, and specifically, it is preferable to use Na and K in combination, or Li and K in combination.

The ratio of the Si element source to the Al element source in the aqueous reaction mixture is usually expressed as a molar ratio between the oxides of the respective elements, i.e., an SiO2/Al2O3 molar ratio. The SiO2/Al2O3 molar ratio is not particularly limited, but is usually 5 or more, preferably 8 or more, more preferably 10 or more, and even more preferably 15 or more. The molar ratio is usually 10000 or less, preferably 1000 or less, more preferably 300 or less, and even more preferably 100 or less.

When the $SiO_2/Al_2O_3$ molar ratio is within this range, a zeolite single-component separation structure is densely generated, and a membrane having high separation performance is obtained. Further, since Al atoms are present in the generated zeolite in an appropriate amount, the separation ability is improved for a gas component exhibiting adsorptivity to Al. In addition, when Al is in this range, a zeolite single-component separation structure having high acid resistance and water vapor resistance is obtained.

The ratio of the silica source to the organic template in the aqueous reaction mixture, in terms of the molar ratio of the organic template to $SiO_2$ (organic template/$SiO_2$ (molar ratio)), is usually 0.005 or more, preferably 0.01 or more, and more preferably 0.02 or more, and usually 1 or less, preferably 0.4 or less, and more preferably 0.2 or less.

When the organic template/$SiO_2$ (molar ratio) is within the above range, a dense zeolite single-component separation structure can be generated, and, additionally, the generated zeolite has high acid resistance and water vapor resistance.

The ratio of the Si element source to the alkali source, in terms of the $M_{(2/n)}O/SiO_2$ (wherein M represents an alkali metal or an alkaline earth metal, and n represents its valence of 1 (alkali metal) or 2 (alkaline earth metal)) molar ratio, is usually 0.02 or more, preferably 0.04 or more, and more preferably 0.05 or more, and usually 0.5 or less, preferably 0.4 or less, and more preferably 0.3 or less.

In the case of forming a CHA-type zeolite single-component separation structure, K is preferably contained among alkali metals, from the viewpoint of forming a denser membrane having higher crystallinity. In this case, the molar ratio of K to all the alkali metals and/or alkaline earth metals including K is usually 0.01 or more and 1 or less, preferably 0.1 or more and 1 or less, and more preferably 0.3 or more and 1 or less.

The addition of K to an aqueous reaction mixture tends to increase the ratio (peak intensity ratio B) of the intensity of the peak near $2\theta = 9.6°$, which is the peak derived from the plane with indices (1,0,0), to the intensity of the peak near $2\theta = 20.8°$, which is the peak derived from the plane with indices (2,0,-1), or the ratio (peak intensity ratio A) of the intensity of the peak near $2\theta = 17.9°$, which is the peak derived from the plane with indices (1,1,1), to the intensity of the peak near $2\theta = 20.8°$, which is the peak derived from the plane with indices (2,0,-1), in the CHA structure when the space group is

[Equation 4]

$$R\bar{3}m$$

(No. 166) in the rhombohedral setting, as described above.

The ratio of the Si element source to water, in terms of the molar ratio of water to $SiO_2$ ($H_2O/SiO_2$ (molar ratio)), is usually 10 or more, preferably 30 or more, more preferably 40 or more, and particularly preferably 50 or more, and usually 1000 or less, preferably 500 or less, more preferably 200 or less, and particularly preferably 150 or less.

When the molar ratio between the substances in the aqueous reaction mixture is in these ranges, a dense zeolite single-component separation structure can be generated. The amount of water is particularly important for the generation of a dense zeolite single-component separation structure, and a dense membrane tends to be generated easily under conditions where the amount of water is larger than that of silica, as compared with under general conditions of the powder synthesis method.

In general, the amount of water in the synthesis of a powder CHA-type zeolite is about from 15 to 50 in terms of the $H_2O/SiO_2$ (molar ratio). By setting the condition that the $H_2O/SiO_2$ (molar ratio) is high (50 or more and 1000 or less), i.e., the amount of water is large, a zeolite single-component separation structure having high separation performance in which the CHA-type zeolite is crystallized in a dense membrane form on the inorganic porous support can be obtained.

Furthermore, in the hydrothermal synthesis, it is not always necessary to allow a seed crystal to be present in the reaction system, but crystallization of the zeolite on the inorganic porous support can be promoted by adding a seed crystal. The method of adding the seed crystal is not particularly limited, and a method of adding the seed crystal to the aqueous reaction mixture as in the synthesis of the powder zeolite, a method of attaching the seed crystal onto the inorganic porous support, or the like can be used.

In the case of producing a zeolite single-component separation structure, it is preferable to attach the seed crystal onto the inorganic porous support. By attaching the seed crystal onto the inorganic porous support in advance, a dense zeolite single-component separation structure having good separation performance is easily generated.

The seed crystal to be used is not limited to any particular type as long as it is a zeolite that promotes crystallization, but in order to achieve efficient crystallization, the seed crystal is preferably of the same crystal type as the zeolite single-component separation structure to be formed. In the case of forming a CHA-type zeolite single-component separation structure, it is preferable to use a seed crystal of the CHA-type zeolite.

The particle diameter of the seed crystal is usually 0.5 nm or more, preferably 1 nm or more, and more preferably 2 nm or more, and is usually 20 $\mu$m or less, preferably 15 $\mu$m or less, and more preferably 10 $\mu$m or less.

The method for attaching the seed crystal onto the inorganic porous support is not particularly limited, and for example, a dipping method in which the seed crystal is dispersed in a solvent such as water and the support is immersed in the dispersion liquid to attach the seed crystal, a method in which the seed crystal is mixed with a solvent such as water to form a slurry and the slurry is applied onto the inorganic porous support, or the like can be used. The dipping method is desirable for controlling the amount of seed crystals attached and producing a zeolite single-component separation structure with good reproducibility.

The solvent for dispersing the seed crystal is not particularly limited, but water is particularly preferable. The amount of the seed crystal to be dispersed is not particularly limited, and is usually 0.01 mass% or more, preferably 0.1 mass% or more, and more preferably 0.3 mass% or more, and is usually 20 mass% or less, preferably 10 mass% or less, more preferably 5 mass% or less, even more preferably 4 mass% or less, and particularly preferably 3 mass% or less relative to the total mass of the dispersion liquid.

When the amount of the seed crystal to be dispersed is equal to or larger than the lower limit value, the amount of the seed crystal to be attached onto the inorganic porous support is sufficient. Therefore, zeolite is generated on the entire support, during hydrothermal synthesis, without any portion where zeolite is not generated, and thus a membrane having no defects can be obtained. The amount of the seed crystal attached onto the inorganic porous support by the dipping method is substantially constant when the amount of the seed crystal in the dispersion liquid reaches a certain amount or more. Therefore, when the amount of the seed crystal in the dispersion liquid is equal to or smaller than the upper limit value, there is no waste of the seed crystal, which is advantageous in terms of cost.

It is desirable to form the zeolite single-component separation structure after the seed crystal is attached to the inorganic porous support by the dipping method or by application of a slurry, and dried.

The amount of the seed crystal to be attached in advance onto the inorganic porous support is not particularly limited, and is, in terms of mass per $m^2$ of the support, usually 0.01 g or more, preferably 0.05 g or more, and more preferably 0.1 g or more, and is usually 100 g or less, preferably 50 g or less, more preferably 10 g or less, and even more preferably 8 g or less.

When the amount of the seed crystal is equal to or larger than the lower limit value, the crystal is easily generated, the membrane is sufficiently grown, and the growth of the membrane is likely to be uniform. When the amount of the seed crystal is equal to or smaller than the upper limit value, unevenness of the surface is not increased by the seed crystal, the spontaneous nucleus is not easily grown by the seed crystal dropped from the support, and the membrane growth on the support is not inhibited. Therefore, a dense zeolite single-component separation structure is easily generated.

In the case of forming a zeolite single-component separation structure on an inorganic porous support by hydrothermal synthesis, the method for fixing the inorganic porous support is not particularly limited, and the inorganic porous support may take any form such as vertical placement or horizontal placement. In this case, the zeolite single-component separation structure may be formed by a static method, or the zeolite single-component separation structure may be formed by stirring the aqueous reaction mixture.

The temperature at which the zeolite single-component separation structure is formed is not particularly limited, but is usually 100°C or higher, preferably 120°C or higher, and more preferably 150°C or higher, and is usually 200°C or lower, preferably 190°C or lower, and more preferably 180°C or lower. When the reaction temperature is equal to or higher than the lower limit value, the zeolite is easily crystallized, whereas when the reaction temperature is equal to or lower than the upper limit value, a zeolite of a type different from the desired zeolite is not generated due to the reaction temperature being too high.

The heating time is not particularly limited, but is usually 1 hour or more, preferably 5 hours or more, and even more preferably 10 hours or more, and is usually 10 days or less, preferably 5 days or less, more preferably 3 days or less, and even more preferably 2 days or less. When the reaction time is equal to or longer than the lower limit value, the zeolite is sufficiently crystallized. Meanwhile, when the reaction time is equal to or shorter than the upper limit value, a zeolite of a type different from the desired zeolite is not generated.

The pressure at the time of forming the zeolite single-component separation structure is not particularly limited, and the autogenous pressure generated when the aqueous reaction mixture placed in a sealed container is heated to this temperature range is sufficient. Further, an inert gas such as nitrogen may be added as required.

The zeolite single-component separation structure obtained by hydrothermal synthesis is washed with water and then subjected to a heating treatment. Here, the heating treatment means drying the zeolite single-component separation structure by application of heat, or in a case where a template is used, firing and removing the template.

For the purpose of drying, the temperature of the heating treatment is usually 50°C or higher, preferably 80°C or higher, and more preferably 100°C or higher, and is usually 200°C or lower, and preferably 150°C or lower. For the purpose of firing and removing the template, the temperature is usually 350°C or higher, preferably 400°C or higher, more preferably 430°C or higher, and even more preferably 480°C or higher, and is usually 900°C or lower, preferably 850°C or lower, more preferably 800°C or lower, and even more preferably 750°C or lower.

For the purpose of firing and removing the organic template, when the temperature of the heating treatment is equal to or higher than the lower limit value, the organic template can be sufficiently fired and removed and does not remain, and thus the pores of the zeolite become sufficient and a permeate flux at the time of separation and concentration can be secured. Meanwhile, when the heating treatment temperature is equal to or lower than the upper limit value, the difference in thermal expansion coefficient between the support and the zeolite does not become large, and cracks do not occur in the zeolite single-component separation structure. Therefore, sufficient denseness of the zeolite single-component separation structure can be secured, and sufficient separation performance can be achieved.

The heating time is not particularly limited as long as the zeolite single-component separation structure is sufficiently dried or the organic template is fired and removed, and is preferably 0.5 hours or more, and more preferably 1 hour or more. The upper limit is not particularly limited, and is usually within 200 hours, preferably within 150 hours, and more preferably within 100 hours. The heating treatment for the purpose of firing and removing the template may be performed in an air atmosphere, or may be performed in an atmosphere to which an inert gas such as $N_2$ or oxygen is added.

When the hydrothermal synthesis is performed in the presence of an organic template, it is appropriate to remove the organic template by, for example, heating treatment, extraction, or the like, preferably heating treatment, i.e., firing, after washing the resultant zeolite single-component separation structure with water.

The temperature rising rate in the heating treatment for the purpose of firing and removing the organic template is desirably as low as possible in order to reduce the occurrence of cracks in the zeolite single-component separation structure due to the difference in thermal expansion coefficient between the support and the zeolite. The temperature increase rate is usually 5°C/min or less, preferably 2°C/min or less, more preferably 1°C/min or less, and particularly preferably 0.5°C/min or less. Usually, the temperature increase rate is 0.1°C/min or more in consideration of workability.

The temperature decrease rate after the firing also needs to be controlled in order to avoid the occurrence of cracks in the zeolite single-component separation structure. As with the temperature increase rate, the lower the temperature decrease rate, the more desirable. The temperature decrease rate is usually 5°C/min or less, preferably 2°C/min or less, more preferably 1°C/min or less, and particularly preferably 0.5°C/min or less. Usually, the temperature decrease rate is 0.1 °C/min or more in consideration of workability.

The zeolite single-component separation structure may be ion-exchanged as necessary. When the synthesis is performed using an organic template, the ion exchange is usually performed after the organic template is removed. Examples of the ion to be exchanged include a proton, alkali metal ions such as $Na^+$, $K^+$, and $Li^+$, Group 2 element ions such as $Ca^{2+}$, $Mg^{2+}$, $Sr^{2+}$, and $Ba^{2+}$, and ions of transition metals such as Fe, Cu, and Zn. Among these, a proton and an alkali metal ion such as $Na^+$, $K^+$, or $Li^+$ are preferable.

The ion exchange may be carried out by treating the zeolite single-component separation structure after firing (e.g., in the case of using an organic template) with an ammonium salt such as $NH_4NO_3$ or $NaNO_3$ or an aqueous solution containing ions to be exchanged, or an acid such as hydrochloric acid in some cases, usually at a temperature of from room temperature to 100°C, followed by washing with water. Further, the zeolite single-component separation structure may be fired at from 200°C to 500°C as necessary.

The air permeation amount [ $L/(m^2 \cdot h)$] of the thus-obtained zeolite single-component separation structure (zeolite single-component separation structure after the heating treatment) is usually $1400 \ L/(m^2 \cdot h)$ or less, preferably $1000 \ L/(m^2 \cdot h)$ or less, more preferably $700 \ L/(m^2.h)$ or less, more preferably $600 \ L/(m^2 \cdot h)$ or less, even more preferably $500 \ L/(m^2.h)$ or less, particularly preferably $300 \ L/(m^2 \cdot h)$ or less, and most preferably $200 \ L/(m^2.h)$ or less. The lower limit of the permeation amount is not particularly limited, but is usually $0.01 \ L/(m^2.h)$ or more, preferably $0.1 \ L/(m^2 \cdot h)$ or more, and more preferably $1 \ L/(m^2 \cdot h)$ or more.

Second Separation Section

The material for the second separation section formed at the upper end portion of the first separation section is not particularly limited, but has to be a material that exhibits a higher separation performance than the gas separation performance of the first separation section. For example, in order to exhibit high separation performance, a material having a smaller pore diameter than the first separation section (layer) or a material having a higher density than the first separation section (layer) is preferable. Specifically, main constituent elements are preferably Si and O, and silica is particularly preferable.

In a preferred configuration of the separation membrane of the present invention, as described above, a layer having smaller pores, preferably an amorphous layer, is formed at the upper end portion of the single-component separation structure (e.g., zeolite single-component separation structure), whereby separation performance that cannot be exhibited by the function of the zeolite pore diameter can be easily achieved. In the separation membrane of the present invention, the density of an amorphous layer of the composite separation membrane is preferably higher than that of the zeolite of the base. When the ratio of the density of the amorphous layer to the density of the zeolite of the base is defined as relative density, the separation performance of the amorphous layer can be made higher than that of the zeolite by the high relative density, and a suitable separation performance can be achieved. Specifically, the relative density is preferably more than 1.

Meanwhile, by setting the relative density of the amorphous layer to a certain level or less, the porosity of the amorphous layer becomes appropriate, the pores are not excessively narrowed, the permeation resistance becomes appropriate, and the expected permeance of the permeate component is achieved. Assuming that the known amorphous silica (density = $2.2 \ g/cm^3$) and the CHA-type zeolite single-component separation structure are used, the relative density is 1.46. Meanwhile, in consideration of low permeation performance reported as that of an amorphous silica separation membrane, a relative density of 1.46 is considered to be the upper limit. Therefore, the relative density is 1.46 or less, preferably 1.30 or less, and more preferably 1.15 or less.

The second separation section preferably contains Si atoms, and particularly the Si atoms are preferably atoms supplied in a gas phase. The gas phase is advantageous in that Si can be supplied to the upper end portion of the first separation section with higher reactivity, and the desired separation performance is more likely to be sufficiently exhibited. The method of supplying the Si compound in a gas phase is not particularly limited, and for example, a liquid Si compound such as a silicate oligomer can be supplied using a bubbler or the like.

The thickness of the second separation section is a thickness from an end portion (lower end portion) of the second separation section in contact with the first separation section to an opposite end portion (upper end portion), and the thickness is preferably 5 nm or more and 200 nm or less.

In order to exhibit practical permeation performance, the second separation section is preferably formed to be appropriately thick. According to the studies conducted by the present inventors, the second separation section is preferably in a membrane form, and the lower limit of the thickness of the membrane is 5 nm or more, preferably 7 nm or more, more preferably 10 nm or more, and particularly preferably 12 nm or more. Such a thickness makes it difficult to be affected by the influence of some defects or unevenness of the surface of the first separation section. Meanwhile, the second separation section is preferably thinner than a certain thickness so that the gas permeation resistance does not become excessive, and the upper limit of the membrane thickness is 200 nm or less, preferably 100 nm or less, more preferably 50 nm or less, and most preferably 25 nm or less.

In a case where the first separation section is made of porous ceramic or zeolite, the second separation section preferably has a thickness that can be adjusted, and preferably has another type of structure having a high density. For example, an amorphous structure is preferable. Another type of material with a high density, such as silica, is preferably used. Therefore, amorphous silica having the above membrane thickness is a more preferable aspect.

As described above, the second separation section is most preferably an amorphous silica membrane having a thickness of 5 nm or more and 200 nm or less.

As described above, the separation membrane laminated body (composite separation membrane) of the present invention preferably has a first separation section and a second separation section, and the relative density of the second separation section to the first separation section is preferably 1.05 or more and 1.30 or less. When the relative density is 1.05 or more, high separation performance is achieved. Meanwhile, when the relative density is 1.30 or less, the pores are not narrowed, and the permeation resistance is maintained.

From the above viewpoint, the relative density of the second separation section to the first separation section is more preferably 1.11 or more and 1.15 or less.

In the separation membrane laminated body (composite separation membrane) of the present invention, the absolute density of the second separation section is preferably 1.58 $g/cm^3$ or more and 1.96 $g/cm^3$ or less. The absolute density of the second separation section of 1.58 $g/cm^3$ or more is advantageous in terms of the denseness and density conditions required for exhibiting the separation performance. Meanwhile, the absolute density of the second separation section of 1.96 $g/cm^3$ or less is advantageous in terms of low permeation resistance of the permeate gas, and the pores are narrowed, so that the separation performance can be exhibited. From the above viewpoint, the absolute density of the second separation section is more preferably 1.67 $g/cm^3$ or more and 1.72 $g/cm^3$ or less.

Method for Producing Separation Membrane Laminated Body

The single-component separation structure is produced by the above-described method, and the second separation section is formed thereon by exposing the side (upper end portion) opposite to the side of the first separation section in contact with the support to a gas containing a molecular compound having at least an Si atom.

Next will be described a case where an amorphous second separation section is formed at the upper end portion of a zeolite single-component separation structure in which the first separation section is zeolite. An Si compound containing Si atoms is gasified and supplied to the upper end portion of the zeolite single-component separation structure together with water vapor depending on conditions, and a treatment (exposure treatment) for causing a reaction is performed. It is considered that, as a result, a thin layer of the Si compound is formed at the upper end portion of the zeolite single-component separation structure, and that a separation layer having pores smaller than the original pore diameter of zeolite is provided, thereby making it possible to improve the separation performance.

As the molecular compound (Si compound) having Si atoms used in the upper end portion treatment, as a liquid raw material before vaporization of a gaseous raw material, for example, alkylalkoxysilanes such as methyltriethoxysilane, 3-aminopropyltriethoxysilane, and 1,1,3,3-tetramethoxy-1,3-dimethylpropanedisiloxane, organosilicon compounds having siloxane such as hexamethyldisiloxane, organosilicon compounds having silazane such as hexamethyldisilazane, silicates such as tetramethoxysilane and tetraethoxysilane, silicate oligomers such as methyl silicate oligomer and ethyl silicate oligomer, colloidal silica, sodium silicate, silica sol, and the like can be used.

Among these, silicates and silicate oligomers are preferable in view of reactivity, and tetraethoxysilane and methyl silicate oligomers are particularly preferable. Further, methyl silicate oligomers are preferable, and polymethoxysiloxanes are most preferable.

One type of these Si compounds may be used alone or two or more types thereof may be used in combination.

A method of making the Si compound into a gaseous state may be vaporization from an Si compound liquid by heating, or may be a gas generated by putting the Si compound liquid in a container and bubbling an inert gas for carrying such as nitrogen, helium, argon, xenon, or krypton.

The method of treatment is not particularly limited as long as the raw material gas can be supplied to the upper end portion of the zeolite single-component separation structure and reacted. For example, there are two methods as follows. One is a method in which the zeolite single-component separation structure is enclosed in a sealed reactor together with an Si compound liquid and water, and the three materials are heated to react a gas generated by vaporization from the Si compound generated in the sealed reaction container and water vapor generated from the water at a high temperature on the upper end portion of the zeolite single-component separation structure (hereinafter the method may be referred to as "sealed reaction container system"). The other is a method in which a gas is passed through a bubbler (gas generator) containing an Si compound, and the generated Si compound gas is supplied to a flow type reaction tube in which a zeolite single-component separation structure is installed, along with a carrier gas, and reacted on the upper end portion of the zeolite single-component separation structure (hereinafter the method may be referred to as "flow type reactor system").

First, the treatment by the sealed reaction container system will be described.

The sealed reaction container system is a method in which the zeolite single-component separation structure, a gas generated from the Si compound, and water vapor generated from water are allowed to coexist under a desired temperature condition in the inside of a sealed reaction container, and are reacted on the upper end portion of the zeolite single-component separation structure. The sealed reaction container is not particularly limited, and may be any container capable of accommodating the shape and dimensions of the zeolite single-component separation structure. For example, a stainless steel autoclave having a Teflon inner cylinder can be used. When the stainless steel autoclave having the Teflon inner cylinder is placed in a thermostatic bath at a desired temperature, the temperature and the saturated vapor pressure of the gas generated from the supply sources of the water vapor and the Si raw material at the temperature are realized, and saturated vapor of the gas generated from the Si raw material and the water vapor is generated in the container. The shapes of the supply sources of the water vapor and the Si raw material are not limited as long as the supply sources can be placed in a sealed reaction container. Water and a liquid Si raw material may be placed in small containers, respectively, or may be impregnated into a porous material.

The treatment temperature is usually 20°C or higher, preferably 60°C or higher, and more preferably 80°C or higher, and is usually 200°C or lower, preferably 150°C or lower, and more preferably 130°C or lower. When the temperature is equal to or higher than the lower limit value, the dehydration condensation reaction and the hydrolysis reaction between the Si compound and the upper end portion of the zeolite first separation section and between the Si compounds sufficiently proceed, the modification treatment with the Si compound is sufficiently performed, and hydrophilicity of the upper end portion of the zeolite first separation section is sufficiently improved. Meanwhile, when the temperature is equal to or lower than the upper limit value, the reaction at the upper end portion of the zeolite first separation section does not excessively proceed, the permeation resistance is lowered, and a membrane sample having high permeation performance is obtained.

In the production method of the present invention, all the steps are preferably carried out at 200°C or lower.

The treatment time is usually 1 hour or more, preferably 2 hours or more, and more preferably 3 hours or more, and is usually 24 hours or less, preferably 8 hours or less, and more preferably 5 hours or less. When the treatment time is equal to or longer than the lower limit value, the reaction at the upper end portion of the zeolite first separation section sufficiently proceeds, and a sufficient effect is achieved. Meanwhile, when the treatment time is equal to or shorter than the upper limit value, the reaction at the upper end portion of the zeolite first separation section does not excessively proceed, the permeation resistance is lowered, and a membrane sample having high permeation performance is obtained.

Next will be described the treatment by the flow type reactor system for the treatment of the upper end portion of the zeolite single-component separation structure.

In this case, the gas generated from the Si compound and the water vapor generated from the water are separately generated and supplied to the reaction tube in which the zeolite single-component separation structure is installed, thereby causing a reaction at the upper end portion of the zeolite single-component separation structure. According to this method, the gas generated from the Si compound and the water vapor generated from the water can be supplied to the reaction tube separately or simultaneously for an optional time. Thus, the treatment can be carried out over multiple stages. That is, there is a stage in which the gas generated from the Si compound and the water vapor generated from the water are simultaneously supplied to the reaction tube and allowed to flow therethrough, or a stage in which the gas generated from the Si compound or the water vapor generated from the water is separately supplied to the reaction tube and allowed to flow therethrough. These elementary stages can be combined optionally to constitute the entire treatment.

For example, the treatment of the upper end portion of the zeolite single-component separation structure in the reaction tube is carried out in three successive stages with the supply gas being controlled. That is, in the first stage, only the water vapor generated from water is supplied to the reaction tube by using an accompanying carrier gas. In this stage, the water component is adsorbed to the upper end portion of the zeolite single-component separation structure in the reaction tube. In the second stage, both the gas generated from the Si compound and the water vapor generated from the water are supplied to the reaction tube by using an accompanying carrier gas. In this stage, the Si compound and the water vapor react with each other at the upper end portion of the first zeolite separation section. In the third stage, only the water vapor generated from water is supplied to the reaction tube by using an accompanying carrier gas. In this stage, the reaction of elimination of the organic group of the Si compound proceeds.

The shape of the reaction tube for the modification treatment of the upper end portion is not particularly limited. It may be any container capable of accommodating the shape and dimensions of the zeolite single-component separation structure having any shape such as a tubular shape, a hollow fiber shape, a monolithic shape, or a honeycomb shape.

The treatment time is usually 1 hour or more, preferably 2 hours or more, and more preferably 3 hours or more, and is usually 24 hours or less, preferably 12 hours or less, and more preferably 8 hours or less. When the treatment time is equal to or longer than the lower limit value, the reaction at the upper end portion of the zeolite first separation section sufficiently proceeds, and a sufficient effect is achieved. Meanwhile, when the treatment time is equal to or shorter than the upper limit value, the reaction at the upper end portion of the zeolite first separation section does not excessively proceed, the permeation resistance is lowered, and a membrane sample having high permeation performance is obtained.

The preferred composite separation membrane of the present invention is obtained by forming an amorphous silica layer as the second separation section by the above reaction. Amorphous silica separation membranes have been reported, but there is no report that they are widely used industrially. This is because the performance of the amorphous silica separation membrane is unstable, and particularly, the stability against moisture is not high. The reason for the instability of the amorphous silica separation membrane is presumed to be that the material is generated under a high temperature condition of 300°C or higher, that the formed amorphous silica is metastable and structurally unstable, has a reaction activity to moisture, and reacts with moisture after the membrane formation, that the amorphous silica changes in quality, and that the permeation performance thereof changes. That is, it is considered that the instability of these amorphous silica separation membranes is caused by the high temperature conditions of membrane formation. In order to obtain a second separation section made of stable amorphous silica, formation of amorphous silica at 300°C or higher is avoided, and an amorphous silica layer is formed under a condition of a lower temperature, i.e., 200°C or lower, whereby a stable composite separation membrane can be produced. Thus, a stable composite separation membrane having water resistance can be produced.

The treatment temperature is usually 20°C or higher, preferably 60°C or higher, and more preferably 80°C or higher, and is usually 200°C or lower, preferably 150°C or lower, and more preferably 130°C or lower. Most preferably, the treatment temperature is 100°C or lower. When the temperature is equal to or higher than the lower limit value, the dehydration condensation reaction and the hydrolysis reaction between the Si compound and the upper end portion of the zeolite first separation section and between the Si compounds sufficiently proceed, the modification treatment with the Si compound is sufficiently performed, and hydrophilicity of the upper end portion of the zeolite first separation section is sufficiently improved. Meanwhile, when the temperature is equal to or lower than the upper limit value, the reaction at the upper end portion of the zeolite first separation section does not excessively proceed, the permeation resistance is lowered, and a membrane sample having high permeation performance is obtained.

The flow rate of the gas for bubbling or accompanying and carrying the gas of the Si compound and water in the flow type reactor system (the flow type treatment of the upper end portion of the zeolite single-component separation structure) (hereinafter the flow rate will be referred to as "supply flow rate") is not particularly limited, but is usually 0.1 ml/min or more, preferably 1 ml/min or more, more preferably 10 ml/min or more, and even more preferably 25 ml/min or more, and the supply flow rate is usually 5000 ml/min or less, preferably 1000 ml/min or less, and more preferably 500 ml/min or less, in order to supply the Si compound or water in an amount necessary for the reaction.

The treatment of the upper end portion of the zeolite single-component separation structure can be performed as follows, for example, using an apparatus (a flow type reactor system; a raw material supply gas flow type reaction treatment apparatus for the upper end portion of a zeolite single-component separation structure) schematically shown in FIG. 2. That is, as illustrated in FIG. 2, a container (bubbler) 1 that generates a gas from an Si compound, a container (bubbler) 2 that generates water vapor from water, a tubular reaction tube 3, and a valve 8 are installed in a thermostatic bath 11 in such a manner that they are incorporated in a pipe system. The thermostatic bath 11 is provided with a temperature controller so that the temperatures of the container (bubbler), the reaction tube, and the gas can be adjusted. A gas flow rate control meter 4, a water vapor repairing device 5 in exhaust gas, a back-pressure valve 6, and a gas flowmeter 7 are installed, outside the thermostatic bath 11, in the pipe system.

FIG. 3 is a schematic view of a tubular reaction tube 21 (hereinafter may be referred to simply as "reaction tube") incorporated as a part of a flow type reactor system (a raw material supply gas flow type reaction treatment apparatus for the upper end portion of a zeolite single-component separation structure). In the example illustrated in FIG. 3, the inner diameter of the tubular reaction tube 21 is 15 mm. A tubular zeolite single-component separation structure 22 having an outer diameter of 12 mm is installed in the reaction tube and treated. The zeolite single-component separation structure 22 is fixed in the reaction tube by a zeolite membrane fixing jig 23 (hereinafter may be referred to simply as "jig"). The jig 23 is provided with holes or cutouts, and does not hinder the flow of gas. The zeolite membrane fixing jig 23 keeps the distance between the upper end portion of the zeolite single-component separation structure 22 and the inner wall of the reaction tube 21 constant, so that the supply gas for the reaction flows stably. After the installation of the zeolite single-component separation structure 22, the reaction tube is sealed with a flange 24. The supply gas enters the reaction tube from the supply gas introduction pipe 25, passes through the upper end portion of the tubular zeolite single-component separation structure 22, and is discharged from the exhaust gas pipe 26. By changing the supply flow rate of the gas, the linear velocity and the flow state of the gas at the upper end portion of the zeolite single-component separation structure 22 can be controlled.

The procedure and convenience of the supply of the raw material gas in the flow type reactor system (raw material supply gas flow type treatment apparatus for the upper end portion of a zeolite single-component separation structure) will be described with reference to FIG. 2. A porous single-zeolite membrane composite (zeolite single-component separation structure) to be treated is placed in the tubular reaction tube 3, and the valve 8 incorporated in the pipe is closed. Further, the container (bubbler) 1 that generates a gas of the Si compound and the container (bubbler) 2 that generates water vapor from water, which respectively contain a liquid of the Si compound raw material and water, are incorporated in the pipe, and the valve 8 is closed. The temperature of the thermostatic bath 11 is set to a desired set value to make the temperature in the thermostatic bath uniform. Thereafter, the necessary valves are controlled to supply a gas containing the Si compound gas and a gas containing water vapor to the tubular reaction tube 3 by operating the gas flow rate control meters. The type of gas to be supplied (gas containing the Si compound raw material and gas containing water vapor), the flow rate, and the time can be optionally adjusted. The gas supplied to the tubular reaction tube 3 is discharged from the reaction tube to the outside of the apparatus through the water vapor repairing device 5, the back-pressure valve 6, and the flowmeter 7 after the treatment process. The pressure in the tubular reaction tube 3 can be adjusted by controlling the back-pressure valve 6.

It is not necessarily clear why the tendency of the activation energies of the gas permeances is exhibited when such a treatment is performed. However, there is a possibility that, for example, gas adsorption due to the polarity inherent in the CHA-type zeolite membrane is blocked to some extent by the siloxane network or silica modified portion formed on the surface thereof, and conversely, gas diffusion becomes dominant in the modified portion. In other words, the tendency of the activation energies of the gas permeances may be exhibited by a complex phenomenon which is not a simple molecular sieve. In view of the above, for example, it is considered that similar characteristics may be exhibited in separation membranes having a composite structure, such as a composite separation membrane having a silica modified portion formed on various zeolite membranes other than the CHA-type zeolite membrane, a composite separation membrane having a carbon network formed on a zeolite membrane, a composite separation membrane having a carbon network formed on a silica membrane produced by various CVD/sol-gel methods, and a composite separation membrane having a silica modified portion formed on a carbon membrane. That is, it is inferred that such a tendency of the activation energies of the gas permeances may be exhibited when the first separation section and the second separation section have different characteristics relating to gas separation characteristics such as gas adsorption characteristics, gas diffusion characteristics, and gas desorption characteristics, or when there is an interaction such as the second separation section shielding the characteristics of the first separation section.

The present separation membrane can be suitably used for separating and recovering hydrogen from a mixed gas, and in particular, can be more suitably used in the case of recovering hydrogen from a mixed gas containing both hydrogen and oxygen, and can be most suitably used in the case of recovering hydrogen from a hydrogen-oxygen mixed gas (hydrogen detonating gas) in which the mixed gas to be supplied has a stoichiometric composition of hydrogen:oxygen = 2:1. Once a mixed gas containing hydrogen and oxygen is ignited, deflagration or detonation may occur. In such a situation, a separation membrane that is intended to be applied to a separation and recovery process is required to be nonflammable, have high separation performance, and be capable of safely and highly efficiently separating and recovering hydrogen, which is a recovery target gas. Therefore, the separation membrane is preferably an inorganic membrane made of an inorganic material. Among the inorganic membranes, a membrane including a zeolite membrane or a silica membrane is more preferable than a carbon membrane or the like from the viewpoint of safety. In consideration of high recovery, a zeolite membrane having a tendency of high permeance is even more preferable, and as described above, a surface-modified zeolite membrane is most preferable. In such a case, the zeolite membrane is most preferably a zeolite membrane having a CHA-type framework structure from the viewpoint of the membrane performance.

All of the zeolite membrane, the silica membrane, and the carbon membrane may be formed in a tubular support, and the lower limit of an inner diameter $\varphi i$ (mm) of the support is preferably 6 mm or more. Meanwhile, the upper limit of the inner diameter of the support is preferably 16 mm or less. That is, the inner diameter $\varphi i$ (mm) of the support preferably satisfies Formula (1-VI) described below.

$$6 \text{ (mm)} \leq \varphi i \text{ (mm)} \leq 16 \text{ (mm)} \qquad \text{(1-VI)}$$

The lower limit value is more preferably 7 mm or more, and even more preferably 8 mm or more. The upper limit of the inner diameter is more preferably 14 mm or less, even more preferably 12 mm or less, and particularly preferably 10 mm or less. This is a result of considering the mechanical strength of the tubular support.

The supply gas may be supplied to the outside of the tubular support on which the separation active layer is formed, and hydrogen may be separated and recovered from the inside thereof, whereas the supply gas may be supplied to the inside of the tubular support, and hydrogen may be separated and recovered from the outside thereof on which the separation active layer is formed. However, in the separation of a hydrogen-oxygen mixed gas and the separation of a mixed gas containing other combustible gases, which are suitably applied in the present invention, the resistance is also important from the viewpoint of the mechanical strength of the separation membrane in an unlikely event of ignition. In particular, according to the studies of the present inventors, it has been found that, in a case where the support is a ceramic such as alumina, the resistance to pressure increase when explosion/detonation occurs on its outside tends to be higher than the resistance to pressure increase when explosion/detonation occurs on its inside. It has also been found that the inner diameter should be in the above-described range. The tubular shape is preferable from the viewpoint of mechanical strength as compared with a flat membrane-like configuration or the like. The inner diameter in this case may be an average equivalent circular diameter, and a value (diameter) at an end may be used unless the inner diameter greatly changes in the middle of the tube. More preferably, the inner diameter is in this range over the entire tube.

Separation Module or Separation Tower

The separation membrane of the present invention can be applied to a separation and recovery process by equipping the separation membrane on an outer cylinder to form a module and constituting the module as a separation module or a larger separation tower. Here, the temperature Tos of the separation module or separation tower is 45°C or higher and 200°C or lower. The temperature range Tam for deriving the activation energies is a range of 5°C or higher and 200°C or lower, but the temperature range of the separation module or separation tower is 45°C or higher and 200°C or lower for the following reasons.

That is, the temperature Tos (°C) of the separation module or separation tower satisfies Formula (1-VII) described below.

$$45 \ (°C) \le Tos \ (°C) \le 200 \ (°C) \quad (1\text{-VII})$$

The reason why the temperature of the separation module or separation tower is 45°C or higher and 200°C or lower is that the separation membrane of the present invention can be suitably used for the application of separating and recovering hydrogen gas from a hydrogen-oxygen mixed gas (hydrogen detonating gas) having a ratio of hydrogen: oxygen = 2:1, and therefore that the temperature is preferably 200°C or lower from the viewpoint of safety. According to the studies of the present inventors, in order to particularly increase the permeance of hydrogen gas in an appropriate range, the temperature of the separation module or separation tower was appropriately 45°C or higher. Therefore, the lower limit of the temperature range of the separation module or separation tower is 45°C or higher, and preferably 51°C or higher. Meanwhile, the upper limit of the temperature range of the separation module or separation tower is 200°C or lower, and preferably 150°C or lower. That is, Formula (1-VIII) described below is preferably satisfied.

$$51 \ (°C) \le Tos \ (°C) \le 150 \ (°C) \quad (1\text{-VIII})$$

Further, the lower limit value is more preferably 60°C or higher, even more preferably 70°C or higher, and particularly preferably 80°C or higher. The upper limit value is more preferably 140°C or lower, even more preferably 130°C or lower, and particularly preferably 120°C or lower.

The separation module or separation tower of the present invention is equipped with the separation membrane of the present invention, and the temperature of the separation module or separation tower is within the temperature range in which the activation energies of the separation membrane are derived. Therefore, the permeance of the hydrogen gas having a small dynamic molecular diameter is preferably always larger than the permeance of the gas L having a relatively large dynamic molecular diameter under any one condition selected from the temperature range of the separation module or separation tower, the supply form of the separation target gas, the supply pressure of the gas, and the permeation-side pressure.

That is, Formula (1-III) described below is preferably satisfied.

$$P(L) < P(S) \quad (1\text{-III})$$

In the separation module or separation tower of the present invention, hydrogen having a relatively small dynamic molecular diameter and the gas L having a relatively large dynamic molecular diameter preferably satisfy Formula (1-IV) described below.

$$0 < Ep(L) < Ep(S) \quad (1\text{-IV})$$

The selectivity $\alpha$ (S/L) = P(S)/P(L) of the hydrogen gas to the gas L can be improved at the same time while improving the permeance P(S) of the hydrogen gas by "warming separation" in which the mixed gas to be separated is warmed to an appropriate temperature using the separation module or separation tower, which is preferable.

The separation membrane constituting the separation module or separation tower of the present invention is preferably an inorganic membrane, more preferably of zeolite, and particularly preferably includes a surface-modified zeolite membrane. These membranes are nonflammable and therefore highly safe, and have high separation performance. Details will be described below.

As the separation and recovery target by using the separation module or separation tower of the present invention, any type of gas having a dynamic molecular diameter relatively larger than that of hydrogen can be selected as the gas L, when hydrogen is separated and recovered from the mixed gas M containing hydrogen having a relatively small dynamic molecular diameter and the gas L having a relatively large dynamic molecular diameter.

Specific examples of the gas L include carbon dioxide, argon, oxygen, nitrogen, and methane, and a gas selected from at least one of these is preferably contained. Furthermore, the gas L is more preferably composed of a gas selected from carbon dioxide, argon, oxygen, nitrogen, and methane, even more preferably composed of a gas selected from oxygen and nitrogen, and most preferably oxygen. The mixed gas may be a wet gas, but is more preferably a dry gas.

In the separation module or separation tower of the present invention, a separation membrane laminated body including a separation membrane on a support can be used, and the inner diameter $\varphi i$ (mm) of the support preferably satisfies Formula (1-VI) described below.

$$6\ (\text{mm}) \leq \varphi i\ (\text{mm}) \leq 16\ (\text{mm}) \qquad (1\text{-VI})$$

When a mixed gas is separated using a separation module or separation tower including the separation membrane of the present invention, the gas flow in the separation module or separation tower is preferably a laminar flow. In particular, in the separation of a hydrogen-oxygen mixed gas to which the present invention is suitably applicable, it is desired to accurately determine the composition ratio of hydrogen to oxygen with respect to the gas flow direction for each of the supply gas, the permeate gas, and the non-permeate gas. This is to determine whether the flowing hydrogen-oxygen mixed gas is in the explosion range or the detonation range, with respect to the gas flow direction. In general, the viscosity of a gas increases with an increase in temperature, and therefore, when other conditions are the same, the gas flow is more likely to be laminar at a higher temperature. From this viewpoint, it is very preferable to perform warming separation within an appropriate temperature range using the separation membrane and the separation module or separation tower of the present invention, because there is a synergistic effect that the gas flow in the separation module or separation tower can be kept to be laminar, in addition to improvement of both the permeation performance and the separation performance of the separation membrane.

Further, from this viewpoint, the lower limit of the distance between the inner wall of the separation membrane module or separation tower and the surface of the separation membrane closest to the inner wall is preferably 0.1 cm or more in consideration of the assembly tolerance required at the time of actual module production, and the like. The distance is more preferably 0.2 cm or more, even more preferably 0.5 cm or more, and particularly preferably 1 cm or more.

Meanwhile, when the distance between the inner wall of the separation membrane module or separation tower and the surface of the separation membrane closest to the inner wall is excessively large, there is a possibility that laminar gas flow may not be able to be maintained. Thus, the upper limit of the distance is preferably 50 cm or less, more preferably 25 cm or less, even more preferably 10 cm or less, and particularly preferably 2 cm or less.

The material for the outer cylinder portion constituting the separation module or separation tower may be selected from any material, but is preferably made of a metal from the viewpoint of being used in the process for separating and recovering a hydrogen-oxygen mixed gas to which the present invention is suitably applied, and is preferably made of a resin from the viewpoint of cost. In the former case, the outer cylinder is particularly preferably made of stainless steel.

The outer cylinder may be configured to be capable of containing only the separation membrane, and for example, in a place where strong sunlight irradiation is expected, such as an artificial photosynthesis plant, the temperature of the outer cylinder can be set to 45°C or higher only by installing the outer cylinder outdoors without a special heating mechanism. In such a case, the surface color of the outer cylinder is preferably a color other than white, more preferably a color having a brightness of 7 or less, even more preferably a color having a brightness of 5 or less, and most preferably a color having a brightness of 3 or less. The surface color in the most preferable case is black.

The outer cylinder preferably has other functions additionally, preferably includes a dehumidification mechanism inside, also preferably includes a warming mechanism, and also preferably has a flame propagation suppression function. That is, the outer cylinder preferably further has at least one of the dehumidification mechanism, the warming mechanism, or the flame propagation suppression function.

Dehumidification Mechanism

The dehumidification mechanism is preferably disposed in the outer cylinder of the separation membrane module or separation tower and on a gas supply side thereof. The dehumidification mechanism can be configured by disposing a granular material such as silica gel or zeolite on the gas supply side of the separation module or separation tower. For example, a part of the gas supply side of the zeolite membrane on the tubular alumina support can be made to function as the dehumidification mechanism. In a case where a granular material such as silica gel or zeolite is disposed on the gas supply side of the separation module or separation tower, it is also possible to simultaneously perform a part or the entirety of the flame propagation suppression function by appropriately controlling the granule diameter.

Warming Mechanism

The warming mechanism may be, for example, a flow path through which a heat medium flows, which is installed in contact with the outer wall surface of the outer cylinder of the separation module or separation tower, may be a mechanism or the like that efficiently applies warm air to the outer wall surface of the outer cylinder, or may be a heating element that is directly wound around the outer wall surface of the outer cylinder. In the case of a flow path through which a heat medium flows, for example, when water is used as the heat medium, a mechanism for warming/cooling water may be provided at a place different from the separation module or separation tower, to thereby adjust the temperature.

In the case of a heating element directly wound around the outer wall surface, the heating element itself is preferably covered with a metal sheath or the like from the viewpoint of safety. The separation module or separation tower is warmed using such a warming mechanism, whereby the separation membrane of the present invention can simultaneously realize higher separation performance and higher permeability.

More preferably, the dehumidification mechanism and the warming mechanism together have a function of lowering the relative humidity of the mixed gas immediately before being supplied to the separation membrane. This is because the relative humidity can be reduced in two stages by removing the water vapor of the mixed gas supplied by the dehumidification mechanism to some extent and then raising the temperature by the warming mechanism.

Flame Propagation Suppression Mechanism

The flame propagation suppression mechanism can be particularly suitably used when hydrogen is separated and recovered from a hydrogen-oxygen mixed gas or the like using the separation module or separation tower equipped with the separation membrane of the present invention. The flame propagation suppression mechanism can be installed at any place selected from the gas supply side, the gas permeation side, and the gas non-permeation side in the outer cylinder of the separation module or separation tower. In particular, the mixed gas before separation flows from the gas supply side, and therefore the ignition risk is the highest. Therefore, it is preferable to provide the flame propagation suppression mechanism on the gas supply side. On the non-permeation side, a hydrogen-oxygen mixed gas having a decreased hydrogen concentration or an increased oxygen concentration flows. However, in this case, the flame propagation suppression mechanism is preferably provided on the non-permeation side because the hydrogen-oxygen mixed gas is not necessarily outside the detonation range or the explosion range.

On the permeation side, a hydrogen-oxygen mixed gas having an increased hydrogen concentration or a decreased oxygen concentration flows. In general, since the flow of gases other than the recovery target gas to the permeation side cannot be completely avoided, the hydrogen-oxygen mixed gas also usually flows to the permeation side. Therefore, it is preferable to provide the flame propagation suppression mechanism on the permeation side.

The flame propagation suppression mechanism can be composed of a narrowed flow path (a flow path narrower than other portions), a metal sintered body, a mesh structure, or the like, and the former may be filled with granules having anti-explosion performance. The metal sintered body or the like is preferably made of a stainless steel material.

Hydrogen Recovery System

The hydrogen recovery system of the present invention is a hydrogen recovery system equipped with a separation membrane, wherein an activation energy Ep(S) (kJ/mol) of a permeance P(S) (mol/(m²·s·Pa)) of hydrogen through the separation membrane and an activation energy Ep(L) (kJ/mol) of a permeance P(L) (mol/(m²·s·Pa)) of a gas L through the separation membrane satisfy Formula (1-II) described below,
and at least one temperature Tgm (°C) of a temperature of a mixed gas M to be separated and recovered in the recovery system or a temperature of the separation membrane satisfies Formula (1-IX) described below.

$$|Ep(L)| < |Ep(S)| \quad (1\text{-}II)$$

$$45 \, (°C) \leq Tgm \, (°C) \leq 200 \, (°C) \quad (1\text{-}IX)$$

Formula (1-III), Formula (1-IV), and Formula (1-X) are preferably satisfied in the hydrogen recovery system of the present invention similarly as described in the separation module or separation tower described above. That is,

$$P(L) < P(S) \qquad (1\text{-}III),$$

$$0 < Ep(L) < Ep(S) \qquad (1\text{-}IV),$$

and

$$51 \, (°C) \le Tgm \, (°C) \le 150 \, (°C) \qquad (1\text{-}X).$$

The separation membrane in the hydrogen recovery system of the present invention is preferably an inorganic membrane, more preferably of zeolite, and particularly preferably includes a surface-modified zeolite membrane. These membranes are nonflammable and therefore highly safe, and have high separation performance.

In the hydrogen recovery system of the present invention, the type of the mixed gas containing hydrogen is not particularly limited. Here, the mixed gas preferably contains a gas selected from at least one of carbon dioxide, argon, oxygen, nitrogen, or methane, and, further, more preferably is composed of a gas selected from carbon dioxide, argon, oxygen, nitrogen, and methane in addition to hydrogen to be recovered. Even more preferably, the mixed gas is composed of a gas selected from oxygen and nitrogen in addition to hydrogen to be recovered. Most preferably, the mixed gas is composed of oxygen in addition to hydrogen to be recovered. The mixed gas may be a wet gas, but is more preferably a dry gas.

In the hydrogen recovery system of the present invention, the temperature Tgm of at least one of the mixed gas or the separation module or separation tower is preferably 45°C or higher and 200°C or lower. The temperature range Tam for deriving the activation energy is a range of 5°C or higher and 200°C or lower, but for the following reasons, the temperature of at least one of the mixed gas or the separation module or separation tower is 45°C or higher and 200°C or lower. Preferably, both the temperatures are 45°C or higher and 200°C or lower.

That is, Formula (1-IX) described below is preferably satisfied.

$$45 \, (°C) \le Tgm \, (°C) \le 200 \, (°C) \qquad (1\text{-}IX)$$

In particular, since the separation membrane of the present invention can be suitably used for the application of separating and recovering hydrogen gas from a hydrogen-oxygen mixed gas (hydrogen detonating gas) having a ratio of hydrogen:oxygen = 2:1, 200°C or lower is appropriate from the viewpoint of safety. According to the studies of the present inventors, in order to particularly increase the permeance of hydrogen gas in an appropriate range, the temperature of the separation module or separation tower was appropriately 45°C or higher. However, in addition to this, it was effective to increase the temperature of the mixed gas to be separated, for example, by preheating the mixed gas or the like, as is the case with the separation module or separation tower. Therefore, the lower limit of the temperature range of at least one of the mixed gas or the separation module or separation tower is 45°C or higher, preferably 51°C or higher, more preferably 60°C or higher, even more preferably 70°C or higher, and most preferably 80°C or higher.

The upper limit of the temperature range of at least one of the mixed gas or the separation module or separation tower is 200°C or lower, preferably 150°C or lower, more preferably 140°C or lower, even more preferably 130°C or lower, and most preferably 120°C or lower.

According to the studies of the present inventors, the temperature is preferably in a range of from 85°C to 115°C for the separation of a hydrogen-oxygen mixed gas having a stoichiometric composition of hydrogen:oxygen = 2:1, and it was most preferable and effective to preheat the separation target mixed gas, warm the outer cylinder portion of the separation module, and perform warming separation.

Particularly in a case where water was used as the heat medium of the warming mechanism, it was most preferable and effective to preheat the separation target mixed gas to from 85°C to 95°C, and also to warm the outer cylinder portion of the separation module to perform warming separation.

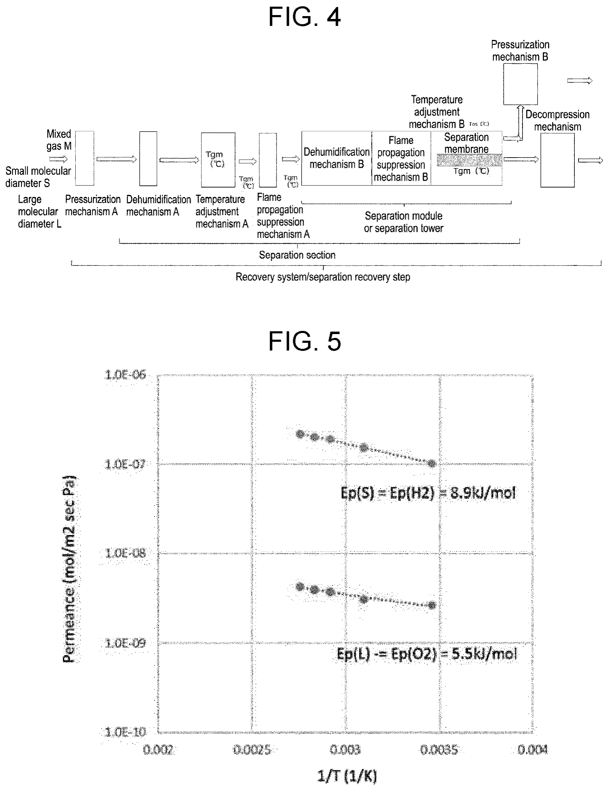

The hydrogen recovery system of the present invention may have a configuration as illustrated in FIG. 4. For example, the hydrogen recovery system is equipped with the separation membrane of the present invention, and the temperatures of the separation target gas and the separation module or separation tower are within the temperature range in which the activation energies of the separation membrane are derived. Therefore, the permeance of the hydrogen gas having a small dynamic molecular diameter is preferably always larger than the permeance of the gas L having a relatively large dynamic molecular diameter under any one condition selected from the temperature range of the separation target gas, the temperature range of the separation module or separation tower, the supply form of the separation target gas, the supply pressure of the gas, and the permeation-side pressure.

The hydrogen recovery system of the present invention preferably includes a mechanism for adjusting the pressure of the mixed gas to be supplied to the separation membrane, the separation membrane module or separation tower according to the purpose.

Pressurization Mechanism

Firstly, in a case where a sufficient differential pressure is secured in the separation membrane in the separation and recovery process and the efficiency of the separation process is considered to be important, a pressurization mechanism is preferably provided. That is, a pressurization mechanism for the mixed gas M to be supplied to the separation module or separation tower is preferably provided. In particular, as the pressurization mechanism, it is preferable to install a booster pump upstream of the separation membrane, the separation membrane module or separation tower (pressurization mechanism A), and it is also preferable to install a pressure release valve on the non-permeation side of the separation membrane, the separation membrane module or separation tower (pressurization mechanism B). For example, in a case where water is totally decomposed by a photocatalyst to generate a hydrogen-oxygen mixed gas and hydrogen is separated and recovered from the mixed gas by the hydrogen recovery system of the present invention, the supply pressure of the separation target gas can be improved, without increasing the pressure on the photocatalyst panel side, by increasing the pressure of the mixed gas using a booster pump, and the separation and recovery efficiency as a process is also improved, which is preferable.

Meanwhile, from the viewpoint of suppressing energy consumption, it is preferable to install the pressure release valve on the non-permeation side to improve the supply pressure of the separation target gas, as compared with the case of using the booster pump.

Secondly, from the viewpoint of safety, it is preferable to avoid pressurizing the hydrogen-oxygen mixed gas as much as possible, and it is preferable to supply the hydrogen-oxygen mixed gas at a slightly increased pressure or at about ordinary pressure, and it is preferable to provide a slightly pressurizing pump or a pressure release valve within a range in which such supply is possible.

Decompression Mechanism

The hydrogen recovery system of the present invention preferably includes a decompression mechanism for reducing the pressure on the side of the separation membrane, the separation membrane module or separation tower through which the permeate gas flows. This is because, as described above, the process performance can be improved by sufficiently securing the differential pressure in the separation membrane in the separation and recovery process, and it is preferable to dispose, for example, a vacuum pump on the permeation side to reduce the pressure. The vacuum pump preferably has a sufficient exhaust speed to secure a large differential pressure, and preferably has a capability of 100 l/min or more, more preferably 200 l/min or more, even more preferably 300 l/min or more, and most preferably 400 l/min or more.

The above capability is not necessarily secured by one vacuum pump, and may be secured by installing a plurality of vacuum pumps.

The vacuum pump is preferably a vacuum pump which can enter the atmosphere, has high airtightness, has an oil-free flow path, and is also considered in anti-explosion performance and the like. In particular, in the case of separating and recovering hydrogen gas from a hydrogen-oxygen mixed gas, a diaphragm pump or a scroll pump is preferable, and a scroll pump is more preferable. In the recovery system, the temperature Tgm of at least one of the mixed gas or the separation module or separation tower is preferably 45°C or higher and 200°C or lower. Particularly in a case where Tgm is a relatively low temperature, an ejector can be used as the decompression mechanism in some cases. In particular, when a water ejector using water is used, Tgm is preferably 45°C or higher and 90°C or lower, more preferably 45°C or higher and 80°C or lower, even more preferably 45°C or higher and 70°C or lower, and most preferably 45°C or higher and 60°C or lower.

This is because the exhaust performance is reduced when the vapor pressure of water is increased. In order to suppress this reduction, when an ejector is used as the decompression mechanism, it is most preferable to use the ejector at 45°C or higher and 60°C or lower.

The recovery system of the present invention preferably has other functions additionally, and for example, an independent dehumidification mechanism is preferably provided in the recovery system, like the dehumidification mechanism A in FIG. 4. It is also preferable that the temperature adjustment mechanism A in FIG. 4 is made to function as a warming mechanism, and the recovery system has a function of adjusting the temperature of the mixed gas itself independently. Further, in order to secure the warming separation at a desired temperature, the recovery system preferably has a function of warming the separation module or separation tower, like the temperature adjustment mechanism B in FIG. 4. Also, the recovery system preferably has a flame extinction function independently in case of emergency, like the flame propagation suppression mechanism A in FIG. 4.

Meanwhile, it is also preferable to integrate these additional functions as a part of the separation module or separation tower, like the dehumidification mechanism B and the flame propagation suppression mechanism B in FIG. 4.

Dehumidification Mechanism

The dehumidification mechanism is preferably disposed as an independent mechanism on the upstream side corresponding to the mixed gas supply side of the recovery system, like a dehumidification tower. Specifically, an aspect including a dehumidification section for the mixed gas is exemplified. Meanwhile, the dehumidification mechanism is also preferably disposed in the outer cylinder of the separation membrane module or separation tower and on a gas supply side thereof, as described above. It is more preferable that both the former and the latter are disposed in the recovery system from the viewpoint of completely performing dehumidification.

The dehumidification tower as the dehumidification mechanism can be configured by disposing a granular material such as silica gel or zeolite therein. It is also possible to dispose a zeolite membrane on a tubular support in the dehumidification tower. In a case where a granular material such as silica gel or zeolite is disposed in the dehumidification tower, it is also possible to simultaneously perform a part or the entirety of the flame propagation suppression function by appropriately controlling the granule diameter.

Warming Mechanism

The warming mechanism may be a warming section for the mixed gas M, and may be, for example, a flow path through which a heat medium flows, which is installed in contact with an outer wall surface of the outer cylinder of the separation module or separation tower, may be a mechanism or the like that efficiently applies warm air to the outer wall surface of the outer cylinder, or may be a heating element that is directly wound around the outer wall surface of the outer cylinder.

The warming mechanism of the recovery system preferably includes a warm bath for warming the heat medium in addition to the flow path through which the heat medium flows. The warming mechanism of the recovery system preferably includes a heating element and a blowing mechanism such as a blower in addition to a mechanism for efficiently applying warm air to the outer wall surface of the outer cylinder of the separation module or separation tower. Further, the warming mechanism of the recovery system preferably includes, in addition to the heating element directly wound around the outer wall surface of the outer cylinder of the separation module or separation tower, a power source for supplying power to the heating element, a voltage converter, and the like.

In a flow path through which a heat medium flows, for example, in a case where water is used as the heat medium, a mechanism for warming/cooling water may be provided at a place different from the separation module or separation tower, to thereby adjust the temperature. In the case of a heating element directly wound around the outer wall surface, the heating element itself is preferably covered with a metal sheath or the like from the viewpoint of safety. Also in the recovery system, the separation module or separation tower is warmed using such a warming mechanism, whereby the separation membrane of the present invention can simultaneously realize higher separation performance and higher permeability.

More preferably, the dehumidification mechanism and the warming mechanism together have a function of lowering the relative humidity of the mixed gas immediately before being supplied to the separation membrane. This is because, for example, the relative humidity can be reduced in two stages by removing the water vapor of the mixed gas supplied by the dehumidification tower to some extent and then raising the temperature by the warming mechanism.

Flame Propagation Suppression Mechanism

The flame propagation suppression mechanism can be particularly suitably used when hydrogen is separated and recovered from a hydrogen-oxygen mixed gas or the like using the separation module or separation tower equipped with the separation membrane of the present invention. The flame propagation suppression mechanism is preferably installed at any place selected from the gas supply side, the gas permeation side, and the gas non-permeation side as a mechanism independent of the separation module or separation tower in the recovery system. As described above, the flame propagation suppression mechanism may be installed at any place selected from the gas supply side, the gas permeation side, and the gas non-permeation side in the outer cylinder of the separation module or separation tower.

In particular, the mixed gas before separation flows from the gas supply side, and therefore the ignition risk is the highest. Therefore, it is preferable to provide the flame propagation suppression mechanism on the gas supply side. That is, in the method for separating and recovering hydrogen of the present invention, it is preferable that the flame propagation suppression mechanism is provided, and the mixed gas M passes through the separation membrane after passing through the flame propagation suppression mechanism.

On the non-permeation side, a hydrogen-oxygen mixed gas having a decreased hydrogen concentration or an increased oxygen concentration flows. However, in this case, the flame propagation suppression mechanism is preferably provided on the non-permeation side because the hydrogen-oxygen mixed gas is not necessarily outside the detonation range or the explosion range. On the permeation side, a hydrogen-oxygen mixed gas having an increased hydrogen concentration or a decreased oxygen concentration flows. In general, since the flow of gases other than the recovery target gas to the permeation side cannot be completely avoided, the hydrogen-oxygen mixed gas also usually flows to the permeation side. Therefore, it is preferable to provide the flame propagation suppression mechanism on the permeation side.

The flame propagation suppression mechanism can be composed of a narrowed flow path (a flow path narrower than other portions), a metal sintered body, a mesh structure, or the like, and the former may be filled with granules having anti-explosion performance. The metal sintered body or the like is preferably made of a stainless steel material. The mesh structure preferably has a configuration in which metal meshes or the like are laminated. In the case of a configuration independent of the separation module used as the recovery system, a dry safety device, a backfire prevention device, a so-called flame arrester, or the like can also be applied.

Method for Separating and Recovering Hydrogen

The method for separating and recovering hydrogen using the separation membrane of the present invention is a method for separating and recovering hydrogen from a mixed gas M of hydrogen and a gas L1 by the separation membrane, the gas L1 having a larger dynamic molecular diameter than hydrogen.

The activation energy Ep(S) (kJ/mol) of the permeance P(S) (mol/($m^2 \cdot s \cdot Pa$)) of hydrogen through the separation membrane and the activation energy Ep(L) (kJ/mol) of the permeance P(L) (mol/($m^2 \cdot s \cdot Pa$)) of a gas L through the separation membrane satisfy Formula (1-II) described below, and

at least one temperature Tgm (°C) of the temperature of the mixed gas M and the temperature of the separation membrane satisfies Formula (IX) described below.

$$|Ep(L)| < |Ep(S)|     (1\text{-}II)$$

$$45\ (°C) \leq Tgm\ (°C) \leq 200\ (°C)     (1\text{-}IX)$$

Here, the activation energy Ep(S) (kJ/mol) of the hydrogen permeance P(S) (mol/($m^2 \cdot s \cdot Pa$)) and the activation energy Ep(L) (kJ/mol) of the permeance P(L) (mol/($m^2 \cdot s \cdot Pa$)) of the gas L are derived at a temperature of 5°C or higher and 200°C or lower.

Further, in the method for separating and recovering hydrogen using the separation membrane of the present invention, preferably, in hydrogen having a relatively small dynamic molecular diameter and the gas L having a relatively large dynamic molecular diameter, hydrogen is separated and recovered using a separation membrane satisfying Formula (1-III) described below.

$$P(L) < P(S)     (1\text{-}III)$$

In the case of separating and recovering hydrogen gas from a mixed gas containing hydrogen gas, the separation membrane very preferably has such characteristics since selectivity $\alpha$ (S/L) = P(S)/P(L) of the hydrogen gas to the gas L can be improved at the same time while improving the permeance P(S) of the hydrogen gas by "warming separation" in which the mixed gas to be separated, the separation membrane, the separation membrane module, the hydrogen recovery system, and the like are warmed to an appropriate temperature.

The temperature of the mixed gas M during separation and recovery, particularly at least one of the temperature of the mixed gas or the temperature Tgm of the separation membrane, is 45°C or higher and 200°C or lower. Since the separation membrane of the present invention can be suitably used for the application of separating and recovering hydrogen gas from a hydrogen-oxygen mixed gas (hydrogen detonating gas) having a ratio of hydrogen:oxygen = 2:1, 200°C or lower is appropriate from the viewpoint of safety. According to the studies of the present inventors, in order to increase the permeance of hydrogen gas in an appropriate range, the temperature of the mixed gas or the temperature Tgm of the separation membrane was appropriately 45°C or higher. Therefore, the lower limit of the temperature range of the temperature of the mixed gas or the temperature Tgm of the separation membrane is 45°C or higher, preferably 51°C or higher, more preferably 60°C or higher, even more preferably 70°C or higher, and most preferably 80°C or higher. The upper limit of the temperature range is 200°C or lower, preferably 150°C or lower, more preferably 140°C or lower, even more preferably 130°C or lower, and most preferably 120°C or lower, from the viewpoint of safety. The most preferable range of the temperature for separation and recovery is from 80°C to 120°C, in consideration of the energy for warming at the time of realization, the heat resistance of various constituent members, and the like together.

In the method for separating and recovering hydrogen using the separation membrane of the present invention, the temperature of the separation module or separation tower is within the temperature range in which the activation energies of the separation membrane are derived. Therefore, by setting the mixed gas to be separated, the separation membrane, the separation membrane module, the hydrogen recovery system, and the like to appropriate temperatures, the permeance of the hydrogen gas having a small dynamic molecular diameter is always larger than the permeance of the gas L having a relatively large dynamic molecular diameter under any one condition selected from their temperature ranges, the supply form of the separation target gas, the supply pressure of the gas, and the permeation-side pressure, and therefore, as described above, the selectivity $\alpha$ (S/L) = P(S)/P(L) of the hydrogen gas with respect to the gas L can be improved at the same time while improving the permeance P(S) of the hydrogen gas, which is very preferable.

In the method for separating and recovering hydrogen using the separation membrane of the present invention, it is preferable to supply the mixed gas to the separation membrane, the separation membrane module or separation tower while adjusting the pressure of the mixed gas according to the purpose.

Pressure $F_M$ of Mixed Gas M

Firstly, in a case where the differential pressure in the separation membrane is sufficiently secured in the separation and recovery process and the efficiency as the separation process is considered to be important, the pressure $F_M$ of the mixed gas to be supplied to the separation membrane, the separation membrane module or separation tower is preferably set to 0.0 MPa (G) or more and 0.2 MPa (G) or less by using the above-described booster pump or pressure release valve. That is, Formula (1-XI) described below is preferably satisfied.

$$0.0 \, (\text{MPa (G)}) \leq F_M \, (\text{MPa (G)}) \leq 0.2 \, (\text{MPa (G)}) \qquad (1\text{-XI})$$

In this case, the upper limit of the supply pressure (gauge pressure, hereinafter referred to as (G)) is preferably set to a pressure range in which flame extinction can be performed by the flame propagation suppression mechanism even in an unlikely event of ignition.

Meanwhile, the lower limit of the supply pressure is preferably set to a pressure at which the mixed gas can be supplied to the separation membrane, the separation membrane module or separation tower even when there is a pressure loss in the pipe or the like or other mechanisms. From this viewpoint, when the efficiency as the separation and recovery method is considered to be important, the upper limit of the pressure of the mixed gas to be supplied to the separation membrane, the separation membrane module or separation tower is preferably 0.18 MPa (G) or less, more preferably 0.16 MPa (G) or less, even more preferably 0.14 MPa (G) or less, and most preferably 0.12 MPa (G) or less. From this viewpoint, when the efficiency as the separation process is considered to be important, the lower limit of the pressure of the mixed gas to be supplied to the separation membrane, the separation membrane module or separation tower is preferably 0.01 MPa (G) or more, more preferably 0.02 MPa (G) or more, even more preferably 0.03 MPa (G) or more, and most preferably 0.04 MPa (G) or more.

Secondly, from the viewpoint of safety, it is preferable to avoid pressurizing the hydrogen-oxygen mixed gas as much as possible, and it is preferable to supply the hydrogen-oxygen mixed gas at a slightly increased pressure or at about ordinary pressure, and it is preferable to use a slightly pressurizing pump or a pressure release valve within a range in which such supply is possible. Therefore, in the method for separating and recovering hydrogen using the separation membrane of the present invention, when safety is considered to be important, the pressure of the mixed gas to be supplied to the separation membrane, the separation membrane module or separation tower is preferably 0.0 MPa (G) or more and 0.02 MPa (G) or less. That is, Formula (1-XII) described below is preferably satisfied.

$$0.0 \, (\text{MPa(G)}) \leq F_M \, (\text{MPa(G)}) \leq 0.02 \, (\text{MPa(G)}) \qquad (1\text{-XII})$$

The upper limit of the supply pressure in this case should be determined in consideration of pressure dependency in which the detonation power of the hydrogen detonating gas having a stoichiometric composition, in the hydrogen-oxygen mixed gas, rapidly increases with a pressure increase. Meanwhile, the lower limit of the supply pressure is preferably set to a pressure at which the mixed gas can be supplied to the separation membrane, the separation membrane module or separation tower even when there is a pressure loss in a pipe or the like or other mechanisms. From this viewpoint, when the safety and efficiency as the separation and recovery method are considered to be more important, the upper limit of the pressure of the mixed gas to be supplied to the separation membrane, the separation membrane module or separation tower is preferably 0.019 MPa (G) or less, more preferably 0.018 MPa (G) or less, even more preferably 0.017 MPa (G) or less, and most preferably 0.016 MPa (G) or less.

From this viewpoint, when the safety and efficiency as the separation and recovery method are considered to be more important, the lower limit of the pressure of the mixed gas to be supplied to the separation membrane, the separation membrane module or separation tower is preferably 0.001 MPa (G) or more, more preferably 0.002 MPa (G) or more, even more preferably 0.003 MPa (G) or more, and most preferably 0.004 MPa (G) or more.

In particular, in the method for separating and recovering hydrogen using the separation membrane of the present invention, it is preferable to reduce the pressure on the side of the separation membrane, the separation membrane module or separation tower through which the permeate gas flows. As described above, in the separation and recovery process, the process performance can be improved by sufficiently securing the differential pressure in the separation membrane, but excessive pressurization results in a rapid increase in detonation power of the hydrogen-oxygen mixed gas, and therefore, should be avoided as much as possible. In this case, a method of securing the differential pressure in the separation membrane portion by setting the supply gas to ordinary pressure or slightly increased pressure in consideration of pressure loss of a pipe or the like and setting the permeation-side pressure to a reduced pressure is most preferable from the viewpoint of achieving both separation efficiency and safety.

In the method for separating and recovering hydrogen using the separation membrane of the present invention, the upper limit of the permeation-side pressure is preferably -0.065 MPa (G) or less, more preferably -0.075 MPa (G) or less, even more preferably -0.085 MPa (G) or less, preferably lower than -0.9 MPa (G), and most preferably -0.095 MPa (G) or less. The lower limit of the permeation-side pressure is about -0.101 MPa (G).

Relative Humidity ($RH_M$) of Mixed Gas M

In the method for separating and recovering hydrogen using the separation membrane of the present invention, the relative humidity ($RH_M$) of the mixed gas to be supplied to the separation membrane, the separation membrane module or separation tower is preferably adjusted appropriately. The upper limit of the range is preferably 5% or less, more preferably 2.5% or less, even more preferably 1% or less, and most preferably 0.2% or less. The lower limit of the range is 0.0% or more, but excessive moisture removal is not necessarily required. The lower limit is preferably 0.05% or more, more preferably 0.08% or more, even more preferably 0.10% or more, and most preferably 0.15% or more.

That is, Formula (1-XIII) described below is preferably satisfied, and Formula (1-XIV) described below is particularly preferably satisfied.

$$0.0\ (\%) \leq RH_M\ (\%) \leq 5\ (\%) \qquad (1\text{-XIII})$$

$$0.0\ (\%) \leq RH_M\ (\%) \leq 0.2\ (\%) \qquad (1\text{-XIV})$$

In the method for separating and recovering hydrogen using the separation membrane of the present invention, it is preferable to perform adjustment so that a mixed gas is supplied, at an appropriate flow rate, to a membrane area of the separation membrane included in the separation module or separation tower.

As described above, in the present invention, by "warming separation" in which the mixed gas to be separated, the separation membrane, the separation membrane module, the hydrogen recovery system, and the like are warmed to an appropriate temperature, the selectivity $\alpha$ (S/L) = P(S)/P(L) of the hydrogen gas to the gas L can be improved at the same time while improving the permeance P(S) of the hydrogen gas, which is very preferable, and the membrane performance is basically improved with an increase in temperature.

Therefore, in the method for separating and recovering hydrogen of the present invention, it is preferable to perform warming so that at least one temperature Tgm (°C) of the temperature of the mixed gas M or the temperature of the separation membrane satisfies Formula (IX) described above.

As described above, by appropriately adjusting the supply pressure of the mixed gas, the permeation-side pressure, and the like, appropriate separation and recovery of hydrogen gas according to the purpose can be performed. Further, adjusting the flow rate of the supply gas is very preferable, since it is possible to separate and recover the hydrogen gas safely and highly efficiently with respect to the membrane area. For example, in the method for separating and recovering hydrogen using the separation membrane of the present invention, it is preferable to separate and recover hydrogen by adjusting the supply flow rate so that the hydrogen concentration on the permeation side is outside the explosion range.

For example, in the case of separating a hydrogen-oxygen mixed gas, particularly a hydrogen detonating gas having a stoichiometric composition (hydrogen:oxygen = 2:1), which can be suitably utilized in the separation and recovery method of the present invention, and recovering hydrogen, the supply gas is a gas falling within the explosion range and within the detonation range.

Meanwhile, in order to perform safe and highly efficient separation, it is preferable that a vacuum pump having a movable portion is disposed on the permeation side, and, as a result, the permeation-side pressure is a reduced pressure. However, it is preferable that the flow rate is adjusted so that the mixed gas composition on the permeation side is a composition outside the explosion range so as not to ignite due to static electricity or the like even when the mixed gas composition is sucked, particularly, by the vacuum pump having a movable portion and the pressure becomes ordinary pressure downstream (in the subsequent stage). In this case, the lower limit of the hydrogen concentration range in the hydrogen-oxygen mixed gas on the permeation side is preferably more than 95.8 vol%, more preferably 96.0 vol% or more, even more preferably 96.2 % or more, and most preferably 96.4 vol% or more, since it is required to be equal to or higher than the upper limit of the explosion range. Although the upper limit of the hydrogen concentration range in the hydrogen-oxygen mixed gas on the permeation side is ideally 100 vol% of hydrogen, the upper limit is, in practice, preferably 99.8 vol% or less, more preferably 99.6 vol% or less, and even more preferably 99.4 vol% or less. The upper limit is most preferably 99.2 vol% or less. By setting the hydrogen concentration range within such a range, a separation and recovery method that does not require excessive separation costs can be realized.

Furthermore, in the method for separating and recovering hydrogen using the separation membrane of the present invention, it is preferable to separate and recover hydrogen by adjusting the supply flow rate so that the hydrogen concentration is outside the detonation range on the side of the gas flowing through the non-permeation side of the separation membrane, the separation membrane module or separation tower. On the non-permeation side, a mechanism having a movable portion such as a vacuum pump does not need to be disposed in the recovery system, and a hydrogen-oxygen mixed gas at ordinary pressure to slightly increased pressure flows. Therefore, in order to perform safe and highly efficient separation, it is ideal to set the hydrogen concentration outside the explosion range, but it is possible to appropriately secure safety by setting the hydrogen concentration outside the detonation range. This is because, even in the event of ignition, the flame propagation suppression mechanism or the like can secure a sufficient flame extinction capability outside the detonation range. From such a viewpoint, the upper limit of the non-permeation-side hydrogen concentration needs to be equal to or lower than the lower limit of the detonation range.

Therefore, in the method for separating and recovering hydrogen using the separation membrane of the present invention, the upper limit of the hydrogen concentration on the side of the gas flowing through the non-permeation side of the separation membrane, the separation membrane module or separation tower, on which the mixed gas that has not permeated through the separation membrane flows, is preferably 15.5 vol% or less, more preferably 12.5 vol% or less, even more preferably 9.5 vol% or less, and most preferably 6.5 vol% or less. Ideally, the hydrogen concentration is set to 3.9 vol% or less, and in this case, the condition that the hydrogen concentration is equal to or lower than the lower limit of the explosion range of the hydrogen-oxygen mixed gas is satisfied.

Meanwhile, in order to excessively reduce the non-permeation-side hydrogen concentration, there is also a problem that it is necessary to secure an excessively large membrane area, and therefore, the lower limit of the concentration is preferably 2 vol% or more, more preferably 3 vol% or more, even more preferably 4 vol% or more, and most preferably 5 vol% or more.

In the separation and recovery method of the present invention, in the separation membrane module or separation tower equipped with the separation membrane, the gas flow is preferably a laminar flow in the entire region of the supply side, the permeation side, and the non-permeation side thereof. In particular, when the separation target gas is, for example, a hydrogen-oxygen mixed gas, it is preferable from the viewpoint of safety that the hydrogen concentration/oxygen concentration and the like in the mixed gas at each place can be easily determined. When the gas flow is a laminar flow, it is easier to determine the concentration and the like than when the gas flow is a turbulent flow. For example, by measuring the hydrogen concentration at a permeation-side outlet, the concentration at each place further upstream can be calculated with high accuracy.

From this viewpoint, on the supply side and the non-permeation side in the present invention, a situation in which the supply flow rate at a supply side inlet of the separation membrane module or separation tower is distributed as it is to a non-permeation side outlet (a situation in which no gas flows to the permeation side) is assumed, and the Reynolds number in this case is defined as "supply-side maximum Reynolds number" and used as an index of whether or not a laminar flow can be maintained. In addition, actually, the flow rate is reduced by the amount of flow out from the supply side to the permeation side, and the linear velocity of the flow from the supply-side inlet to the non-permeation-side outlet is reduced, so that the laminar flow can be maintained. Therefore, the supply-side maximum Reynolds number is an index that gives the largest Reynolds number, and, when the index is less than 2000, it can be determined that the flow of the mixed gas is reliably a laminar flow.

According to the studies of the present inventors, the upper limit of the supply-side maximum Reynolds number is preferably 1500 or less, more preferably 1000 or less, even more preferably 500 or less, and most preferably 250 or less. Meanwhile, when the supply-side maximum Reynolds number is extremely small, there is a possibility that an excessive pressure loss occurs. Therefore, the lower limit of the supply-side maximum Reynolds number is preferably 5 or more, more preferably 10 or more, even more preferably 20 or more, and most preferably 30 or more.

Thus, in the separation and recovery method of the present invention, it is preferable to supply the mixed gas M to the separation membrane module or separation tower equipped with the separation membrane so that the supply-side maximum Reynolds number is in the above range.

Meanwhile, on the permeation side in the present invention, a situation in which the permeation flow rate at the permeation-side outlet of the separation membrane module or separation tower starts to flow as it is from a separation starting point of the separation membrane (a situation in which the flow rate portion at the permeation-side outlet continues to flow constantly from the separation starting point to a separation end point of the separation membrane) is assumed, and the Reynolds number in this case is defined as "permeation-side maximum Reynolds number" and used as an index of whether or not a laminar flow can be maintained on the support side. In addition, actually, the flow rate of the flow on the permeation side gradually increases as it flows from the supply side in accordance with the flow direction, and the linear velocity of the flow at the permeation-side outlet increases, so that it becomes difficult to maintain a laminar flow. Therefore, the permeation-side maximum Reynolds number is an index that gives the largest Reynolds number, and, when the index is 2000 or less, it can be determined that the flow on the permeation side is reliably a laminar flow.

According to the studies of the present inventors, the upper limit of the permeation-side maximum Reynolds number is preferably 1500 or less, more preferably 1000 or less, even more preferably 500 or less, and most preferably 250 or less. Meanwhile, when the supply-side maximum Reynolds number is extremely small, there is a possibility that an excessive pressure loss occurs. Therefore, the lower limit of the supply-side maximum Reynolds number is preferably 5 or more, more preferably 10 or more, even more preferably 20 or more, and most preferably 30 or more.

Therefore, in the separation and recovery method of the present invention, it is preferable to supply the mixed gas M to the separation membrane module or separation tower equipped with the separation membrane so that the maximum Reynolds number falls within the above range.

The second aspect of the present invention relates to a separation and recovery method, a separation module or separation tower, and a hydrogen recovery system.

Separation and Recovery Method

The present invention relates to a method for separating and recovering hydrogen from a mixed gas M containing at least hydrogen and oxygen (hereinafter may be referred to simply as "mixed gas M"), characterized in that the temperature Tgm in the separation and recovery step satisfies Formula (2-I) described below.

$$45 \ (°C) \leq Tgm \ (°C) \leq 200 \ (°C) \qquad (2\text{-}I)$$

Here, Tgm is a temperature in the separation and recovery step, and specifically, is a temperature of the mixed gas, or a temperature of a separation membrane inside at least one of a separation module or a separation tower described in detail below.

Tgm preferably further satisfies Formula (2-II) described below.

$$70 \ (°C) \leq Tgm \ (°C) \leq 200 \ (°C) \qquad (2\text{-}II)$$

When Tgm is lower than 45°C, for example, in the case of separation and recovery by a separation membrane, the hydrogen permeation performance is poor, and it becomes difficult to achieve the effects of the present invention.

Meanwhile, higher Tgm is preferable since the permeance of hydrogen permeating the separation membrane increases. Tgm is more preferably 60°C or higher, even more preferably 70°C or higher, particularly preferably 80°C or higher, and most preferably 90°C or higher.

Meanwhile, the upper limit value of Tgm depends on the resistance such as heat resistance of the separation membrane in the case of separation and recovery using the separation membrane. Specifically, Tgm may be 200°C or lower, and the heat resistance of the separation membrane is secured and the flame extinction performance is also ensured.

From the above viewpoint, the upper limit value of Tgm is preferably 200°C or lower. For example, when an inorganic membrane is used as the separation membrane, the membrane can have sufficient resistance, and the structure of the connection portion of the members such as the separation membrane can also have resistance such as heat resistance.

The upper limit value is more preferably 150°C or lower. When the upper limit value is 150°C or lower, in the case of using an inorganic membrane as the separation membrane, long-term membrane denaturation of the separation membrane can be suppressed by removing water at the time of regeneration of the membrane. The upper limit value is even more preferably 120°C or lower. When Tgm is 120°C or lower, the flame extinction performance can be secured. From the above viewpoint, Tgm is particularly preferably 95°C or lower.

For example, in a case where an organic membrane is used as the separation membrane, the upper limit value of Tgm is preferably 100°C or lower from the viewpoint of preventing thermal deterioration of the organic membrane.

Separation Target Gas

The separation target gas in the present invention (second aspect) is a mixed gas M containing hydrogen and oxygen, and in particular, a mixed gas in which the composition ratio (volume ratio) of hydrogen to oxygen is 2:1 or more, with hydrogen in excess, can be suitably used.

The mixed gas M to be supplied to the separation and recovery step may be within an explosion range, or the mixed gas M may be within a detonation range. The explosion range of the mixed gas M includes a hydrogen-oxygen mixed gas having a hydrogen concentration of from 3.9 vol% to 95.8 vol%, and the detonation range is a range in which the hydrogen concentration is from 15.5 vol% to 92.6 vol%.

The mixed gas may be a wet gas, but is more preferably a dry gas. In particular, in the separation and recovery method using a separation membrane, when the amount of water vapor in the mixed gas M is small, the adsorption of water vapor to the membrane is suppressed, and the performance of the separation membrane can be sufficiently exhibited.

The method for separating and recovering hydrogen of the present invention (second aspect) is not particularly limited as long as the method is a technique that exhibits the effects of the present invention, and examples thereof include a cryogenic separation method, a pressure swing adsorption method (PSA method), and a method using a separation membrane. In the present invention, a method using a separation membrane is efficient and preferable.

Separation Membrane

The separation membrane that can be used in the present invention is not particularly limited as long as the effects of the present invention are exhibited, and may be an organic membrane or an inorganic membrane. Specific examples of the separation membrane include inorganic separation membranes such as ceramic membranes such as a zeolite membrane, a silica membrane, an alumina membrane, a zirconia membrane, and a titania membrane, and a carbon membrane; and organic separation membranes such as fluororesin membranes such as a polytetrafluoroethylene (PTFE) membrane and a polyvinylidene fluoride (PVDF) membrane, and polymer membranes such as a polyamide membrane, a cellulose acetate membrane, a polyimide membrane, and a polyethylene membrane.

As the structure, a separation capability essential for separating the mixed gas M, specifically, a portion having a separation activity (in other words, a portion having a separation capability of hydrogen and oxygen) may be a configuration necessary for exhibiting the function, and for example, a support function portion for maintaining the form as a membrane, a protection portion for maintaining the separation capability, and the like may be included. For example, a porous support is generally used as the support function portion for maintaining the shape as a membrane. In addition, a structure having a support function, a protection function, and a separation function, in which a portion having a separation capability such as zeolite is dispersed in a porous support for maintaining the form as a membrane, so that the separation section functions as a membrane and the portion having a separation capability is protected, can also be used.

Among these, from the viewpoint of hydrogen separation and recovery performance, a polyimide membrane or a polyamide membrane is preferable as the organic membrane, a membrane using zeolite is preferable as the inorganic membrane, a separation membrane in which a zeolite membrane is provided on a support is more preferable, and a surface-modified zeolite membrane is particularly preferable.

Polyimide Membrane and Polyamide Membrane

The polyimide constituting the polyimide membrane is not particularly limited as long as the effects of the present invention are exhibited, and for example, the polyimide can be obtained by condensation polymerization of an m-phenylenediamine compound and a tetracarboxylic dianhydride. The polyimide can be synthesized by an ordinary method.

The polyamide constituting the polyamide membrane is not particularly limited as long as the effects of the present invention are exhibited, and for example, the polyamide can be obtained by condensation polymerization of an m-phenylenediamine compound and a dicarboxylic acid compound. The polyamide can be synthesized by an ordinary method.

The molecular weight of the polyimide and the polyamide is preferably 10000 or more and 1000000 or less, more preferably 15000 or more and 500000 or less, and even more preferably 20000 or more and 200000 or less in terms of a weight average molecular weight.

As a method for producing a polyimide membrane and a polyamide membrane, for example, the polyimide membrane or the polyamide membrane can be obtained by applying a polyimide or a polyamide together with a solvent or the like onto a gas-permeable support layer bearing mechanical strength, and forming a thin membrane.

Zeolite Membrane

As described above, the zeolite membrane preferably has a structure in which the zeolite membrane is present on a support, and more preferably is a surface-modified zeolite membrane. More specifically, the composite separation membrane described below is preferable.

Composite Separation Membrane

The separation membrane of the present invention is not particularly limited as long as it has a separation capability of oxygen and hydrogen, but as a specific structure, for example, as shown in FIG. 1, a composite separation membrane 100 having a support 101, a first separation section 103 disposed in contact with the support, and a second separation section 104 having an amorphous structure disposed in contact with the first separation section without being in contact with the support is preferable. Hereinafter, the composite separation membrane will be described in detail.

Support

The support is the same as the support of the separation membrane laminated body in the first aspect. Specifically, the pores with the average pore diameter and the like at the upper end portion of the inorganic porous support, the average thickness (wall thickness) of the inorganic porous support, the porosity of the inorganic porous support, and the polishing with a file or the like are also the same as those in the first aspect.

The shape of the inorganic porous support is not particularly limited as long as the separation target mixed gas M can be effectively separated, and specific examples thereof include a flat plate shape, a tubular shape, a honeycomb shape having a large number of cylindrical, columnar, or prismatic holes, and a monolithic shape. In the present invention, it is preferable to form zeolite in a membrane shape on the inorganic porous support, i.e., at the upper end portion of the support. The upper end portion of the inorganic porous support is defined as a surface on which the first separation section is formed, and means a surface portion of the inorganic porous support on which the zeolite is crystallized. The surface may be any surface of each shape, and may be a plurality of surfaces. For example, in the case of a cylindrical tubular support, the surface may be an outer surface or an inner surface, or may be both the outer surface and the inner surface in some cases. In this case, both surfaces are the upper end portions.

First Separation Section

The configuration of the first separation section is the same as that of the first separation section in the separation membrane laminated body of the first aspect, and thus the description thereof is omitted here.

The shape of the zeolite single-component separation structure in which only the zeolite membrane (first separation section) is formed on the support is not particularly limited, and any shape such as a tubular shape, a hollow fiber shape, a monolithic shape, or a honeycomb shape can be employed. Its size is not particularly limited, and for example, in the case of the tubular shape, the length is usually 2 cm or more and 200 cm or less, the inner diameter is 0.05 cm or more and 2 cm or less, and the thickness is 0.5 mm or more and 4 mm or less, which is practically preferable. The inner diameter as used herein is an equivalent circle diameter. One of the separation functions of the zeolite single-component separation structure is separation as a molecular sieve, and gas molecules having a size equal to or larger than an effective pore diameter of the zeolite used and a gas having a size equal to or smaller than the effective pore diameter can be suitably separated. There is no upper limit for the molecules to be separated, but the size of the molecules is usually about 100 Å or less.

The zeolite mainly constituting the zeolite single-component separation structure is the same as the zeolite described in the first aspect, and the description thereof is omitted here.

Method for Producing Single-Component Separation Structure

The method for producing the single-component separation structure is the same as that described in the first aspect, and the description thereof is omitted here.

Second Separation Section

The second separation section formed at the upper end portion of the first separation section is also the same as that in the first aspect, and thus the description thereof is omitted here.

In the separation membrane of the present invention, as described above, an amorphous layer having smaller pores is formed at the upper end portion of the single-component separation structure (for example, zeolite single-component separation structure), whereby separation performance that cannot be exhibited by the function of the zeolite pore diameter is obtained. In the separation membrane of the present invention, the density of an amorphous layer of the composite separation membrane is preferably higher than that of the zeolite of the base. When the ratio of the density of the amorphous layer to the density of the zeolite of the base is defined as relative density, the separation performance of the amorphous layer is higher than that of the zeolite by increasing the relative density, and practically sufficient separation performance is easily obtained.

Meanwhile, by setting the relative density to a certain value or less, the porosity of the amorphous layer becomes appropriately dense, the pores are not excessively narrowed to increase the permeation resistance, and the permeance of the expected permeate component is not decreased, which is preferable. When the known amorphous silica (density = 2.2 g/cm$^3$) and the CHA-type zeolite single-component separation structure are assumed, the relative density is 1.46. Meanwhile, in consideration of low permeation performance reported as that of an amorphous silica separation membrane, a relative density of 1.46 is considered to be the upper limit. Therefore, the relative density is 1.46 or less, preferably 1.30 or less, and more preferably 1.15 or less.

The thickness of the second separation section is the same as that in the first aspect, and thus the description thereof is omitted here.

Method for Producing Composite Separation Membrane

The method for producing the composite separation membrane is the same as the method for producing the separation membrane laminated body in the first aspect, and the description thereof is omitted here.

The present separation membrane can be suitably used for separating and recovering hydrogen from a mixed gas M containing hydrogen and oxygen, and is the same as that described in the first aspect. Therefore, the detailed description is omitted here.

In a case where any of a zeolite membrane, a silica membrane, and a carbon membrane is formed on a tubular support, the inner diameter and the like of the support are also the same as those described in the first aspect, and the method of supplying the supply gas and the like are also the same as those described in the first aspect. Therefore, the description is omitted here.

Pressure $F_M$ of Mixed Gas M

The pressure $F_M$ of the mixed gas M in the second aspect is the same as the pressure $F_M$ of the mixed gas M in the first aspect, and the description thereof is omitted here.

The relative humidity ($RH_M$) of the mixed gas M in the method of separating and recovering hydrogen using the separation membrane of the present invention is also the same as that described in the first aspect, and the description thereof is omitted here.

The mixed gas M is preferably supplied so that the supply-side maximum Reynolds number and/or the permeation-side maximum Reynolds number are/is 5 or more and 2000 or less.

Further, the mixed gas M is preferably passed through the flame propagation suppression mechanism and then passed through the separation membrane to separate and recover hydrogen. By adopting such an aspect, the flame propagation can be suppressed more easily.

Separation Module or Separation Tower

The separation module or separation tower of the present invention separates and recovers hydrogen from a mixed gas M containing at least hydrogen and oxygen.

The separation module or separation tower of the present invention is characterized by including a temperature adjustment mechanism. The temperature adjustment mechanism can warm the mixed gas M, the separation module, and the separation tower, and can safely and efficiently separate and recover hydrogen from the hydrogen-oxygen mixed gas M.

Temperature Adjustment Mechanism

The temperature adjustment mechanism may be, for example, a tubular flow path through which a heat medium flows, and can be installed in contact with an outer wall surface of an outer cylinder of the separation module or separation tower. The temperature adjustment mechanism may be a mechanism or the like that efficiently applies warm air to the outer wall surface of the outer cylinder, or may be a heating element that is directly wound around the outer wall surface of the outer cylinder. Especially, a tubular flow path through which a heat medium flows is preferable. For example, in a case where water is used as the heat medium, a mechanism for warming/cooling water may be provided at a place different from the separation module or separation tower, to thereby adjust the temperature.

In the case of a heating element directly wound around the outer wall surface, the heating element itself is preferably covered with a metal sheath or the like from the viewpoint of safety. The separation module or separation tower is warmed using such a warming mechanism, whereby the separation membrane of the present invention can simultaneously realize higher separation performance and higher permeability.

The temperature adjustment mechanism may include a heat insulation section, and the heat insulation section can keep the temperature of the warmed mixed gas M. Therefore, the presence of the heat insulation section makes it possible to suppress energy consumption for warming and to improve the thermal uniformity of a portion that needs to be warmed. Furthermore, the heat insulation section can facilitate the setting of the temperature Tos of the separation module or separation tower, which will be described in detail below, to a desired range.

The temperature Tos of the separation module or separation tower preferably satisfies Formula (2-VII) described below.

$$51 \; (°C) \leq Tos \; (°C) \leq 220 \; (°C) \qquad (2\text{-VII})$$

Tos is preferably 51°C or higher, because the hydrogen permeation performance is excellent in separation and recovery, and the effects of the present invention are easily achieved. This configuration is particularly preferable when separation and recovery are performed using a separation membrane.

Tos preferably further satisfies Formula (2-VIII) described below.

$$70 \; (°C) \leq Tos \; (°C) \leq 200 \; (°C) \qquad (2\text{-VIII})$$

Higher Tos is preferable since the permeance of hydrogen permeating the separation membrane increases. Tos is more preferably 60°C or higher, even more preferably 70°C or higher, particularly preferably 80°C or higher, and most preferably 90°C or higher.

Meanwhile, the upper limit value of Tos depends on the resistance such as heat resistance of the separation membrane, for example, when the separation membrane is used. Specifically, Tos may be 220°C or lower, and the heat resistance of the separation membrane is secured and the flame extinction performance is also ensured.

From the above viewpoint, the upper limit value of Tos is preferably 200°C or lower.

Also, for example, when an inorganic membrane is used as the separation membrane, the membrane can have sufficient resistance, and the structure of the connection portion of the members such as the separation membrane can also have resistance such as heat resistance.

The upper limit value is more preferably 150°C or lower. When the upper limit value is 150°C or lower, in the case of using an inorganic membrane as the separation membrane, long-term membrane denaturation of the separation membrane can be suppressed by removing water at the time of regeneration of the membrane. The upper limit value is even more preferably 120°C or lower. When Tos is 120°C or lower, the flame extinction performance can be secured. From the above viewpoint, Tos is particularly preferably 95°C or lower.

For example, in a case where an organic membrane is used as the separation membrane, the upper limit value of Tos is preferably 100°C or lower from the viewpoint of preventing thermal deterioration of the organic membrane.

The separation module or separation tower of the present invention is preferably equipped with a separation membrane. The separation membrane is as described above, and the same separation membrane can be suitably used in the separation module or separation tower of the present invention. In particular, as the separation membrane, an inorganic membrane is preferable in view of resistance such as heat resistance, and a zeolite membrane is preferable in view of permeation performance. Most preferably, the separation membrane has a surface-modified zeolite membrane.

In a case where the separation membrane has a tubular support, the inner diameter $\varphi i$ (mm) of the support preferably satisfies Formula (2-IX) described below.

$$6 \leq \varphi i \leq 16 \qquad (2\text{-IX})$$

When Formula (IX) is satisfied, the strength of the separation module or separation tower is sufficiently achieved, and for example, even when ignition and subsequent detonation occur, a certain degree of resistance can be achieved.

Further, the separation membrane can be suitably applied to a separation and recovery process by equipping the separation membrane on an outer cylinder to form a module and constituting the separation membrane as a separation module or a larger separation tower.

When a mixed gas M is separated using a separation module or separation tower equipped with the separation membrane of the present invention, the gas flow in the separation module or separation tower is preferably a laminar flow. In particular, in the separation of a mixed gas of hydrogen and oxygen, it is desired to accurately determine the composition ratio of hydrogen to oxygen with respect to the gas flow direction in the mixed gas M (supply gas), the mixed gas M (permeate gas) after permeating the separation membrane, and the portion (non-permeate gas) of the mixed gas M that has not permeated the separation membrane. This is to determine whether the flowing hydrogen-oxygen mixed gas is in the explosion range or the detonation range, with respect to the mixed gas flow direction. In general, the viscosity of a gas increases with an increase in temperature, and therefore, when other conditions are the same, the mixed gas flow is more likely to be laminar at a higher temperature. From this viewpoint, it is very preferable to perform warming separation within an appropriate temperature range using the separation membrane and the separation module or separation tower of the present invention, because there is a synergistic effect that the mixed gas flow in the separation module or separation tower can be kept to be laminar, in addition to improvement of both the permeation performance and the separation performance of the separation membrane.

Further, from this viewpoint, the lower limit of the distance between the inner wall of the separation membrane module or separation tower and the surface of the separation membrane closest to the inner wall is preferably 0.1 cm or more in consideration of the assembly tolerance required at the time of actual module production, and the like. The distance is more preferably 0.2 cm or more, even more preferably 0.5 cm or more, and most preferably 1 cm or more.

Meanwhile, it is preferable to set the distance between the inner wall of the separation membrane module or separation tower and the surface of the separation membrane closest to the inner wall within a proper range, because a laminar flow is easily maintained as the flow of the mixed gas. From this viewpoint, the upper limit of the distance is preferably 50 cm or less, more preferably 25 cm or less, even more preferably 10 cm or less, and most preferably 2 cm or less.

As the material for the outer cylinder portion constituting the separation module or separation tower, any material can be selected. The material described in the first aspect can be used, and the suitable range is also the same.

The outer cylinder preferably has other functions additionally, preferably includes a dehumidification mechanism inside, also preferably includes a warming mechanism, and also preferably has a flame propagation function.

Dehumidification Mechanism

The dehumidification mechanism is the same as that in the first aspect, including the suitable range, and the description thereof is omitted here.

The combined use of the dehumidification mechanism and the warming mechanism is also as described in the first aspect.

Flame Propagation Suppression Mechanism

The flame propagation suppression mechanism is also the same as that described in the first aspect, and the description thereof is omitted here.

In a system for separating and recovering hydrogen from a mixed gas using the separation membrane and the separation module or separation tower of the present invention, the type of the mixed gas containing hydrogen is not particularly limited. Here, the mixed gas contains oxygen, and preferably contains a gas selected from at least one of carbon dioxide, argon, nitrogen, or methane.

More preferably, the mixed gas contains oxygen in addition to hydrogen to be recovered, and composed of a gas selected from carbon dioxide, argon, nitrogen, and methane except for impurities. Even more preferably, the mixed gas is composed of a gas selected from oxygen and nitrogen in addition to hydrogen to be recovered. Most preferably, the mixed gas is composed of oxygen in addition to hydrogen to be recovered. The mixed gas may be a wet gas, but is more preferably a dry gas.

In the system for separating and recovering hydrogen from a mixed gas using the separation membrane, the separation module or separation tower of the present invention, the temperature Tgm of at least one of the separation module or the separation tower for the mixed gas is preferably 45°C or higher and 200°C or lower.

In particular, since the separation membrane of the present invention can be suitably used for the application of separating and recovering hydrogen from a hydrogen-oxygen mixed gas (hydrogen detonating gas) having a ratio of hydrogen:oxygen = 2:1, the temperature is preferably set to 200°C or lower from the viewpoint of safety. According to the studies of the present inventors, in order to particularly increase the permeance of hydrogen gas in an appropriate range, the temperature of the separation module or separation tower was appropriately 45°C or higher. However, in addition to this, it was effective to increase the temperature of the mixed gas to be separated, for example, by preheating the mixed gas or the like, as is the case with the separation module or separation tower. Therefore, the lower limit of the temperature range of at least one of the mixed gas, the separation module or separation tower is 45°C or higher, preferably 51°C or higher, more preferably 60°C or higher, even more preferably 70°C or higher, and most preferably 80°C or higher.

The upper limit of the temperature range of at least one of the mixed gas, the separation module or separation tower is 200°C or lower, preferably 150°C or lower, more preferably 140°C or lower, even more preferably 130°C or lower, and most preferably 120°C or lower.

According to the studies of the present inventors, the temperature is preferably in a range of from 85°C to 115°C for the separation of a hydrogen-oxygen mixed gas having a stoichiometric composition of hydrogen:oxygen = 2:1, and it was most preferable and effective to preheat the separation target mixed gas, warm the outer cylinder portion of the separation module, and perform warming separation.

Particularly in a case where water was used as the heat medium of the warming mechanism, it was most preferable and effective to preheat the separation target mixed gas to from 85°C to 95°C, and also to warm the outer cylinder portion of the separation module to perform warming separation.

Hydrogen Recovery System

The hydrogen recovery system of the present invention is a hydrogen recovery system that separates and recovers hydrogen from a mixed gas M containing at least hydrogen and oxygen, characterized in that the hydrogen recovery system includes a separation section, and the separation section includes a temperature adjustment mechanism. In the present invention, the separation module or separation tower described above is preferably used as the separation section.

The temperature adjustment mechanism is the same as that described above for the separation module or separation tower. That is, the temperature adjustment mechanism may be a tubular flow path through which the heat medium flows, and may include a heat insulation section. The heat insulation section can maintain the temperature of the warmed mixed gas M.

In the hydrogen recovery system of the present invention, the temperature Tgm of the separation section preferably satisfies Formula (2-I) described below.

$$45\ (°C) \leq Tgm\ (°C) \leq 200\ (°C) \qquad (2\text{-}I)$$

Here, Tgm is a temperature of the separation section, and specifically, is a temperature of the mixed gas, or a temperature of a separation membrane inside at least one of a separation module or a separation tower.

Tgm preferably further satisfies Formula (2-II) described below.

$$70\ (°C) \leq Tgm\ (°C) \leq 200\ (°C) \qquad (2\text{-}II)$$

The separation section in the hydrogen recovery system of the present invention preferably includes a separation membrane. As described above, the separation membrane is particularly preferably an inorganic membrane in view of resistance such as heat resistance, and is preferably a zeolite membrane in view of permeation performance.

The hydrogen recovery system of the present invention preferably includes a mechanism for adjusting the pressure of the mixed gas to be supplied to the separation membrane, the separation membrane module or separation tower according to the purpose. FIG. 4 illustrates a schematic view of an apparatus (hydrogen recovery system) used for separating the mixed gas M of the present invention.

Pressurization Mechanism

The pressurization mechanism is the same as that described in the first aspect, and the description thereof is omitted here.

Decompression Mechanism

The hydrogen recovery system of the present invention preferably includes a decompression mechanism on the downstream side of the separation module or separation tower. The details are as described in the first aspect, and are omitted here. The vacuum pump is also the same as that described in the first aspect.

The recovery system of the present invention preferably has other functions additionally, preferably includes a dehumidification mechanism inside, also preferably includes a warming mechanism, and also preferably has a flame propagation function.

Dehumidification Mechanism

The dehumidification mechanism is the same as that described in the first aspect, and thus the description thereof is omitted here.

Warming Mechanism

The warming mechanism is also the same as that described in the first aspect, and thus the description thereof is omitted here.

Flame Propagation Suppression Mechanism

The flame propagation suppression mechanism is the same as that described in the first aspect, and thus the description thereof is omitted here.

When the hydrogen recovery system of the present invention includes a separation module or separation tower equipped with the separation membrane, as described above, the distance between the inner wall of the separation membrane module or separation tower and the surface of the separation membrane closest to the inner wall is preferably 0.1 cm or more and 50 cm or less. When the distance is 0.1 cm or more, the assembly tolerance required at the time of producing the module is widened, whereas when the distance is 50 cm or less, it is easy to maintain the laminar flow of the gas flow. From the above viewpoint, the distance is more preferably 0.2 cm or more, even more preferably 0.5 cm or more, and most preferably 1 cm or more. The distance is more preferably 25 cm or less, even more preferably 10 cm or less, and most preferably 2 cm or less.

In a case where the separation membrane includes a tubular support, the inner diameter $\varphi i$ (mm) of the support is preferably 6 mm or more and 16 mm or less. That is, Formula (2-IX) described below is preferably satisfied.

$$6 \leq \varphi i \leq 16 \quad (2\text{-IX})$$

When Formula (2-IX) is satisfied, the strength of the separation module or separation tower is sufficiently achieved, and for example, even when ignition and subsequent detonation occur, a certain degree of resistance can be achieved.

In the method for separating and recovering hydrogen using the separation membrane of the present invention, it is preferable to use a separation membrane in which the activation energy $Ep(S)$ (kJ/mol) of the hydrogen permeance $P(S)$ (mol/(m$^2$·s·Pa)) derived at a temperature of 5°C or higher and 200°C or lower and the activation energy $Ep(L)$ (kJ/mol) of the permeance $P(L)$ (mol/(m$^2$·s·Pa)) of a gas L (e.g., oxygen) through the separation membrane derived within the same temperature range satisfy $|Ep(L)| < |Ep(S)|$.

Further, in the method for separating and recovering hydrogen using the separation membrane of the present invention, preferably, in hydrogen having a relatively small dynamic molecular diameter and the gas L having a relatively large dynamic molecular diameter, hydrogen is separated and recovered using a separation membrane also satisfying $0 < Ep(L) < Ep(S)$. In the case of separating and recovering hydrogen gas from a mixed gas M containing hydrogen gas, the separation membrane very preferably has such characteristics since selectivity $\alpha$ (S/L) = P(S)/P(L) of the hydrogen gas to the gas L can be improved at the same time while improving the permeance P(S) of the hydrogen gas by "warming separation" in which the mixed gas M to be separated, the separation membrane, the separation membrane module, the hydrogen recovery system, and the like are warmed to an appropriate temperature.

Examples

The present invention will be described in more detail below by way of Examples and Comparative Examples, but the invention is not limited to the following Examples.

Example 1-1

The following reaction mixture for hydrothermal synthesis was prepared.

To a mixture of 7.2 g of a 1 mol/L-NaOH aqueous solution, 28.8 g of a 1 mol/L-KOH aqueous solution, and 570.05 g of water, 0.975 g of aluminum hydroxide (containing 53.5 mass% of Al2O3, available from Aldrich) was added, and dissolved with stirring to prepare a transparent solution. To the solution, 12.15 g of a TMADAOH (N,N,N-trimethyl-1-adamantylammonium hydroxide) aqueous solution (containing 25 mass% of TMADAOH, available from SACHEM, Inc.) was added as an organic template, and 54 g of colloidal silica (Snowtex-40 available from Nissan Chemical Corporation) was further added, followed by stirring for 30 minutes, to prepare a reaction mixture.

The composition (molar proportions) of this reaction mixture is $SiO_2/Al_2O_3/NaOH/KOH/H_2O/TMADAOH$ = 1/0.014/0.02/0.08/100/0.04, and $SiO_2/Al_2O_3$ = 70.

An alumina tube (outer diameter: 12 mm, inner diameter: 9 mm) was cut to a length of 400 mm and used as an inorganic porous support.

A CHA-type zeolite crystallized by hydrothermal synthesis at 160°C for 2 days in a gel composition (molar proportions) of $SiO_2/Al_2O_3/NaOH/KOH/H_2O/TMADAOH$ = 1/0.033/0.1/0.06/20/0.07 was used as seed crystals. The support was immersed for 30 seconds in a dispersion liquid prepared by dispersing 1.0 mass% of the seed crystals in water, and then pulled up to support the seed crystals on an upper end portion of the inorganic porous support, and the support on which the seed crystals were supported was used for hydrothermal synthesis.

The support to which the seed crystals were attached in this manner and two supports to which seed crystals were attached in the same manner, i.e., a total of three supports were immersed in the vertical direction in a Teflon (trade name) inner cylinder containing the reaction mixture, an autoclave was sealed, and the supports were heated at 180°C for 18 hours under autogenous pressure in a stationary state, thereby performing crystal growth of zeolite at the upper end portion of the inorganic porous support by hydrothermal synthesis. Thereafter, cooling was performed, and the zeolite single-component separation structure was taken out from the reaction mixture, washed, and then dried at 100°C for 2 hours or more.

The zeolite single-component separation structure before template firing was fired in an electric furnace at 500°C for 5 hours. The mass per unit area of the CHA-type zeolite crystallized at the upper end portion of the support, which was determined from the difference between the mass of the zeolite single-component separation structure after firing and the mass of the support, was 60 g/m$^2$. The XRD of the generated membrane was measured, and it was found that a CHA-type zeolite was generated. In the X-ray diffraction pattern, the peak intensity near $2\theta$ = 9.6° was 2.5 times the peak intensity near $2\theta$ = 20.8°.

The CHA-type zeolite single-component separation structure with a length of 400 mm obtained by such a synthesis method was divided into two parts having a length of 200 mm. The two parts were installed in series to prepare a sample having a total length of 400 mm. By supplying, at 100°C, a supply gas to a reaction tube (FIG. 3) where the CHA-type zeolite single-component separation structure was installed at 50 ml/min via bubblers respectively containing water vapor and polymethoxysiloxane (MKC (trade name) silicate, MS-51, available from Mitsubishi Chemical Corporation), which is a methyl silicate oligomer, as a silica source, using the apparatus illustrated in FIG. 2, the upper end portion of the CHA-type zeolite single-component separation structure was treated (surface modification for forming the second separation section) to prepare a composite separation membrane. In the supply of each raw material by the gases from the bubblers, nitrogen gas was used for the supply of water vapor, and helium was used for the supply of the silica source. The reaction tube is a stainless steel tube having an inner diameter of 15 mm, an outer diameter of 20 mm, and a full length of 440 mm, both ends thereof can be connected to a gas supply pipe by flanges, and a gas can flow through the reaction tube. In the treatment, only the gas accompanying water vapor was supplied and allowed to flow through the reaction tube for the first 1 hour (first treatment stage), the gas accompanying water vapor and the gas accompanying and carrying polymethoxysiloxane were mixed and supplied, and allowed to flow in the reaction tube for the next 2 hours (second treatment stage), and only the gas accompanying water vapor was supplied and allowed to flow in the reaction tube for the next 1 hour (third treatment stage). After the treatment process, the inside of the reaction tube was allowed to cool, and then the composite separation membrane was taken out and further treated by heating at 130°C for 1 hour (fourth treatment stage). Two composite separation membranes each having a length of 200 mm were provided. One of the membranes was mounted in a separation membrane module as a membrane having a length of 17.5 cm, and preparation for a gas separation experiment was completed.

The resultant composite separation membrane (surface-modified CHA-type zeolite membrane/surface-modified CHA membrane) was modularized. The separation module had a cylinder shape with an inner diameter of 16 mm φ, and was configured so that a supply flow path for a separation target gas, having a width of 2 mm on one side, was formed between the separation module and the modified surface of the equipped composite separation membrane having an outer shape of 12 mm φ. The length of an exposed surface of the composite separation membrane in the separation module was 175 mm for binding to a connection pipe portion for gas flow.

The measurement temperature Tam (°C) was set to 16°C, 50°C, 70°C, 80°C, and 90°C, and the membrane performance evaluation of the composite separation membrane (surface-modified CHA-type zeolite membrane/surface-modified CHA membrane) and the hydrogen/oxygen separation experiment were performed. Based on the results, the activation energy Ep(H$_2$) (kJ/mol) of the hydrogen permeance P(H$_2$) (mol/(m$^2$·s·Pa)) and the activation energy Ep(O$_2$) of the oxygen permeance P(O$_2$) (mol/(m$^2$·s·Pa)) were derived.

In the experiment, the separation target gas was a mixed gas of hydrogen and oxygen that was supplied from a gas cylinder, and hydrogen was supplied at 133.3 ml/min and oxygen was supplied at 66.7 ml/min (a total of 200.0 ml/min), to the separation membrane and the separation membrane module. The separation target mixed gas had a stoichiometric composition of hydrogen:oxygen = 2:1. This is based on the assumption that hydrogen and oxygen are generated by total decomposition of water in an artificial photosynthesis plant or the like equipped with a photocatalyst material.

FIG. 4 illustrates a schematic view of a measurement system used for the evaluation. The measurement system can also be used as a hydrogen recovery system in an artificial photosynthesis plant or the like when the scale is enlarged. In this case, the pressurization mechanism A was not used, and a dehumidification module equipped with silica gel was used as the dehumidification mechanism A. As a result, the relative humidity of the mixed gas introduced into the separation module was 0.1% or less under all conditions. The temperature adjustment mechanism A was not used, and as the flame propagation suppression mechanism A, one in which a filled pipe obtained by filling zircon beads in a pipe and a rupture plate were bound by an elbow pipe was used. A water tank capable of temperature adjustment was used as the temperature adjustment mechanism B, and the separation module was installed therein, whereby the membrane performance evaluation of the composite separation membrane (surface-modified CHA-type zeolite membrane/surface-modified CHA membrane) and the hydrogen/oxygen separation experiment were performed at 16°C, 50°C, 70°C, 80°C, and 90°C. The dehumidification mechanism B, a combustible propagation suppression mechanism B, and the like were not integrated with the separation module.

The supply pressure was set to 20 kPa (G) by controlling the pressure release valve as the pressurization mechanism B in the drawing. Further, a scroll pump having a maximum exhaust speed of 580 L/min was provided as the decompression mechanism on the permeation side of the separation membrane module, and the permeation-side pressure was reduced to about -99 kPa (G) by the scroll pump.

The membrane performance (separation module performance) at each temperature is shown in Table 1, and the process performance as a hydrogen recovery system is shown in Table 2. Further, FIG. 5 illustrates the results of an Arrhenius plot from which the activation energy of each of the hydrogen permeance and the oxygen permeance derived from the experiment was derived.

[Table 1]

Table 1

| Temperature | Hydrogen permeance | Activation energy of hydrogen permeance | Oxygen permeance | Activation energy of oxygen permeance | Separation factor |
|---|---|---|---|---|---|
| (°C) | (mol/(m$^2$·sec·Pa)) | (kJ/mol) | (mol/(m$^2$·sec·Pa)) | (kJ/mol) | |
| Tam | P(S)=P(H$_2$) | Ep(S)=Ep(H$_2$) | P(L)=P(O$_2$) | Ep(L)=Ep(O$_2$) | $\alpha$(S/L)=$\alpha$(H$_2$/O$_2$) |
| 16 | 1.03E-07 | | 2.67E-09 | | 38.5 |
| 50 | 1.54E-07 | | 3.08E-09 | | 50.1 |
| 70 | 1.92E-07 | 8.9 | 3.73E-09 | 5.5 | 51.5 |
| 80 | 2.03E-07 | | 3.97E-09 | | 51.1 |
| 90 | 2.17E-07 | | 4.23E-09 | | 51.3 |

[Table 2]

Table 2

| | Temperature (Tos or Tgm) | Supply flow rate | Permeation-side flow rate | Permeation-side hydrogen concentration | Hydrogen recovery rate | Non-permeation-side flow rate | Non-permeation-side hydrogen concentration |
|---|---|---|---|---|---|---|---|
| | (°C) | (ml/min) | (ml/min) | (%) | (%) | (ml/min) | (%) |
| Example 1-1 | 16 | 200 | 60.9 | 98.2 | 44.9 | 139.1 | 52.8 |
| | 50 | | 82.9 | 98.4 | 61.1 | 117.2 | 44.2 |
| | 70 | | 95.8 | 98.2 | 70.5 | 104.2 | 37.7 |
| | 80 | | 100.7 | 98.1 | 74.1 | 99.3 | 34.8 |
| | 90 | | 104.1 | 98.0 | 76.5 | 95.9 | 32.7 |

From these results, as shown in Table 1, the following membrane performance was found in a range of 16 (°C) ≤ Tam (°C) ≤ 90 (°C).

Warming from 16°C to 90°C approximately doubled the hydrogen permeance P(H$_2$) and improved the membrane performance or the separation module performance.

Meanwhile, warming from 16°C to 90°C increased the oxygen permeance P(O$_2$) by only about 1.6 times.

As a result, warming from 16°C to 90°C increased the separation performance $\alpha$ between hydrogen and oxygen

(H$_2$/O$_2$) by about 1.3 times, and improved the membrane performance or the separation module performance.

The activation energy Ep(H$_2$) of the hydrogen permeance P(H$_2$) derived was 8.9 kJ/mol, and the activation energy Ep(O$_2$) of the oxygen permeance P(O$_2$) was 5.51 kJ/mol. Therefore, 0 < Ep(O$_2$) < Ep(H$_2$) was established.

The hydrogen permeance P(H$_2$) and the oxygen permeance P(O$_2$) at each temperature were P(O$_2$) < P(H$_2$).

Further, from these results, as shown in Table 2, in a range of 16 (°C) ≤ Tos (°C) ≤ 90 (°C) or in a range of 16 (°C) ≤ Tgm (°C) ≤ 90 (°C), the following matters were clarified as the hydrogen recovery system or the process performance of separation and recovery.

The hydrogen recovery rate was improved by about 1.7 times by warming from 16°C to 90°C. Accordingly, warming from 16°C to 90°C reduced the non-permeation-side hydrogen concentration from 52.8 vol% to 32.4 vol%, reduced the detonation power in an unlikely event of ignition, and improved the safety. Therefore, even in the case of warming from 16°C to 90°C, the permeation-side hydrogen concentration was stable at about 98 vol%, and the hydrogen concentration outside the explosion range (more than 95.8 vol%) of the hydrogen-oxygen mixed gas (hydrogen detonating gas) having the stoichiometric composition was stably realized in the entire temperature range.

As described above, the improvement of the characteristics as the hydrogen recovery system or the separation and recovery process performance results from the temperature dependency of the specific permeances of the composite separation membrane (surface-modified CHA-type zeolite membrane/surface-modified CHA membrane), which is significantly different from the membrane performance widely known so far.

In the separation membrane, the absolute value of the activation energy of the permeance of molecules having a small dynamic molecular diameter is generally smaller (the temperature dependency is smaller) than the absolute value of the activation energy of molecules having a large dynamic molecular diameter. However, in the present composite separation membrane (surface-modified CHA-type zeolite membrane/surface-modified CHA membrane), it was confirmed that the reverse was true.

As a result, it was confirmed that when the mixed gas is warmed in an appropriate range for separating and recovering molecules having a relatively small dynamic molecular diameter from the mixed gas, the hydrogen recovery rate can be improved while substantially maintaining the permeation-side hydrogen concentration, and the non-permeation-side hydrogen concentration can also be reduced.

In the separation module equipped with the composite separation membrane, the supply-side maximum Reynolds number at the module inlet for the separation target gas was as shown in Table 3, which was sufficiently smaller than 2000, which is the boundary between a laminar flow and a turbulent flow, and it was confirmed that the supply gas or the non-permeate gas was supplied as a stable laminar flow on the zeolite membrane side of the surface-modified composite separation membrane. Further, the permeation-side maximum Reynolds number at the outlet on the permeation side of the module for the separation target gas was also as shown in Table 3, and was sufficiently smaller than 2000, which is the boundary between a laminar flow and a turbulent flow, and it was confirmed that the permeate gas flowed as a stable laminar flow on the support side of the composite separation membrane.

[Table 3]

Table 3

| Temperature (Tos or Tgm) (°C) | Supply-side maximum Reynolds number | Permeation-side maximum Reynolds number |
|---|---|---|
| 16 | 58 | 135 |
| 50 | 54 | 171 |
| 70 | 52 | 189 |
| 80 | 51 | 195 |
| 90 | 50 | 198 |

Example 1-2

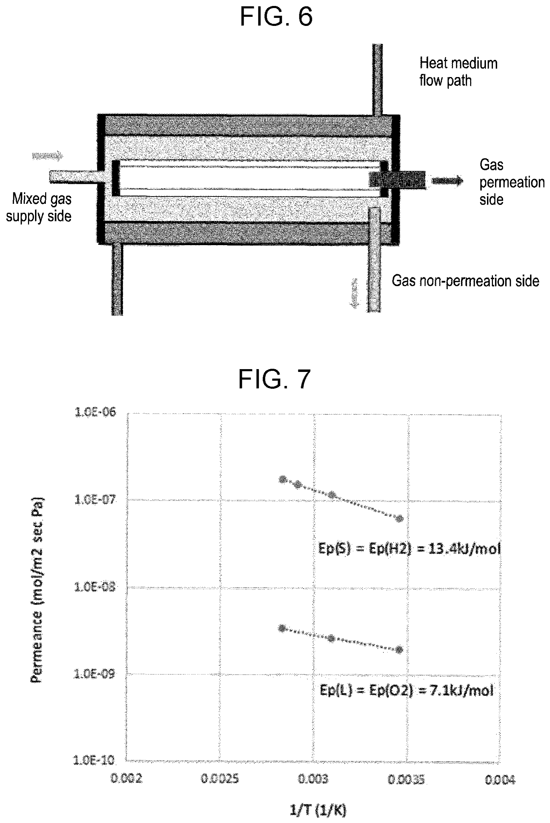

As described below, six composite separation membranes (surface-modified CHA-type zeolite membrane/surface-modified CHA membrane) similar to those described in Example 1-1 were provided. Each of these membranes had a length of 170 mm, and was mounted in each of six separation modules including a warming mechanism. FIG. 6 is a schematic view of a separation module having the warming mechanism. The separation module was the same as that of Example 1-1 except that a tubular flow path through which water, a fluorine-based inert liquid, or the like as a heat medium can flow was provided on the outside of the separation module, and that a heat insulation section was provided to surround the tubular flow path.

These six separation modules were then connected in series to form a configuration equivalent to a separation module having a length of 102 cm. In this case, the tubular flow paths of the respective separation modules were also connected so that they were warmed. After such preparation, a hydrogen recovery system capable of separating and recovering hydrogen from a hydrogen-oxygen mixed gas (hydrogen detonating gas) having a ratio of hydrogen:oxygen = 2:1 was configured using the separation modules connected in series. FIG. 4 illustrates a schematic view of the recovery system.

The recovery system can also be used as a hydrogen recovery system in an artificial photosynthesis plant or the like when the scale is enlarged. In FIG. 4, in the case of the present example, the pressurization mechanisms A and B were not used, and two dehumidification modules equipped with silica gel were used as the dehumidification mechanism A. As a result, the relative humidity of the mixed gas introduced into the separation module was 0.1% or less under all conditions.

The temperature adjustment mechanism A was not used, and a commercially available dry safety device (available from NISSAN TANAKA CORPORATION/model number: FA-510-H) was used as the flame propagation suppression mechanism A. The temperature adjustment mechanism B was realized by supplying warm water from a thermostatic bath to the tubular flow path integrated with the separation module illustrated in FIG. 6. The dehumidification mechanism B, the flame propagation suppression mechanism B, and the like were not integrated with the separation module. The supply pressure of the hydrogen-oxygen mixed gas (hydrogen detonating gas) having a ratio of hydrogen:oxygen = 2:1 was set to 0 kPa (G) without using any pressurization mechanism B in the figure. In addition, a commercially available dry safety device (available from NISSAN TANAKA CORPORATION/model number: FA-510-H) was further installed in the subsequent stage of the pressurization mechanism B in order to secure safety. Also, a diaphragm pump having a maximum exhaust speed of 120 L/min was provided as the decompression mechanism on the permeation side of the separation membrane module, and the permeation-side pressure was reduced to less than -92 kPa (G) by the diaphragm pump. A commercially available dry safety device (available from NISSAN TANAKA CORPORATION/model number: FA-510-H) was further installed also in the subsequent stage of the decompression mechanism in order to secure safety.

Here, the temperature Tos of the separation module was set to 90°C, and a hydrogen-oxygen mixed gas (hydrogen detonating gas) having a ratio of hydrogen:oxygen = 2:1 was supplied at 900 ml/min to evaluate the process performances as a hydrogen recovery system. The results are shown in Table 4.

The hydrogen concentration on the permeation side sucked by the diaphragm pump provided as the decompression mechanism was 98.2 vol%, which was outside the explosion range, and hydrogen was safely separated from the hydrogen detonating gas. The hydrogen recovery rate was also as high as 75.8%, and highly efficient hydrogen recovery was confirmed. The supply pressure at this time was 0 kPa (G), which was sufficiently low, and ideal as the condition for supplying the hydrogen detonating gas.

Example 1-3

The process performance was evaluated using the hydrogen recovery system of Example 1-2, except that the supply amount of the hydrogen-oxygen mixed gas (hydrogen detonating gas) having a ratio of hydrogen:oxygen = 2:1 was set to 510 ml/min. The results are shown in Table 4.

The permeation-side pressure was reduced to -92.5 kPa (G) by a diaphragm pump having a movable portion, which was provided as the decompression mechanism. The hydrogen concentration on the permeation side sucked by the diaphragm pump having a movable portion was 96.8 vol%, which was outside the explosion range, and hydrogen was safely separated from the hydrogen detonating gas. The hydrogen recovery rate was 93.7% which was also very high, and ultra-highly efficient hydrogen recovery was confirmed. Further, the hydrogen concentration on the non-permeation side having no movable portion on the downstream side was as low as 12.1 vol%, which was outside the detonation range. Thus, safe and ultra-highly efficient hydrogen-oxygen separation was realized. The supply pressure at this time was 0 kPa (G), which was sufficiently low, and ideal as the condition for supplying the hydrogen detonating gas.

Example 1-4

The process performance was evaluated using the hydrogen recovery system of Example 1-2, except that the temperature of the separation module was 70°C, and that the supply amount of the hydrogen-oxygen mixed gas (hydrogen detonating gas) having a ratio of hydrogen:oxygen = 2:1 was 450 ml/min. The results are shown in Table 4.

The permeation-side pressure was reduced to -94.5 kPa (G) by a diaphragm pump having a movable portion, which was provided as the decompression mechanism. The hydrogen concentration on the permeation side sucked by the diaphragm pump having a movable portion was 96.6 vol%, which was outside the explosion range, and hydrogen was safely separated from the hydrogen detonating gas. The hydrogen recovery rate was 94.8 vol% which was also very high, and ultra-highly efficient hydrogen recovery was confirmed. Further, the hydrogen concentration on the non-permeation side having no movable portion on the downstream side was as low as 10.0 vol%, which was outside the detonation range. Thus, safe and ultra-highly efficient hydrogen-oxygen separation was realized. The supply pressure at this time was 0 kPa (G), which was sufficiently low, and ideal as the condition for supplying the hydrogen detonating gas.

Example 1-5

The process performance was evaluated using the hydrogen recovery system of Example 1-2, except that the temperature of the separation module was 50°C, and that the supply amount of the hydrogen-oxygen mixed gas (hydrogen detonating gas) having a ratio of hydrogen:oxygen = 2:1 was 300 ml/min. The results are shown in Table 4.

The permeation-side pressure was reduced to -95.5 kPa (G) by a diaphragm pump having a movable portion, which was provided as the decompression mechanism. The hydrogen concentration on the permeation side sucked by the diaphragm pump having a movable portion was 95.9 vol%, which was outside the explosion range, and hydrogen was safely separated from the hydrogen detonating gas. The hydrogen recovery rate was 97.3% which was also very high, and ultra-highly efficient hydrogen recovery was confirmed. Further, the hydrogen concentration on the non-permeation side having no movable portion on the downstream side was very low, i.e., 7.0 vol%, which was outside the detonation range. Thus, safe and ultra-highly efficient hydrogen-oxygen separation was realized. The supply pressure at this time was 0 kPa (G), which was sufficiently low, and ideal as the condition for supplying the hydrogen detonating gas.

[Table 4]

Table 4

| | Temperature (Tos or Tgm) | Supply flow rate | Permeation-side flow rate | Permeation-side hydrogen concentration | Hydrogen recovery rate | Non-permeation-side flow rate | Non-permeation-side hydrogen concentration |
|---|---|---|---|---|---|---|---|
| | (°C) | (ml/min) | (ml/min) | (%) | (%) | (ml/min) | (%) |
| Example 1-2 | 90 | 900 | 463 | 98.2 | 75.8 | 437 | 34.3 |
| Example 1-3 | 90 | 510 | 329 | 96.8 | 93.7 | 183 | 12.1 |
| Example 1-4 | 70 | 450 | 295 | 96.6 | 94.8 | 155 | 10.0 |
| Example 1-5 | 50 | 300 | 203 | 95.9 | 97.3 | 97 | 7.0 |

Example 1-6

The following reaction mixture for hydrothermal synthesis was prepared.

To a mixture of 1.44 g of a 1 mol/L-NaOH aqueous solution, 5.76 g of a 1 mol/L-KOH aqueous solution, and 114.01 g of water, 0.195 g of aluminum hydroxide (containing 53.5 mass% of $Al_2O_3$, available from Aldrich) was added, and dissolved with stirring to prepare a transparent solution. To the solution, 2.43 g of a TMADAOH aqueous solution (containing 25 mass% of TMADAOH, available from SACHEM, Inc.) was added as an organic template, and 10.8 g of colloidal silica (Snowtex-40 available from Nissan Chemical Corporation) was further added, followed by stirring for 30 minutes, to prepare a reaction mixture.

The composition (molar proportions) of this reaction mixture is $SiO_2/Al_2O_3/NaOH/KOH/H_2O/TMADAOH$ = 1/0.014/0.02/0.08/100/0.04, and $SiO_2/Al_2O_3$ = 70.

An alumina tube (outer diameter: 12 mm, inner diameter: 9 mm) was cut to a length of 400 mm and used as an inorganic porous support.

A CHA-type zeolite crystallized by hydrothermal synthesis at 160°C for 2 days in a gel composition (molar proportions) of $SiO_2/Al_2O_3/NaOH/KOH/H_2O/TMADAOH$ = 1/0.033/0.1/0.06/20/0.07 was used as seed crystals. The support was immersed for 30 seconds in a dispersion liquid prepared by dispersing 1.0 mass% of the seed crystals in water, and then pulled up to support the seed crystals on an upper end portion of the inorganic porous support, and the support on which the seed crystals were supported was used for hydrothermal synthesis.

The support to which the seed crystals were attached in this manner and two supports to which seed crystals were attached in the same manner, i.e., a total of three supports were immersed in the vertical direction in a Teflon (trade name) inner cylinder containing the reaction mixture, an autoclave was sealed, and the supports were heated at 180°C for 18 hours under autogenous pressure in a stationary state, thereby performing crystal growth of zeolite at the upper end portion of the inorganic porous support by hydrothermal synthesis. Thereafter, cooling was performed, and the zeolite single-component separation structure was taken out from the reaction mixture, washed, and then dried at 100°C for 2 hours or more.

The zeolite single-component separation structure before template firing was fired in an electric furnace at 500°C for 5 hours. The XRD of the generated membrane was measured, and it was found that a CHA-type zeolite was generated. In the X-ray diffraction pattern, the peak intensity near $2\theta = 9.6°$ was 2.5 times the peak intensity near $2\theta = 20.8°$.

For the CHA-type zeolite single-component separation structure with a length of 80 mm obtained by such a synthesis method, a supply gas was supplied, at 100°C, to a reaction tube (FIG. 3) where the CHA-type zeolite single-component separation structure was installed at 50 ml/min via bubblers respectively containing water vapor and polymethoxysiloxane (MKC (trade name) silicate, MS-56, available from Mitsubishi Chemical Corporation), which is a methyl silicate oligomer, as a silica source, using the apparatus illustrated in FIG. 2, whereby the upper end portion of the zeolite single-component separation structure was treated to prepare a composite separation membrane. In this treatment, in addition to the CHA-type zeolite single-component separation structure having a length of 80 mm, three other CHA-type zeolite single-component separation structures having a length of 80 to 100 mm, i.e., a total of four CHA-type zeolite single-component separation structures were installed in series and the treatment was performed.

In the supply of each raw material by the gases from the bubblers, nitrogen gas was used for the supply of water vapor, and helium was used for the supply of the silica source. The reaction tube is a stainless steel tube having an inner diameter of 15 mm, an outer diameter of 20 mm, and a full length of 440 mm, both ends thereof can be connected to a gas supply pipe by flanges, and a gas can flow through the reaction tube. In the treatment, only the gas accompanying water vapor was supplied and allowed to flow through the reaction tube for the first 1 hour (first treatment stage), the gas accompanying water vapor and the gas accompanying and carrying polymethoxysiloxane were mixed and supplied, and allowed to flow in the reaction tube for the next 5 hours (second treatment stage), and only the gas accompanying water vapor was supplied and allowed to flow in the reaction tube for the next 1 hour (third treatment stage). After the treatment process, the inside of the reaction tube was allowed to cool, and then the composite separation tree was taken out and further treated by heating at 130°C for 1 hour (fourth treatment stage).

The resultant composite separation membrane (surface-modified CHA-type zeolite membrane/surface-modified CHA membrane) having a support length of 80 mm was used to perform preparation for modularization. The separation module was a cylinder with an inner diameter of 15 mm $\varphi$, and was configured so that a supply flow path for a separation target gas, having a width of 1.5 mm on one side, was formed between the separation module and the modified surface of the equipped composite separation membrane having an outer shape of 12 mm $\varphi$. The length of an exposed surface of the composite separation membrane in the separation module was 59 mm for binding to a connection pipe portion for gas flow.

The membrane performance evaluation of the composite separation membrane (surface-modified CHA-type zeolite membrane/surface-modified CHA membrane) and the hydrogen/oxygen separation experiment were performed. Based on the results, the activation energy $Ep(H_2)$ (kJ/mol) of the hydrogen permeance $P(H_2)$ (mol/(m$^2 \cdot$s$\cdot$Pa)) and the activation energy $Ep(O_2)$ of the oxygen permeance $P(O_2)$ (mol/(m$^2 \cdot$s$\cdot$Pa)) were derived. In the derivation, two methods were performed, i.e., a method in which a single gas of hydrogen and a single gas of oxygen were used as supply gases and a method in which a hydrogen-oxygen mixed gas (hydrogen detonating gas) having a ratio of hydrogen:oxygen = 2:1 was used as a supply gas.

Firstly, the measurement system illustrated in FIG. 4 was used to supply each of hydrogen single gas and oxygen single gas, at 200 ml/min, to the separation membrane and the separation membrane module, and to determine the activation energy of the permeance of each gas. In this case, the membrane performances (separation module performances) for the hydrogen single gas and the oxygen single gas were determined in the same manner as in Example 1-1 except that the temperature of the temperature-adjustable water tank used as the temperature adjustment mechanism B was set to a range of from 16°C to 80°C, and that the supply pressure was set to 19 kPa (G) by controlling the pressure release valve as the pressurization mechanism B in the drawing. The results are summarized in Table 5.

FIG. 7 illustrates the results of an Arrhenius plot from which the activation energy of each of the hydrogen permeance and the oxygen permeance was derived. As a result, the activation energy $Ep(H_2)$ of the hydrogen permeance $P(H_2)$ derived was 13.4 kJ/mol, and the activation energy $Ep(O_2)$ of the oxygen permeance $P(O_2)$ (mol/(m$^2 \cdot$s$\cdot$Pa)) was 7.1 kJ/mol.

[Table 5]

Table 5

| Temperature | Hydrogen permeance | Activation energy of hydrogen permeance | Oxygen permeance | Activation energy of oxygen permeance | Separation factor |
|---|---|---|---|---|---|
| (°C) | (mol/(m$^2$·sec·Pa)) | (kJ/mol) | (mol/(m$^2$·sec·Pa)) | (kJ/mol) | |
| Tam | P(S)=P(H$_2$) | Ep(S)=Ep(H$_2$) | P(L)=P(O$_2$) | Ep(L)=Ep(O$_2$) | α(S/L)=α(H$_2$/O$_2$) |
| 16 | 6.26E-08 | | 1.94E-09 | | 32.2 |
| 50 | 1.17E-07 | 13.4 | 2.58E-09 | 7.1 | 45.4 |
| 70 | 1.52E-07 | | | | |
| 80 | 1.72E-07 | | 3.34E-09 | | 51.6 |

Comparison of the results of Example 1-6 with the results of Example 1-1 indicated that when the second treatment stage in the production of the composite separation membrane was long in the zeolite single-component separation structure upper end portion treatment (surface modification treatment), the activation energy Ep(S) or Ep(H$_2$) of the hydrogen permeance and the activation energy Ep(L) or Ep(O$_2$) of the oxygen permeance were also increased (temperature dependency was increased). However, in the range of 5 (°C) ≤ Tam (°C) ≤ 200 (°C) under each of the treatment conditions, the relationship of |Ep(L)| < |Ep(S)| or |Ep(O$_2$)| < |Ep(H$_2$)| was unchanged.

Example 1-7

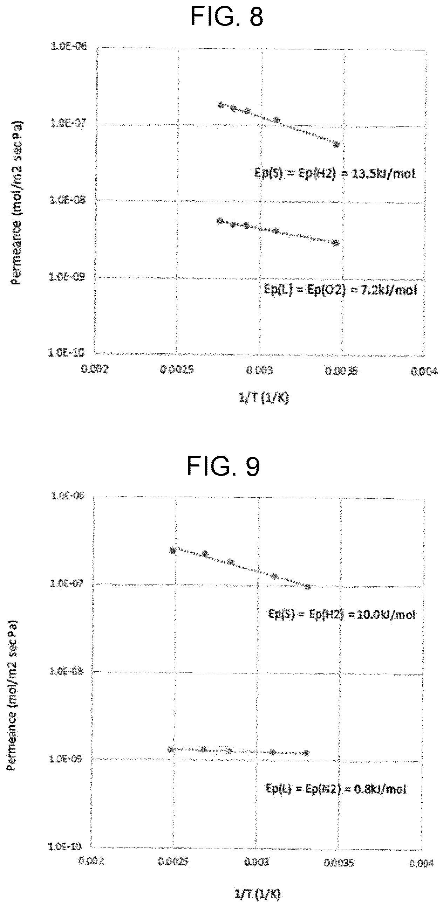

In the same manner as in Example 1-6 except that the supply pressure was set to 19 kPa (G) by controlling the pressure release valve as the pressurization mechanism B in FIG. 4, the activation energy Ep(H$_2$) of the hydrogen permeance P(H$_2$) and the activation energy Ep(O$_2$) of the oxygen permeance P(O$_2$) (mol/(m$^2$·s·Pa)) were determined by a method in which a mixed gas of hydrogen and oxygen that was supplied from a gas cylinder was used as the separation target gas, and hydrogen was supplied at 133.3 ml/min and oxygen was supplied at 66.7 ml/min (a total of 200.0 ml/min) to the separation membrane and the separation membrane module. The results are summarized in Table 6. FIG. 8 illustrates the results of an Arrhenius plot from which the activation energy of each of the hydrogen permeance and the oxygen permeance was derived. As a result, the activation energy Ep(H$_2$) of the hydrogen permeance P(H$_2$) derived was 13.5 kJ/mol, and the activation energy Ep(O$_2$) of the oxygen permeance P(O$_2$) (mol/(m$^2$·s·Pa)) was 7.2 kJ/mol.

[Table 6]

Table 6

| Temperature | Hydrogen permeance | Activation energy of hydrogen permeance | Oxygen permeance | Activation energy of oxygen permeance | Separation factor |
|---|---|---|---|---|---|
| (°C) | (mol/(m$^2$·sec·Pa)) | (kJ/mol) | (mol/(m$^2$·sec·Pa)) | (kJ/mol) | |
| Tam | P(S)=P(H$_2$) | Ep(S)=Ep(H$_2$) | P(L)=P(O$_2$) | Ep(L)=Ep(O$_2$) | α(S/L)=α(H$_2$/O$_2$) |
| .16 | 5.67E-08 | | 2.95E-09 | | 19.2 |
| 50 | 1.18E-07 | | 4.14E-09 | | 28.5 |
| 70 | 1.50E-07 | 13.5 | 4.86E-09 | 7.2 | 30.8 |
| 80 | 1.61E-07 | | 4.98E-09 | | 32.4 |
| 90 | 1.79E-07 | | 5.52E-09 | | 32.4 |

In the range of 16 (°C) ≤ Tam (°C) ≤ 80 (°C), which is common to the results derived from the membrane performances for the hydrogen single gas and the oxygen single gas and the results derived from the hydrogen-oxygen mixed gas (hydrogen:oxygen = 133.3:66.7 = 2:1), the following membrane performances and separation module performances were found.

Warming from 16°C to 80°C increased the hydrogen permeance $P(H_2)$ by about 2.7 times when the single gas was supplied as shown in Table 5, and by about 2.8 times when the mixed gas was supplied as shown in Table 6, and improved the membrane performance or the separation module performance.

Warming from 16°C to 80°C increased the oxygen permeance $P(O_2)$ only by about 1.7 times when the single gas was supplied as shown in Table 5, and only by about 1.7 times also when the mixed gas was supplied as shown in Table 6.

As a result, warming from 16°C to 80°C increased the separation performance α between hydrogen and oxygen ($H_2/O_2$) by about from 1.6 to 1.7 times, and improved the membrane performance or the separation module performance.

The activation energy $Ep(H_2)$ of the hydrogen permeance $P(H_2)$ derived was 13.4 kJ/mol when the single gas was supplied, and 13.5 kJ/mol when the mixed gas was supplied, and the activation energy $Ep(O_2)$ of the oxygen permeance $P(O_2)$ was 7.1 kJ/mol when the single gas was supplied, and 7.2 kJ/mol when the mixed gas was supplied. Therefore, $|Ep(L)| < |Ep(S)|$ or $|Ep(O_2)| < |Ep(H_2)|$ was established under any of the measurement conditions.

The hydrogen permeance $P(H_2)$ and the oxygen permeance $P(O_2)$ at each temperature were $P(L) < P(S)$ or $P(O_2) < P(H_2)$ both when the single gas was supplied and when the mixed gas was supplied.

Meanwhile, the process performances as a hydrogen recovery system when the mixed gas was supplied at 50°C and 90°C are shown in Table 7.

[Table 7]

Table 7

| Temperature (Tos or Tgm) | Supply flow rate | Permeation-side flow rate | Permeation-side hydrogen concentration | Hydrogen recovery rate | Non-permeation-side flow rate | Non-permeation-side hydrogen concentration |
|---|---|---|---|---|---|---|
| (°C) | (ml/min) | (ml/min) | (%) | (%) | (ml/min) | (%) |
| 50 | 200 | 26.4 | 98.1 | 19.4 | 174.1 | 61.9 |
| 90 | | 39.2 | 98.2 | 28.9 | 161.0 | 59.0 |

From these results, the following matters were clarified as the hydrogen recovery system or the process performance of separation and recovery.

The hydrogen recovery rate was improved by about 1.5 times by warming from 50°C to 90°C. Even in the case of warming from 50°C to 90°C, the permeation-side hydrogen concentration was stable at about 98 vol%, and the hydrogen concentration outside the explosion range (more than 95.8 vol%) of the hydrogen-oxygen mixed gas (hydrogen detonating gas) having the stoichiometric composition was stably realized.

The improvement of the characteristics as the hydrogen recovery system or the separation and recovery process performance results from the temperature dependency of the specific permeances of the composite separation membrane (surface-modified CHA-type zeolite membrane/surface-modified CHA membrane), which is significantly different from the membrane performance widely known so far.

In the separation membrane, the absolute value of the activation energy of the permeance of molecules having a small dynamic molecular diameter is generally smaller (the temperature dependency is smaller) than the absolute value of the activation energy of molecules having a large dynamic molecular diameter. However, in the present composite separation membrane (surface-modified CHA-type zeolite membrane/surface-modified CHA membrane), it was confirmed that the reverse was true. As a result, it was confirmed that when the mixed gas is warmed in an appropriate range for separating and recovering molecules having a relatively small dynamic molecular diameter from the mixed gas, the hydrogen recovery rate can be improved while substantially maintaining the permeation-side hydrogen concentration, and the non-permeation-side hydrogen concentration can also be reduced.

Example 1-8

One CHA-type zeolite single-component separation structure with a length of 400 cm obtained in the same manner as in Example 1-1 was divided into two parts with a length of 200 mm, and one of the two CHA-type zeolite single-component separation structures having a length of 200 mm was placed in the reaction tube of the raw material supply gas flow type treatment apparatus for the upper end portion of a zeolite single-component separation structure illustrated in FIG. 2. The treatment in the reaction tube (surface modification treatment) was performed in the same manner as in Example 1-1 except that the number of membrane samples having a length of 200 cm was one and that nitrogen gas was also used for supplying the silica source.

After the treatment process, the inside of the reaction tube was allowed to cool, and then the composite separation membrane was taken out. One composite separation membrane having a length of 200 mm was prepared. This composite separation membrane was mounted in a separation membrane module as a membrane having a length of 17.5 cm, and preparation for a gas separation experiment was completed.

The membrane performance evaluation of the composite separation membrane (surface-modified CHA-type zeolite membrane/surface-modified CHA membrane) and the hydrogen/nitrogen separation experiment were performed. Based on the results, the activation energy $Ep(H_2)$ (kJ/mol) of the hydrogen permeance $P(H_2)$ (mol/(m$^2$·s·Pa)) and the activation energy $Ep(N_2)$ of the nitrogen permeance $P(N_2)$ (mol/(m$^2$·s·Pa)) were derived. In the derivation, a hydrogen-nitrogen mixed gas having a ratio of hydrogen:nitrogen = 2:1 was used as the supply gas, and the measurement system illustrated in FIG. 4 was used.

The membrane performance (separation module performance) for the hydrogen-nitrogen mixed gas was determined in the same manner as in Example 1-1 except that the temperature of the temperature-adjustable oven used as the temperature adjustment mechanism B was used in a range of from 30°C to 130°C, that the supply pressure was set to 100 kPa (G) by controlling the pressure release valve as the pressurization mechanism B in FIG. 4, and that the decompression mechanism was not used. The results are summarized in Table 8.

FIG. 9 illustrates the results of an Arrhenius plot from which the activation energy of each of the hydrogen permeance and the nitrogen permeance was derived. As a result, the activation energy $Ep(H_2)$ of the hydrogen permeance $P(H_2)$ derived was 10.0 kJ/mol, and the activation energy $Ep(O_2)$ of the oxygen permeance $P(O_2)$ (mol/(m$^2$·s·Pa)) was 0.8 kJ/mol.

[Table 8]

Table 8

| Temperature | Hydrogen permeance | Activation energy of hydrogen permeance | Nitrogen permeance | Activation energy of nitrogen permeance | Separation factor |
|---|---|---|---|---|---|
| (°C) | (mol/(m$^2$·sec·Pa)) | (kJ/mol) | (mol/(m$^2$·sec·Pa)) | (kJ/mol) | |
| Tam | $P(S)=P(H_2)$ | $Ep(S)=Ep(H_2)$ | $P(L)=P(N_2)$ | $Ep(L)=Ep(N_2)$ | $\alpha(S/L)=\alpha(H_2/N_2)$ |
| 30 | 9.75E-08 | | 1.22E-09 | | 78 |
| 50 | 1.27E-07 | | 1.25E-09 | | 102 |
| 80 | 1.87E-07 | 10.0 | 1.27E-09 | 0.8 | 148 |
| 100 | 2.26E-07 | | 1.30E-09 | | 174 |
| 130 | 2.45E-07 | | 1.32E-09 | | 186 |

The following matters can be seen when the results of Example 1-8 and the results of Example 1-1 are considered together.

In the separation membrane, the absolute value of the activation energy of the permeance of molecules having a small dynamic molecular diameter is generally smaller (the temperature dependency is smaller) than the absolute value of the activation energy of molecules having a large dynamic molecular diameter. However, in the present composite separation membrane (surface-modified CHA-type zeolite membrane/surface-modified CHA membrane), it was confirmed that the opposite is true between diatomic molecules of hydrogen, oxygen, or nitrogen.

That is, the dynamic molecular diameters of hydrogen, oxygen and nitrogen are 2.89 A, 3.46 A and 3.64 A, respectively, and from the known finding, it is considered that the activation energy of the hydrogen permeance is the smallest, that the activation energy of the oxygen permeance is the second smallest, and that the activation energy of the nitrogen permeance is the largest. However, in the present composite separation membrane (surface-modified CHA-type zeolite membrane/surface-modified CHA membrane), this result was reversed. Specifically, the activation energy of the hydrogen permeance was the largest, ranging from 8.9 to 10.0 kJ/mol, the activation energy of the oxygen permeance was the second largest, 5.5 kJ/mol, and the activation energy of the nitrogen permeance was the smallest, 0.8 kJ/mol.

As a result, it was confirmed that when the mixed gas is warmed in an appropriate range for separating and recovering molecules having a relatively small dynamic molecular diameter from the mixed gas, the hydrogen recovery rate can be improved while substantially maintaining the permeation-side hydrogen concentration, and the non-permeation-side hydrogen concentration can also be reduced.

From this result, it is considered that, for example, even when air separation such as separation of oxygen and nitrogen from air is assumed, oxygen and nitrogen can be separated with high efficiency by warming separation using the composite separation membrane. That is, it is considered that similar characteristics may be exhibited in separation membranes having a composite structure, such as a composite separation membrane having a silica modified portion formed on a CHA-type zeolite membrane, a composite separation membrane having a silica modified portion formed on various zeolite membranes other than the CHA-type zeolite membrane, a composite separation membrane having a carbon network formed on a zeolite membrane, a composite separation membrane having a carbon network formed on a silica membrane produced by various CVD/sol-gel methods, and a composite separation membrane having a silica modified portion formed on a carbon membrane, in which the tendency of the activation energies of the gas permeances described above may be exhibited by a composite phenomenon which is not a simple molecular sieve. That is, it is inferred that such a tendency of the activation energies of the gas permeances may be exhibited when the first separation section and the second separation section have different characteristics relating to gas separation characteristics such as gas adsorption characteristics, gas diffusion characteristics, and gas desorption characteristics, or when there is an interaction such as the second separation section shielding the characteristics of the first separation section. It is inferred that, in the separation of oxygen and nitrogen or the separation of air using such a separation membrane, appropriate warming separation can realize separation with high selectivity and high recovery.

Example 1-9

The membrane performance (separation module performance) of the composite separation membrane was measured in the same manner as in Example 1-7 except that the supply gas was changed from the hydrogen-nitrogen mixed gas having a ratio of hydrogen:nitrogen = 2:1 to a single gas of hydrogen, carbon dioxide gas, argon gas, nitrogen gas, or methane gas, and that the temperature of the temperature-adjustable oven used as the temperature adjustment mechanism B was set to a range of from 30°C to 100°C. The results are summarized in Table 9.

[Table 9]

Table 9

| Temperature | Activation energy of hydrogen permeance | Activation energy of carbon dioxide permeance | Activation energy of argon permeance | Activation energy of nitrogen permeance | Activation energy of methane permeance |
|---|---|---|---|---|---|
| (°C) | (kJ/mol) | (kJ/mol) | (kJ/mol) | (kJ/mol) | (kJ/mol) |
| Tam | $Ep(S)=Ep(H_2)$ | $Ep(L)=Ep(CO_2)$ | $Ep(L)=Ep(Ar)$ | $Ep(L)=Ep(N_2)$ | $Ep(L)=Ep(CH_4)$ |
| 30 to 100 | 7.0 | 1.0 | 1.4 | 0.2 | -1.6 |

The following matters can be seen when the results of Example 1-9 and the results of Examples 1-1 and 1-6 are considered together.

In the separation membrane, the absolute value of the activation energy of the permeance of molecules having a small dynamic molecular diameter is generally smaller (the temperature dependency is smaller) than the absolute value of the activation energy of molecules having a large dynamic molecular diameter. However, in the present composite separation membrane (surface-modified CHA-type zeolite membrane/surface-modified CHA membrane), in a case where a mixed gas is composed so that the gas contains hydrogen as a molecule having a relatively small dynamic molecular diameter and at least one gas selected from carbon dioxide, argon, oxygen, nitrogen, and methane as a molecule having a relatively large dynamic molecular diameter, warming in an appropriate range at the time of separating and recovering hydrogen from the mixed gas is expected to be capable of improving the hydrogen recovery rate while maintaining the permeation-side hydrogen concentration at a high level, and also to be capable of reducing the non-permeation-side hydrogen concentration.

Example 1-10

A composite separation membrane (surface-modified CHA-type zeolite membrane/surface-modified CHA membrane) having the same performances as those of Example 1-7 except that the membrane length was set to 1 m as described below was assumed, and the separation process performances expected for a hydrogen-nitrogen mixed gas at 30°C, 80°C, and 130°C were derived by calculation as described below.

The calculation was performed using a so-called both-side plug flow model, where the supply flow rate of the hydrogen-nitrogen mixed gas was 900 mL/min, the ratio of hydrogen:nitrogen was 1:1, the length of the composite separation membrane was 1 m, the supply pressure applied by the pressurization mechanism B in FIG. 4 was 0.1 MPa (G), and the permeation-side pressure was -0.09 MPa (G) by a vacuum pump as the decompression mechanism. The results are summarized in Table 10.

[Table 10]

Table 10

| Temperature (Tos or Tgm) | Supply flow rate | Permeation-side flow rate | Permeation-side hydrogen concentration | Hydrogen recovery rate | Non-permeation-side flow rate | Non-permeation-side hydrogen concentration |
|---|---|---|---|---|---|---|
| (°C) | (ml/min) | (ml/min) | (%) | (%) | (ml/min) | (%) |
| 30 | | 319 | 97.5 | 69.2 | 581 | 23.8 |
| 80 | 900 | 415 | 97.7 | 90.1 | 485 | 9.1 |
| 100 | | 431 | 97.6 | 93.5 | 469 | 6.3 |

From these results, it was found that, also in the case of a mixed gas having a ratio of hydrogen:nitrogen = 1:1, when a separation process is configured using a composite separation membrane, the hydrogen recovery rate can be improved while maintaining the permeation-side hydrogen concentration at a high level by raising the set temperature of warming separation. At the same time, it was found that the non-permeation-side hydrogen concentration can also be reduced by raising the set temperature of warming separation.

Example 1-11

The following reaction mixture for hydrothermal synthesis was prepared.

To a mixture of 21.6 g of a 1 mol/L-NaOH aqueous solution, 86.4 g of a 1 mol/L-KOH aqueous solution, and 1710.2 g of water, 2.925 g of aluminum hydroxide (containing 53.5 mass% of $Al_2O_3$, available from Aldrich) was added, and dissolved with stirring to prepare a transparent solution. To the solution, 36.45 g of a TMADAOH (N,N,N-trimethyl-1-adamantylammonium hydroxide) aqueous solution (containing 25 mass% of TMADAOH, available from SACHEM, Inc.) was added as an organic template, and 162 g of colloidal silica (Snowtex-40 available from Nissan Chemical Corporation) was further added, followed by stirring for 30 minutes, to prepare a reaction mixture.

The composition (molar proportions) of this reaction mixture is $SiO_2/Al_2O_3/NaOH/KOH/H_2O/TMADAOH$ = 1/0.014/0.02/0.08/100/0.04, and $SiO_2/Al_2O_3$ = 70.

An alumina tube (outer diameter: 12 mm, inner diameter: 9 mm) was cut to a length of 1000 mm and used as an inorganic porous support.

A CHA-type zeolite crystallized by hydrothermal synthesis at 160°C for 2 days in a gel composition (molar proportions) of $SiO_2/Al_2O_3/NaOH/KOH/H_2O/TMADAOH$ = 1/0.033/0.1/0.06/20/0.07 was used as seed crystals. The support was immersed for 30 seconds in a dispersion liquid prepared by dispersing 1.0 mass% of the seed crystals in water, and then pulled up to support the seed crystals on an upper end portion of the inorganic porous support, and the support on which the seed crystals were supported was used for hydrothermal synthesis.

The support to which the seed crystals were attached in this manner and two supports to which seed crystals were attached in the same manner, i.e., a total of three supports were immersed in the vertical direction in a Teflon (trade name) inner cylinder containing the reaction mixture, an autoclave was sealed, and the supports were heated at 180°C for 18 hours under autogenous pressure in a stationary state, thereby performing crystal growth of zeolite at the upper end portion of the inorganic porous support by hydrothermal synthesis. Thereafter, cooling was performed, and the zeolite single-component separation structure was taken out from the reaction mixture, washed, and then dried at 100°C for 2 hours or more.

The zeolite single-component separation structure before template firing was fired in an electric furnace at 500°C for 5 hours. The mass per unit area of the CHA-type zeolite crystallized at the upper end portion of the support, which was determined from the difference between the mass of the zeolite single-component separation structure after firing and the mass of the support, was 60 g/m$^2$. The XRD of the generated membrane was measured, and it was found that a CHA-type zeolite was generated. In the X-ray diffraction pattern, the peak intensity near $2\theta = 9.6°$ was 2.5 times the peak intensity near $2\theta = 20.8°$.

The CHA-type zeolite single-component separation structure with a length of 1000 mm obtained by such a synthesis method was cut into a length of 400 mm. By supplying, at 100°C, a supply gas to a reaction tube (FIG. 3) where the CHA-type zeolite single-component separation structure was installed at 100 ml/min via bubblers respectively containing water vapor and polymethoxysiloxane (MKC (trade name) silicate, MS-51, available from Mitsubishi Chemical Corporation), which is a methyl silicate oligomer, as a silica source, using the apparatus illustrated in FIG. 2, the upper end portion of the CHA-type zeolite single-component separation structure was treated (surface modification for forming the second separation section) to prepare a composite separation membrane. In the supply of each raw material by the gases from the bubblers, nitrogen gas was used for the supply of water vapor and the supply of the silica source. The reaction tube is a stainless steel tube having an inner diameter of 15 mm, an outer diameter of 20 mm, and a full length of 440 mm, both ends thereof can be connected to a gas supply pipe by flanges, and a gas can flow through the reaction tube. In the treatment, only the gas accompanying water vapor was supplied and allowed to flow through the reaction tube for the first 2 hours (first treatment stage), the gas accompanying water vapor and the gas accompanying and carrying polymethoxysiloxane were mixed and supplied, and allowed to flow in the reaction tube for the next 6 hours (second treatment stage), and only the gas accompanying water vapor was supplied and allowed to flow in the reaction tube for the next 1 hour (third treatment stage). After the treatment process, the inside of the reaction tube was allowed to cool, and then the composite separation membrane was taken out and further treated by heating at 130°C for 1 hour (fourth treatment stage). A composite separation membrane having a length of 400 mm was provided. The composite separation membrane was mounted in a separation membrane module as a membrane having a length of 375 mm, and preparation for a gas separation experiment was completed.

The resultant composite separation membrane (surface-modified CHA-type zeolite membrane/surface-modified CHA membrane) was modularized. The separation module had a cylinder shape with an inner diameter of 16 mm $\varphi$, and was configured so that a supply flow path for a separation target gas, having a width of 2 mm on one side, was formed between the separation module and the modified surface of the equipped composite separation membrane having an outer shape of 12 mm $\varphi$. The length of an exposed surface of the composite separation membrane in the separation module was 375 mm for binding to a connection pipe portion for gas flow.

The measurement temperature Tam (°C) was set to 50°C, 70°C, and 90°C, and the membrane performance evaluation of the composite separation membrane (surface-modified CHA-type zeolite membrane/surface-modified CHA membrane) and the hydrogen/oxygen separation experiment were performed. Based on the results, the activation energy Ep(H$_2$) (kJ/mol) of the hydrogen permeance P(H$_2$) (mol/(m$^2$·s·Pa)) and the activation energy Ep(O$_2$) of the oxygen permeance P(O$_2$) (mol/(m$^2$·s·Pa)) were derived.

In the membrane performance evaluation experiment, the separation target gas was a mixed gas of hydrogen and oxygen that was supplied from a gas cylinder, and hydrogen was supplied at 100 ml/min and oxygen was supplied at 50 ml/min (a total of 150 ml/min), to the separation membrane and the separation membrane module. The separation target mixed gas had a stoichiometric composition of hydrogen:oxygen = 2:1. This is based on the assumption that hydrogen and oxygen are generated by total decomposition of water in an artificial photosynthesis plant or the like equipped with a photocatalyst material. Meanwhile, in the hydrogen/oxygen separation experiment (process performance confirmation experiments), the separation target gas was similarly a mixed gas of hydrogen and oxygen that was supplied from a gas cylinder, but hydrogen was supplied at 60 ml/min, oxygen was supplied at 30 ml/min, the total supply flow rate was changed to 90 ml/min, and the mixed gas was supplied to the separation membrane and the separation membrane module.

FIG. 4 illustrates a schematic view of a measurement system used for the evaluation. The measurement system can also be used as a hydrogen recovery system in an artificial photosynthesis plant or the like when the scale is enlarged. In this case, the pressurization mechanism A was not used, and a dehumidification module equipped with silica gel was used as the dehumidification mechanism A. As a result, the relative humidity of the mixed gas introduced into the separation module was 0.1% or less under all conditions. The temperature adjustment mechanism A was not used, and as the flame propagation suppression mechanism A, one in which a filled pipe obtained by filling zircon beads in a pipe and a rupture plate were bound by an elbow pipe was used. A water tank capable of temperature adjustment was used as the temperature adjustment mechanism B, and the separation module was installed therein, whereby the membrane performance evaluation of the composite separation membrane (surface-modified CHA-type zeolite membrane/surface-modified CHA membrane) and the hydrogen/oxygen separation experiment were performed at 50°C, 70°C, and 90°C. The dehumidification mechanism B, a combustible propagation suppression mechanism B, and the like were not integrated with the separation module.

The supply pressure was set to 20 kPa (G) by controlling the pressure release valve as the pressurization mechanism B in the drawing. Further, a scroll pump having a maximum exhaust speed of 580 L/min was provided as the decompression mechanism on the permeation side of the separation membrane module, and the permeation-side pressure was reduced to about -99 kPa (G) by the scroll pump.

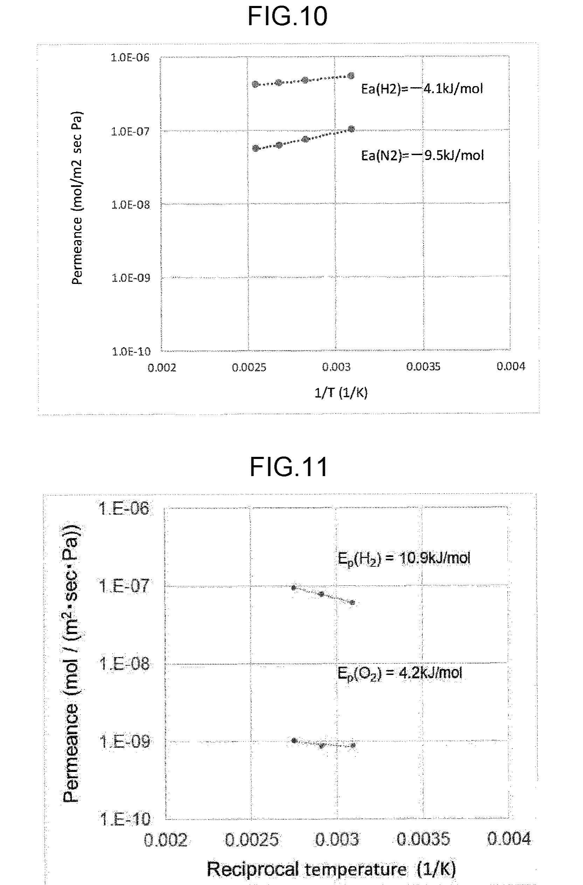

The membrane performance (separation module performance) at each temperature is shown in Table 11, and the process performance as a hydrogen recovery system is shown in Table 12. Further, FIG. 11 illustrates the results of an Arrhenius plot from which the activation energy of each of the hydrogen permeance and the oxygen permeance derived from the experiment was derived.

[Table 11]

Table 11

| Temperature | Hydrogen permeance | Activation energy of hydrogen permeance | Oxygen permeance | Activation energy of oxygen permeance | Separation factor |
|---|---|---|---|---|---|
| (°C) | (mol/(m$^2$·sec·Pa)) | (kJ/mol) | (mol/(m$^2$·sec·Pa)) | (kJ/mol) | |
| Tam | P(S)=P(H$_2$) | Ep(S)=Ep(H$_2$) | P(L)=P(O$_2$) | Ep(L)=Ep(O$_2$) | α(S/L)=α(H$_2$/O$_2$) |
| 50 | 6.06E-08 | | 8.68E-10 | | 69.8 |
| 70 | 7.72E-08 | 10.9 | 8.71E-10 | 4.2 | 88.6 |
| 90 | 9.48E-08 | | 1.03E-09 | | 91.7 |

[Table 12]

Table 12

| | Temperature (Tos or Tgm) | Supply amount | Permeation-side flow rate | Permeation-side hydrogen concentration | Hydrogen recovery rate | Non-permeation-side flow rate | Non-permeation-side hydrogen concentration |
|---|---|---|---|---|---|---|---|
| | (°C) | (ml/min) | (ml/min) | (%) | (%) | (ml/min) | (%) |
| Example 1-11 | 50 | 90.0 | 55.9 | 98.2 | 91.5 | 34.1 | 15.0 |
| | 70 | 90.0 | 58.9 | 98.0 | 96.2 | 31.1 | 7.3 |
| | 90 | 90.0 | 60.4 | 97.7 | 98.3 | 29.4 | 3.4 |

As shown in Table 12, when the separation membrane module equipped with the composite separation membrane (surface-modified CHA-type zeolite membrane/surface-modified CHA membrane) prepared as described above was used and Tam was set to 90°C, the process performance during hydrogen-oxygen separation was as follows.

The permeation-side hydrogen concentration was about 97.7 vol%. At the same time, the non-permeation-side hydrogen concentration was about 3.4 vol%. The explosion range of the hydrogen-oxygen mixed gas is considered to be from 3.9 vol% to 95.8 vol%. It was confirmed that both the permeation-side hydrogen concentration and the non-permeation-side hydrogen concentration were outside the upper limit and the lower limit of the explosion range, respectively. That is, the present inventors succeeded in separating hydrogen detonating gas (gas having a ratio of hydrogen:oxygen = 2:1) into a hydrogen-oxygen mixed gas having a composition that does not cause explosion both on the permeation side and on the non-permeation side. In other words, about 97.7 vol% of hydrogen was present on the permeation side, and about 96.6 vol% of oxygen was present on the non-permeation side although about 3.4 vol% of hydrogen remained. Further, it was confirmed that the hydrogen recovery rate was about 98.3%, which was an ultra-high recovery rate.

Comparative Example 1-1

The activation energy $Ep(H_2)$ (kJ/mol) of the hydrogen permeance $P(H_2)$ (mol/(m$^2$·s·Pa)) and the activation energy $Ep(N_2)$ of the nitrogen permeance $P(N_2)$ (mol/(m$^2$·s·Pa)) were derived in the same manner as in Example 1-6 except for four points, i.e., the point that a zeolite single-component separation structure (unmodified CHA membrane) without surface modification was used, the point that the length of the exposed surface of the zeolite single-component separation structure in the separation module was 57 mm, the point that hydrogen single gas and nitrogen single gas were used instead of the hydrogen-oxygen mixed gas from the viewpoint of safety, and the point that the measured temperature range was from 50°C to 140°C.

[Table 13]

Table 13

| Temperature (°C) | Hydrogen permeance ($P(H_2)$) (mol/(m$^2$·sec·Pa)) | Nitrogen permeance ($P(N_2)$) (mol/(m$^2$·sec·Pa)) |
|---|---|---|
| 50 | 5.49E-07 | 1.04E-07 |
| 80 | 4.82E-07 | 7.55E-08 |
| 100 | 4.47E-07 | 6.32E-08 |
| 120 | 4.19E-07 | 5.59E-08 |
| 140 | 3.94E-07 | 4.79E-08 |

In the separation membrane, the absolute value of the activation energy of the permeance of molecules having a small dynamic molecular diameter is generally smaller (the temperature dependency is smaller) than the absolute value of the activation energy of molecules having a large dynamic molecular diameter, and the zeolite single-component separation structure (unmodified CHA membrane) as the present separation structure exhibited the same behavior.

That is, the activation energy $Ep(H_2)$ of the hydrogen permeance $P(H_2)$ derived was -4.1 kJ/mol when the single gas was supplied, and the activation energy $Ep(N_2)$ of the nitrogen permeance $P(N_2)$ was -9.5 kJ/mol. Therefore, $Ep(N_2) < Ep(H_2) < 0$ and $|Ep(H_2)| < |Ep(N_2)|$ were established.

As a result, when warming was performed in separating and recovering molecules having a relatively small dynamic molecular diameter from the mixed gas, the selectivity was improved, but the amount of hydrogen on the permeation side was confirmed.

Example 2-1 (relative temperature dependency of explosion/detonation power of hydrogen-oxygen mixed gas)

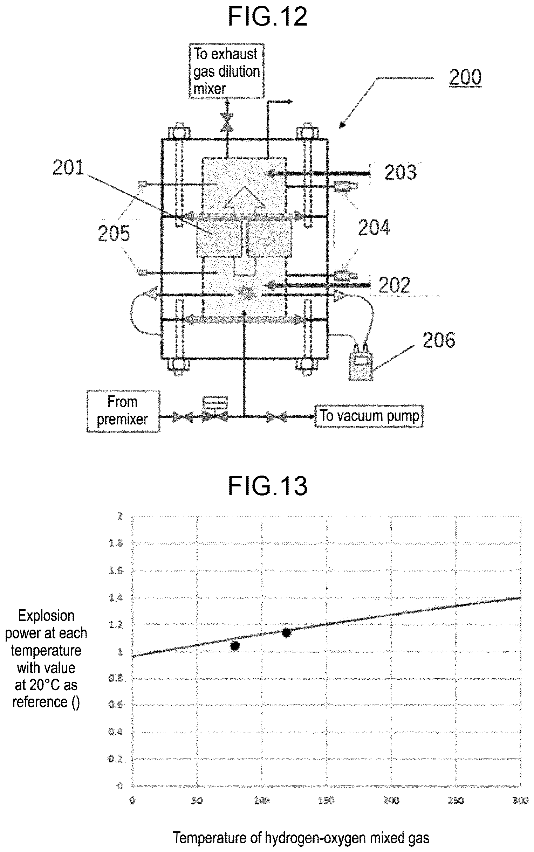

FIG. 12 is a schematic view of an experimental apparatus for determining a limit flame extinction pressure.

An explosion experimental container 200 made of SUS in which an internal space has a cylinder shape having a diameter of about 6 cm and a height of about 15.5 cm, and a cell loaded with small particle diameter inorganic particles can be installed in an intermediate portion thereof was provided. An inorganic particle-loaded cell 201 in the container has a certain degree of flame propagation suppression function, and the flame extinction capability is determined by the hydrogen-oxygen mixing ratio of the hydrogen-oxygen mixed gas filled in the container, the temperature, the pressure, and the particle diameter, the filling density, and the shape, and the like of the loaded inorganic particles.

In the evaluation of the relative temperature dependency of the explosion/detonation power, when the hydrogen-oxygen mixing ratio is set to the stoichiometric composition (hydrogen:oxygen = 2:1) which is the most severe condition, the particle diameter, the filling density, the shape, and the like of the inorganic particles are set to be constant, fixed flame extinction performance is imparted to the inorganic particle-loaded cell, the temperature is fixed, and the pressure of the hydrogen-oxygen mixed gas is changed, the inorganic particle-loaded cell 201 and the upper limit of the temperature at which flame extinction can be performed at the temperature can be known. The pressure is defined as "flame extinction limit pressure" at the temperature.

Next, using the same inorganic particle-loaded cell 201 as described above, the "flame extinction limit pressure" is determined at a temperature different from the above temperature. By repeating this, the flame extinction limit pressure at a plurality of temperature levels is obtained. Here, it can be understood that when the flame extinction limit pressure is high, the explosion power of the hydrogen-oxygen mixed gas at that temperature is low, and therefore that the flame extinction can be performed even if the pressure is increased. Meanwhile, it can be understood that when the flame extinction limit pressure is low, the explosion power of the hydrogen-oxygen mixed gas at that temperature is conversely high, and therefore that the pressure cannot be increased, and the flame extinction cannot be performed unless the pressure is relatively low.

The inorganic particle-loaded cell was filled with zirconia having an average particle diameter of 0.22 mm to a height of 3.5 cm, and set in the explosion experimental container made of SUS. Then, the inside of the container was degassed, and a gas in which the ratio of hydrogen:oxygen was adjusted to 2:1 was introduced thereinto. Thereafter, the explosion experimental container made of SUS was controlled to a desired temperature, and after confirming that the introduced gas temperature and the container temperature were both constant, the first combustion chamber 202 (lower space) was ignited and intentionally exploded. At that time, the presence or absence of flame propagation was determined based on the presence or absence of an increase in temperature/pressure of the second combustion chamber 203 (upper space), and the flame extinction limit pressure was determined as a function of temperature. The temperatures of the experiment were 20°C, 80°C, and 120°C. The results are shown in Table 14.

[Table 14]

Table 14

|  | Room temperature (20°C) | 80°C | 120°C |
|---|---|---|---|
| Flame extinction limit pressure (Mpa-abs) | 0.25 | 0.24 | 0.22 |
| Explosion power | 100% | 104.2% | 113.6% |

Here, assuming that the explosion power of the hydrogen detonating gas depends on $1/\sqrt{T_{ab}}$, the results illustrated in FIG. 13 are obtained. FIG. 13 illustrates the calculation results and the experimental results together, and can explain a rising tendency of the flame extinction limit pressure.

In safety design of various constituent devices including pipes and the like, a plant handling a hydrogen-oxygen mixed gas such as an artificial photosynthesis plant preferably has a safety factor of about 200% assumed with respect to an explosion power at room temperature. However, an excessive safety factor causes various problems such as an increase in pipe thickness and an increase in cost, and thus the safety factor is more preferably about 180%, even more preferably about 160%, and most preferably about 140%.

Therefore, the increase in detonation power due to the temperature is desirably smaller than this, and the increase is preferably within 30%, more preferably within 20%, even more preferably within 15%, and most preferably within 12%. When the numerical value is roughly converted into temperature from FIG. 6, the temperature is preferably 220°C or lower, more preferably 150°C or lower, even more preferably 120°C or lower, and most preferably 95°C or lower.

Example 2-2

The following reaction mixture for hydrothermal synthesis was prepared.

To a mixture of 7.2 g of a 1 mol/L-NaOH aqueous solution, 28.8 g of a 1 mol/L-KOH aqueous solution, and 570.05 g of water, 0.975 g of aluminum hydroxide (containing 53.5 mass% of Al2O3, available from Aldrich) was added, and dissolved with stirring to prepare a transparent solution. To the solution, 12.15 g of a TMADAOH (N,N,N-trimethyl-1-adamantylammonium hydroxide) aqueous solution (containing 25 mass% of TMADAOH, available from SACHEM, Inc.) was added as an organic template, and 54 g of colloidal silica (Snowtex-40 available from Nissan Chemical Corporation) was further added, followed by stirring for 30 minutes, to prepare a reaction mixture.

The composition (molar proportions) of this reaction mixture is $SiO_2/Al_2O_3/NaOH/KOH/H_2O/TMADAOH = 1/0.014/0.02/0.08/100/0.04$, and $SiO_2/Al_2O_3 = 70$.

An alumina tube (outer diameter: 12 mm, inner diameter: 9 mm) was cut to a length of 400 mm and used as an inorganic porous support.

A CHA-type zeolite crystallized by hydrothermal synthesis at 160°C for 2 days in a gel composition (molar proportions) of $SiO_2/Al_2O_3/NaOH/KOH/H_2O/TMADAOH = 1/0.033/0.1/0.06/20/0.07$ was used as seed crystals. The support was immersed for 30 seconds in a dispersion liquid prepared by dispersing 1.0 mass% of the seed crystals in water, and then pulled up to support the seed crystals on an upper end portion of the inorganic porous support, and the support on which the seed crystals were supported was used for hydrothermal synthesis.

The support to which the seed crystals were attached in this manner and two supports to which seed crystals were attached in the same manner, i.e., a total of three supports were immersed in the vertical direction in a Teflon (trade name) inner cylinder containing the reaction mixture, an autoclave was sealed, and the supports were heated at 181°C for 18 hours under autogenous pressure in a stationary state, thereby performing crystal growth of zeolite at the upper end portion of the inorganic porous support by hydrothermal synthesis. Thereafter, cooling was performed, and the zeolite single-component separation structure was taken out from the reaction mixture, washed, and then dried at 100°C for 2.5 hours or more.

The zeolite single-component separation structure before organic template firing was fired in an electric furnace at 500°C for 5 hours. The mass per unit area of the CHA-type zeolite crystallized at the upper end portion of the support, which was determined from the difference between the mass of the zeolite single-component separation structure after firing and the mass of the support, was 60 g/m$^2$. The XRD of the generated membrane was measured, and it was found that a CHA-type zeolite was generated. In the X-ray diffraction pattern, the peak intensity near $2\theta = 9.6°$ was 2.5 times the peak intensity near $2\theta = 20.8°$.

The CHA-type zeolite single-component separation structure with a length of 400 mm obtained by such a synthesis method was divided into two parts having a length of 200 mm. The two parts were installed in series to prepare a sample having a total length of 400 mm. By supplying, at 100°C, a supply gas to a reaction tube (FIG. 3) where the CHA-type zeolite single-component separation structure was installed at 50 ml/min via bubblers respectively containing water vapor and polymethoxysiloxane (MKC (trade name) silicate, MS-51, available from Mitsubishi Chemical Corporation), which is a methyl silicate oligomer, as a silica source, using the apparatus illustrated in FIG. 2, the upper end portion of the CHA-type zeolite single-component separation structure was treated (surface modification for forming the second separation section) to prepare a composite separation membrane. In the supply of each raw material by the gases from the bubblers, nitrogen gas was used for the supply of water vapor, and helium was used for the supply of the silica source. The reaction tube is a stainless steel tube having an inner diameter of 15 mm, an outer diameter of 20 mm, and a full length of 440 mm, both ends thereof can be connected to a gas supply pipe by flanges, and a gas can flow through the reaction tube. In the treatment, only the gas accompanying water vapor was supplied and allowed to flow through the reaction tube for the first 1 hour (first treatment stage), the gas accompanying water vapor and the gas accompanying and carrying polymethoxysiloxane were mixed and supplied, and allowed to flow in the reaction tube for the next 3 hours (second treatment stage), and only the gas accompanying water vapor was supplied and allowed to flow in the reaction tube for the next 1 hour (third treatment stage). After the treatment process, the inside of the reaction tube was allowed to cool, and then the composite separation membrane was taken out and further treated by heating at 130°C for 1 hour (fourth treatment stage). Two composite separation membranes each having a length of 200 mm were provided. One of the membranes was mounted in a separation membrane module as a membrane having a length of 17.5 cm, and preparation for a gas separation experiment was completed.

The resultant composite separation membrane (surface-modified CHA-type zeolite membrane/surface-modified CHA membrane) was modularized. The separation module had a cylinder (tubular) shape with an inner diameter of 16 mm φ, and was configured so that a supply flow path for a separation target gas, having a width of 2 mm on one side, was formed between the separation module and the modified surface of the equipped composite separation membrane having an outer shape of 12 mm φ. The length of an exposed surface of the composite separation membrane in the separation module was 175 mm for binding to a connection pipe portion for gas flow.

The measurement temperature Tam (°C) was set to 20°C, 51°C, 70°C, 80°C, and 90°C, and the membrane performance evaluation of the composite separation membrane (surface-modified CHA-type zeolite membrane/surface-modified CHA membrane) and the hydrogen/oxygen separation experiment were performed. Based on the results, the temperature dependency of the hydrogen permeance $P(H_2)$ (mol/(m$^2$·s·Pa)) and the oxygen permeance $P(O_2)$ (mol/(m$^2$·s·Pa)) was derived.

In the experiment, the separation target gas was a mixed gas of hydrogen and oxygen that was supplied from a gas cylinder, and hydrogen was supplied at 133.3 ml/min and oxygen was supplied at 66.7 ml/min (a total of 200.0 ml/min), to the separation membrane and the separation membrane module. The separation target mixed gas had a stoichiometric composition of hydrogen:oxygen = 2:1. This is based on the assumption that hydrogen and oxygen are generated by total decomposition of water in an artificial photosynthesis plant or the like equipped with a photocatalyst material.

FIG. 4 illustrates a schematic view of a measurement system used for the evaluation. The measurement system can also be used as a hydrogen recovery system in an artificial photosynthesis plant or the like when the scale is enlarged. In this case, the pressurization mechanism A was not used, and a dehumidification module equipped with silica gel was used as the dehumidification mechanism A. As a result, the relative humidity of the mixed gas introduced into the separation module was 0.1% or less under all conditions. The temperature adjustment mechanism A was not used, and as the flame propagation suppression mechanism A, one in which a filled pipe obtained by filling zircon beads in a pipe and a rupture plate were bound by an elbow pipe was used. A water tank capable of temperature adjustment was used as the temperature adjustment mechanism B, and the separation module was installed therein, whereby the membrane performance evaluation of the composite separation membrane (surface-modified CHA-type zeolite membrane/surface-modified CHA membrane) and the hydrogen/oxygen separation experiment were performed at 20°C, 51°C, 70°C, 80°C, and 90°C. The dehumidification mechanism B, a combustible propagation suppression mechanism B, and the like were not integrated with the separation module.

The supply pressure was set to 20 kPa (G) by controlling the pressure release valve as the pressurization mechanism B in the drawing. Further, a scroll pump having a maximum exhaust speed of 580 L/min was provided as the decompression mechanism on the permeation side of the separation membrane module, and the permeation-side pressure was reduced to about -99 kPa (G) by the scroll pump.

The membrane performance (separation module performance) at each temperature is shown in Table 15, and the process performance as a hydrogen recovery system is shown in Table 16.

[Table 15]

Table 15

| Temperature | Hydrogen permeance | Oxygen permeance | Separation factor |
|---|---|---|---|
| (°C) | (mol/(m$^2$·sec·Pa)) | (mol/(m$^2$·sec·Pa)) | |
| Tam | P(S)=P(H$_2$) | P(L)=P(O$_2$) | $\alpha$(S/L)=$\alpha$(H$_2$/O$_2$) |
| 20 | 5.28E-08 | 1.87E-09 | 28.2 |
| 51 | 1.07E-07 | 2.37E-09 | 45.2 |
| 70 | 1.38E-07 | 2.78E-09 | 49.7 |
| 80 | 1.57E-07 | 2.97E-09 | 52.7 |
| 90 | 1.70E-07 | 3.24E-09 | 52.7 |

[Table 16]

Table 16

| Temperature (Tos or Tgm) (°C) | Supply flow rate (ml/min) | Permeation-side flow rate (ml/min) | Permeation-side hydrogen concentration (%) | Hydrogen recovery rate (%) | Non-permeation-side flow rate (ml/min) | Non-permeation-side hydrogen concentration (%) |
|---|---|---|---|---|---|---|
| 20 | | 34.2 | 97.9 | 25.1 | 165.7 | 60.3 |
| 51 | | 64.2 | 98.4 | 47.4 | 135.5 | 51.8 |
| 70 | 200 | 78.0 | 98.4 | 57.6 | 119.9 | 47.2 |
| 80 | | 86.3 | 98.4 | 63.7 | 112.7 | 43.0 |
| 90 | | 91.9 | 98.3 | 67.8 | 107.3 | 40.1 |

From these results, first, the influence of warming from 20°C to 90°C will be considered.

Warming from 20°C to 90°C approximately tripled the hydrogen permeance P(H$_2$) and improved the membrane performance or the separation module performance. Meanwhile, warming from 20°C to 90°C increased the oxygen permeance P(O$_2$) by only about 1.7 times.

Consequently, warming from 20°C to 90°C increased the separation performance $\alpha$ between hydrogen and oxygen (H$_2$/O$_2$) by about 1.9 times, and improved the membrane performance or the separation module performance.

The hydrogen permeance P(H$_2$) and the oxygen permeance P(O$_2$) at each temperature were P(O$_2$) < P(H$_2$).

From these results, as shown in Table 16, in a range of 20 (°C) $\leq$ Tos (°C) $\leq$ 90 (°C) or in a range of 20 (°C) $\leq$ Tgm (°C) $\leq$ 90 (°C), the following matters were clarified as the hydrogen recovery system or the process performance of separation and recovery.

The hydrogen recovery rate was improved by about 2.7 times by warming to 90°C, with the value at 20°C as a reference. Accordingly, warming from 20°C to 90°C reduced the non-permeation-side hydrogen concentration from 60.3 vol% to 40.1 vol%, reduced the detonation power in an unlikely event of ignition, and improved the safety. Even in the case of warming from 20°C to 90°C, the permeation-side hydrogen concentration was stable at about 98 vol%, and the hydrogen concentration outside the explosion range (more than 95.8 vol%) of the hydrogen-oxygen mixed gas (hydrogen detonating gas) having the stoichiometric composition was stably realized in the entire temperature range.

In the case of warming from 20°C to 90°C in this manner, in consideration of the explosion power in an unlikely event of ignition of the supply-side hydrogen-oxygen mixed gas, it is inferred from the results of Example 2-1 that the explosion power is increased by about from 6 to 7%, but the influence can be said to be sufficiently small. Therefore, the effectiveness of the present invention is clear when the above-described advantages of warming separation in an appropriate range are considered together.

Further, with regard to these results, the influence of warming from 20°C to 51°C will be discussed.

From these results, warming from 20°C to 51°C approximately doubled the hydrogen permeance $P(H_2)$ and improved the membrane performance or the separation module performance. Meanwhile, warming from 20°C to 51°C increased the oxygen permeance $P(O_2)$ by only about 1.3 times.

Consequently, warming from 20°C to 51°C increased the separation performance $\alpha$ between hydrogen and oxygen ($H_2/O_2$) by about 1.6 times, and improved the membrane performance or the separation module performance.

The hydrogen permeance $P(H_2)$ and the oxygen permeance $P(O_2)$ at each temperature were $P(O_2) < P(H_2)$.

Further, from these results, as shown in Table 16, in a range of 20 (°C) $\leq$ Tos (°C) $\leq$ 51 (°C) or in a range of 20 (°C) $\leq$ Tgm (°C) $\leq$ 51 (°C), the following matters were clarified as the hydrogen recovery system or the process performance of separation and recovery.

The hydrogen recovery rate was improved by about 1.9 times by warming to 51°C, with the value at 20°C as a reference. Accordingly, warming from 20°C to 51°C reduced the non-permeation-side hydrogen concentration from 60.3 vol% to 51.8 vol%, reduced the detonation power in an unlikely event of ignition, and improved the safety. Even in the case of warming from 20°C to 51°C, the permeation-side hydrogen concentration was stable at about 98 vol%, and the hydrogen concentration outside the explosion range (more than 95.8 vol%) of the hydrogen-oxygen mixed gas (hydrogen detonating gas) having the stoichiometric composition was stably realized in the entire temperature range.

In the case of warming from 20°C to 51°C in this manner, in consideration of the explosion power in an unlikely event of ignition of the supply-side hydrogen-oxygen mixed gas, it is inferred from the results of Example 2-1 that the explosion power is increased by about from 2 to 3%, but the influence can be said to be sufficiently small. Therefore, the effectiveness of the present invention is clear when the above-described advantages of warming separation are considered together.

Thus, the improvement of the characteristics as the hydrogen recovery system or as the separation and recovery process performance results from the temperature dependency of the separation membrane, and when hydrogen is separated and recovered from a mixed gas containing at least both hydrogen and oxygen, it is important to warm the mixed gas in a range where the explosion power of the target hydrogen-oxygen mixed gas does not excessively increase.

Example 2-3

As described below, six composite separation membranes (surface-modified CHA-type zeolite membrane/surface-modified CHA membrane) similar to those described in Example 2-2 were provided. Each of these membranes had a length of 170 mm, and was mounted in each of six separation modules including a warming mechanism.

These six separation modules were then connected in series to form a configuration equivalent to a separation module having a length of 102 cm. After such preparation, a hydrogen recovery system capable of separating and recovering hydrogen from a saturated water vapor-containing hydrogen-oxygen mixed gas (hydrogen detonating gas) having a ratio of hydrogen:oxygen = 2:1 was configured using the separation modules connected in series. FIG. 4 illustrates a schematic view of the hydrogen recovery system.

The recovery system can also be used as a hydrogen recovery system in an artificial photosynthesis plant or the like when the scale is enlarged. In FIG. 4, in the case of the present example, the pressurization mechanisms A and B were not used, and two dehumidification modules equipped with silica gel were used as the dehumidification mechanism A. As a result, the relative humidity of the mixed gas introduced into the separation module was 0.1% or less under all conditions.

The temperature adjustment mechanism A was not used, and a commercially available dry safety device (available from NISSAN TANAKA CORPORATION/model number: FA-510-H) was used as the flame propagation suppression mechanism A. The temperature adjustment mechanism B was realized by supplying warm water from a thermostatic bath to the tubular flow path integrated with the separation module. The dehumidification mechanism B, the flame propagation suppression mechanism B, and the like were not integrated with the separation module. The supply pressure of the saturated water vapor-containing hydrogen-oxygen mixed gas (hydrogen detonating gas) having a ratio of hydrogen:oxygen = 2:1 was set to 0 kPa (G) without using any pressurization mechanism B in the figure. In addition, a commercially available dry safety device (available from NISSAN TANAKA CORPORATION/model number: FA-510-H) was further installed in the subsequent stage of the pressurization mechanism B in order to secure safety. Also, a diaphragm pump having a maximum exhaust speed of 120 L/min was provided as the decompression mechanism on the permeation side of the separation membrane module, and the permeation-side pressure was reduced to less than -96 kPa (G) by the diaphragm pump. A commercially available dry safety device (available from NISSAN TANAKA CORPORATION/model number: FA-510-H) was further installed also in the subsequent stage of the decompression mechanism in order to secure safety.

Here, the temperature Tos of the separation module was set to 90°C, and a hydrogen-oxygen mixed gas (hydrogen detonating gas) having a ratio of hydrogen:oxygen = 2:1 was supplied at 480 ml/min to evaluate the process performances as a hydrogen recovery system.

The flow rate on the permeation side sucked by the diaphragm pump provided as the decompression mechanism was 315 ml/min, and the hydrogen concentration thereon was 95.9 vol%, which was outside the explosion range, and hydrogen was safely separated from the hydrogen detonating gas. The hydrogen recovery rate was also as high as 94.3 vol%, and highly efficient hydrogen recovery was confirmed. The supply pressure at this time was 0 kPa (G), which was sufficiently low, and ideal as the condition for supplying the hydrogen detonating gas. Meanwhile, the non-permeation-side flow rate was 165 ml/min, and the hydrogen concentration was 8.4 vol%, which was within the detonation range but outside the explosion range, and hydrogen was safely separated from the hydrogen detonating gas.

From the results of Example 2-1, in the case of warming to 90°C, it is inferred that the explosion power is increased by about from 6 to 7% as compared with the explosion power when the supply-side hydrogen-oxygen mixed gas is ignited at room temperature, and the influence can be said to be sufficiently small. Therefore, the effectiveness of the present invention is clear when the above-described advantages of warming separation in an appropriate range are considered together.

Industrial Applicability

According to the present invention, hydrogen can be efficiently separated from other gases, and therefore, hydrogen can be efficiently separated from a large amount of hydrogen-oxygen mixed gas obtained by, for example, artificial photosynthesis.

Further, according to the present invention, a hydrogen-oxygen mixed gas, which has been considered to be dangerous when the temperature is raised, is separated by a separation membrane at a high temperature, which has not been performed so far, and thus hydrogen is sufficiently separated from the mixed gas containing hydrogen and oxygen. Thus, the oxygen concentration after the separation membrane permeation is sufficiently lowered and falls outside the detonation range, and thus the separation can be performed safely. The portion where the hydrogen-oxygen separation is performed is a place where hydrogen-oxygen mixed gases from many hydrogen-oxygen mixed gas generators (for example, a water decomposition device by a photocatalyst of artificial photosynthesis) gather, and by applying the present invention here, a large amount of mixed gas to be separated falls outside the detonation range after passing through the separation step, whereby hydrogen can be safely separated and recovered from the mixed gas containing hydrogen and oxygen. When the present technology is combined with, for example, a method of electrolyzing water using renewable energy such as sunlight or a method of simultaneously generating hydrogen and oxygen by total decomposition of water by a photocatalyst, so-called green hydrogen can be efficiently separated and recovered.

Therefore, the present invention is a technically and environmentally useful invention and is a technique with a high industrial value.

Reference Signs List

1. Container (bubbler) that generates gas from Si compound
2. Container (bubbler) that generates water vapor from water
3. Tubular reaction tube
4. Gas flow rate control meter
5. Water vapor collector in exhaust gas
6. Back-pressure valve
7. Gas flowmeter
8. Valve
9. Supply gas
10. Exhaust gas
11. Thermostatic bath
21. Tubular reaction tube
22. Zeolite single-component separation structure

23. Fixing jig
24. Flange
25. Supply gas introduction pipe
26. Exhaust gas pipe
100. Composite separation membrane
101. Support
102. Void
103. First separation section
104. Second separation section
105. Separation active section
106. Single-component separation structure
200. Limit flame extinction pressure measuring apparatus
201. Inorganic particle-loaded cell
202. First combustion chamber
203. Second combustion chamber
204. Pressure detector
205. Thermocouple
206. Neon transformer for ignition

**Claims**

1. A separation membrane in which an activation energy Ep(S) (kJ/mol) of a permeance P(S) (mol/(m²·s·Pa)) of hydrogen through the separation membrane derived within a range of a temperature Tam (°C) satisfying Formula (1-I) described below and an activation energy Ep(L) (kJ/mol) of a permeance P(L) (mol/(m²·s·Pa)) of a gas L (provided that L is at least one selected from the group consisting of carbon dioxide, argon, oxygen, nitrogen, and methane) through the separation membrane derived within the same temperature range satisfy Formula (1-II) described below:

$$5 \ (°C) \leq \mathrm{Tam} \ (°C) \leq 200 \ (°C) \qquad (1\text{-}I)$$

$$|\mathrm{Ep(L)}| < |\mathrm{Ep(S)}| \qquad (1\text{-}II).$$

2. The separation membrane according to claim 1, wherein Formula (1-III) described below is satisfied:

$$\mathrm{P(L)} < \mathrm{P(S)} \qquad (1\text{-}III).$$

3. The separation membrane according to claim 1, wherein Formula (1-IV) described below is satisfied:

$$0 < \mathrm{Ep(L)} < \mathrm{Ep(S)} \qquad (1\text{-}IV).$$

4. The separation membrane according to claim 1, wherein the separation membrane is an inorganic membrane.

5. The separation membrane according to claim 1, wherein the separation membrane comprises a surface-modified zeolite membrane.

6. A separation membrane laminated body comprising a separation membrane on a support, wherein the separation membrane is the separation membrane described in any one of claims 1 to 5, the support is tubular, and an inner diameter φi (mm) of the support satisfies Formula (1-VI) described below:

$$6 \ (\mathrm{mm}) \leq \varphi i \ (\mathrm{mm}) \leq 16 \ (\mathrm{mm}) \qquad (1\text{-}VI).$$

7. A separation module or separation tower comprising a separation membrane, wherein the separation membrane is the separation membrane described in any one of claims 1 to 5,
and a temperature Tos (°C) of the separation module or separation tower satisfies Formula (1-VII) described below:

$$45 \, (°C) \leq \text{Tos} \, (°C) \leq 200 \, (°C) \quad (1\text{-VII}).$$

8. The separation module or separation tower according to claim 7, wherein a distance between an inner wall of the separation module or separation tower and the separation membrane closest to the inner wall is 0.1 cm or more and 50 cm or less.

9. A separation module or separation tower comprising the separation membrane laminated body described in claim 6, wherein a temperature Tos (°C) of the separation module or separation tower satisfies Formula (1-VII) described below:

$$45 \, (°C) \leq \text{Tos} \, (°C) \leq 200 \, (°C) \quad (1\text{-VII}).$$

10. The separation module or separation tower according to claim 7, further comprising at least one of a dehumidification mechanism, a warming mechanism, or a flame propagation suppression mechanism.

11. A hydrogen recovery system comprising a separation membrane, wherein the separation membrane is the separation membrane described in any one of claims 1 to 5, and
at least one temperature Tgm (°C) of a temperature of a mixed gas M to be separated and recovered in the hydrogen recovery system or a temperature of the separation membrane satisfies Formula (1-IX) described below:

$$45 \, (°C) \leq \text{Tgm} \, (°C) \leq 200 \, (°C) \quad (1\text{-IX}).$$

12. A hydrogen recovery system comprising the separation membrane laminated body described in claim 6, wherein at least one temperature Tgm (°C) of a temperature of a mixed gas M to be separated and recovered in the hydrogen recovery system or a temperature of the separation membrane satisfies Formula (1-IX) described below:

$$45 \, (°C) \leq \text{Tgm} \, (°C) \leq 200 \, (°C) \quad (1\text{-IX}).$$

13. The hydrogen recovery system according to claim 11, wherein the separation membrane is included in a separation module or separation tower, and a distance between an inner wall of the separation membrane module or separation tower and the separation membrane closest to the inner wall is 0.1 cm or more and 50 cm or less.

14. The hydrogen recovery system according to claim 11, further comprising a pressurization mechanism for the mixed gas M to be supplied to the separation membrane.

15. The hydrogen recovery system according to claim 11, further comprising at least one of a dehumidification mechanism, a warming mechanism, or a flame propagation suppression mechanism.

16. The hydrogen recovery system according to claim 11, further comprising a decompression mechanism on a permeation side of the separation membrane.

17. A method for separating and recovering hydrogen from a mixed gas M of hydrogen and a gas L1 by a separation membrane, the gas L1 having a larger dynamic molecular diameter than hydrogen, wherein

the separation membrane is the separation membrane described in any one of claims 1 to 5,
and at least one temperature Tgm (°C) of a temperature of the mixed gas M or a temperature of the separation membrane satisfies Formula (1-IX) described below:

$$45 \, (°C) \leq \text{Tgm} \, (°C) \leq 200 \, (°C) \quad (1\text{-IX}).$$

18. The method for separating and recovering hydrogen according to claim 17, wherein a pressure $F_M$ (MPa (G)) of the mixed gas M to be supplied to the separation membrane satisfies Formula (1-XI) described below:

$$0.0 \, (\text{MPa (G)}) \leq F_M \, (\text{MPa (G)}) \leq 0.2 \, (\text{MPa (G)}) \quad (1\text{-XI}).$$

19. The method for separating and recovering hydrogen according to claim 17, wherein a pressure on a permeation side of the separation membrane is set to a reduced pressure.

20. The method for separating and recovering hydrogen according to claim 19, wherein the pressure on the permeation side of the separation membrane is -0.101 MPa (G) or more and - 0.065 MPa (G) or less.

21. The method for separating and recovering hydrogen according to claim 17, wherein a relative humidity $RH_M$ (%) in the mixed gas M satisfies Formula (1-XIII) described below:

$$0.0\ (\%) \leq RH_M\ (\%) \leq 5\ (\%) \quad (1\text{-XIII}).$$

22. The method for separating and recovering hydrogen according to claim 18, wherein warming is performed so that at least one temperature Tgm (°C) of a temperature of the mixed gas M or a temperature of the separation membrane satisfies Formula (1-IX) described below:

$$45\ (°C) \leq Tgm\ (°C) \leq 200\ (°C) \quad (1\text{-IX}).$$

23. The method for separating and recovering hydrogen according to claim 17, wherein the mixed gas M passes through the separation membrane after passing through a flame propagation suppression mechanism.

24. The method for separating and recovering hydrogen according to claim 17, wherein a separation membrane module or separation tower including the separation membrane is provided, and the mixed gas M is supplied so that, in the separation membrane module or separation tower, a supply-side maximum Reynolds number is 5 or more and 2000 or less and/or a permeation-side maximum Reynolds number is 5 or more and 2000 or less.

25. The method for separating and recovering hydrogen according to claim 17, wherein the gas L is oxygen, and a hydrogen-oxygen mixed gas is supplied so that the hydrogen-oxygen mixed gas on a permeation side after a separation and recovery step has a hydrogen concentration of more than 95.8 vol%.

26. The method for separating and recovering hydrogen according to claim 25, wherein the hydrogen-oxygen mixed gas is supplied so that, after the separation and recovery step, the hydrogen-oxygen mixed gas on the permeation side has a hydrogen concentration of 96.0 vol% or more and the hydrogen-oxygen mixed gas on a non-permeation side has a hydrogen concentration of 15.5 vol% or less.

27. A separation membrane in which an activation energy Ep(S) (kJ/mol) of a permeance P(S) (mol/(m$^2$·s·Pa)) of hydrogen through the separation membrane derived within a range of a temperature Tam (°C) satisfying Formula (1-I) described below and an activation energy Ep(L) (kJ/mol) of a permeance P(L) (mol/(m$^2$·s·Pa)) of a gas L (provided that hydrogen is excluded) through the separation membrane derived within the same temperature range satisfy Formula (1-II) described below:

$$5\ (°C) \leq Tam\ (°C) \leq 200\ (°C) \quad (1\text{-I})$$

$$|Ep(L)| < |Ep(S)| \quad (1\text{-II}).$$

28. A separation and recovery method for separating and recovering hydrogen from a mixed gas M containing at least hydrogen and oxygen, wherein a temperature Tgm (°C) in the separation and recovery step satisfies Formula (2-I) described below:

$$45\ (°C) \leq Tgm\ (°C) \leq 200\ (°C) \quad (2\text{-I}).$$

29. The separation and recovery method according to claim 28, wherein a composition ratio of hydrogen to oxygen in the mixed gas M to be supplied to the separation and recovery step is 2:1 or more, with hydrogen in excess.

30. The separation and recovery method according to claim 28, wherein the mixed gas M to be supplied to the separation and recovery step is within an explosion range.

31. The separation and recovery method according to claim 28, wherein a separation membrane is used in the separation and recovery step.

32. The separation and recovery method according to claim 31, wherein the separation membrane is an inorganic membrane.

33. The separation and recovery method according to claim 32, wherein the separation membrane includes a surface-modified zeolite membrane.

34. The separation and recovery method according to claim 31, wherein the separation membrane is a polyimide membrane or a polyamide membrane.

35. The separation and recovery method according to claim 31, wherein a pressure $F_M$ (MPa (G)) of the mixed gas M to be supplied to the separation membrane satisfies Formula (2-III) described below:

$$0.0 \text{ (MPa(G))} \leq F_M \text{ (MPa(G))} \leq 0.2 \text{ (MPa(G))} \quad (2\text{-III)}.$$

36. The separation and recovery method according to claim 31, wherein a pressure on a permeation side of the separation membrane is reduced.

37. The separation and recovery method according to claim 36, wherein the pressure on the permeation side of the separation membrane is lower than -0.9 MPa (G).

38. The separation and recovery method according to claim 31, wherein a relative humidity $RH_M$ (%) in the mixed gas M satisfies Formula (2-V) described below:

$$0.0 \text{ (\%)} \leq RH_M \text{ (\%)} \leq 5.0 \text{ (\%)} \quad (2\text{-V)}.$$

39. The separation and recovery method according to claim 31, wherein at least one of the mixed gas M or the separation membrane is warmed so that the temperature Tgm satisfies Formula (2-I).

40. The separation and recovery method according to claim 31, wherein the mixed gas M passes through the separation membrane after passing through a flame propagation suppression mechanism.

41. The separation and recovery method according to claim 31, wherein the mixed gas M is supplied so that a supply-side maximum Reynolds number and/or a permeation-side maximum Reynolds number is 5 or more and 2000 or less.

42. The separation and recovery method according to claim 31, wherein the mixed gas M is supplied so that the mixed gas after permeation in the separation and recovery step has a hydrogen concentration of more than 95.8 vol%.

43. The separation and recovery method according to claim 42, wherein the mixed gas M is supplied so that, after the separation and recovery step, the mixed gas on a permeation side has a hydrogen concentration of 96.0 vol% or more and the mixed gas on a non-permeation side has a hydrogen concentration of 15.5 vol% or less.

44. A separation module or separation tower that separates and recovers hydrogen from a mixed gas M containing at least hydrogen and oxygen, the separation module or separation tower comprising a temperature adjustment mechanism.

45. The separation module or separation tower according to claim 44, wherein the temperature adjustment mechanism includes a tubular flow path through which a heat medium flows and/or a heat insulation section.

46. The separation module or separation tower according to claim 44, wherein a temperature Tos (°C) of the separation module or the separation tower satisfies Formula (2-VII) described below:

$$51 \text{ (°C)} \leq Tos \text{ (°C)} \leq 220 \text{ (°C)} \quad (2\text{-VII)}.$$

47. The separation module or separation tower according to claim 44, wherein the separation module or separation tower comprises a separation membrane.

48. The separation module or separation tower according to claim 47, wherein the separation membrane is an inorganic membrane.

49. The separation module or separation tower according to claim 47, wherein the separation membrane includes a surface-modified zeolite membrane.

50. The separation module or separation tower according to claim 47, wherein a distance between an inner wall of the separation module or separation tower and the separation membrane closest to the inner wall is 0.1 cm or more and 50 cm or less.

51. The separation module or separation tower according to claim 47, wherein the separation membrane includes a tubular support, and an inner diameter φi (mm) of the support satisfies Formula (2-IX) described below:

$$6 \leq \varphi i \leq 16 \quad (2\text{-IX}).$$

52. A hydrogen recovery system that separates and recovers hydrogen from a mixed gas M containing at least hydrogen and oxygen, the hydrogen recovery system comprising the separation module or separation tower described in any one of claims 44 to 51.

53. The hydrogen recovery system according to claim 52, further comprising a pressurization mechanism for the mixed gas M to be supplied to the separation module or separation tower.

54. The hydrogen recovery system according to claim 52, further comprising a dehumidification section for the mixed gas M and/or a warming section for the mixed gas M.

55. The hydrogen recovery system according to claim 52, further comprising a flame propagation suppression section.

56. The hydrogen recovery system according to claim 52, further comprising a decompression mechanism on a downstream side of the separation module or separation tower.

# FIG. 1

# FIG. 2

# FIG. 3

# FIG. 4

# FIG. 5

# FIG. 6

Heat medium
flow path

Gas
permeation
side

Mixed gas
supply side

Gas non-permeation side

# FIG. 7

Ep(S) = Ep(H2) = 13.4kJ/mol

Ep(L) = Ep(O2) = 7.1kJ/mol

## FIG. 8

## FIG. 9

# FIG.10

# FIG.11

# FIG.12

# FIG.13

Temperature of hydrogen-oxygen mixed gas

## INTERNATIONAL SEARCH REPORT

| International application No. |
| --- |
| **PCT/JP2024/023643** |

| | |
| --- | --- |
| **A. CLASSIFICATION OF SUBJECT MATTER** | |

*B01D 69/02*(2006.01)i; *B01D 53/22*(2006.01)i; *B01D 63/06*(2006.01)i; *B01D 69/12*(2006.01)i; *B01D 71/02*(2006.01)i;
*B01D 71/56*(2006.01)i; *B01D 71/64*(2006.01)i; *C01B 3/56*(2006.01)i; *C01B 39/40*(2006.01)i
FI: B01D69/02; B01D53/22; B01D63/06; B01D69/12; B01D71/02 500; B01D71/56; B01D71/64; C01B3/56 Z; C01B39/40

According to International Patent Classification (IPC) or to both national classification and IPC

**B. FIELDS SEARCHED**

Minimum documentation searched (classification system followed by classification symbols)
B01D61/00-71/82, B01D53/22, C01B3/50-3/58

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2019-42710 A (NAGOYA INST TECH) 22 March 2019 (2019-03-22) | 28-56 |
| | paragraphs [0010]-[0031], fig. 1-9 | |
| A | | 1-27 |
| X | JP 2018-202413 A (MITSUBISHI CHEMICAL CORPORATION) 27 December 2018 (2018-12-27) | 28-56 |
| | paragraphs [0015]-[0345], fig. 1-23 | |
| A | | 1-27 |
| X | JP 2016-28812 A (MITSUBISHI CHEMICAL CORPORATION) 03 March 2016 (2016-03-03) | 28-37, 39, 42-56 |
| | paragraphs [0033]-[0144], fig. 1-11 | |
| A | | 1-27, 38, 40-41 |
| A | WO 2022/230568 A1 (INPEX CORP.) 03 November 2022 (2022-11-03) | 1-27 |

☑ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 September 2024** | **24 September 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| International application No. |
| --- |
| **PCT/JP2024/023643** |

**C.      DOCUMENTS CONSIDERED TO BE RELEVANT**

| Category* | Citation of document, with indication, where appropriate, of the relevant passages | Relevant to claim No. |
| --- | --- | --- |
| A | JP 2018-521833 A (FORSCHUNGSZENTRUM JUELICH GMBH) 09 August 2018 (2018-08-09) | 1-27 |
| A | US 2018/0346329 A1 (SABIC GLOBAL TECHNOLOGIES B.V.) 06 December 2018 (2018-12-06) | 1-27 |

Form PCT/ISA/210 (second sheet) (July 2022)

**INTERNATIONAL SEARCH REPORT**

International application No.

**PCT/JP2024/023643**

| Box No. III | Observations where unity of invention is lacking (Continuation of item 3 of first sheet) |
|---|---|

This International Searching Authority found multiple inventions in this international application, as follows:

Document 4: WO 2022/230568 A1 (INPEX CORP.) 03 November 2022 (2022-11-03)
       & AU 2022266349 A1
       & JP 2022-169342 A
       & US 2024/0217818 A1
Document 5: JP 2018-521833 A (FORSCHUNGSZENTRUM JUELICH GMBH)
       & CN 108124433 A
       & DE 102015005732 A1
       & DK 3291912 T3
       & EP 3291912 A1
       & ES 2743848 T3
       & PT 3291912 T
       & US 2018/0141006 A1
       & WO 2016/177355 A1

Considering the disclosure content of document 4 or document 5, the present international application includes the following two inventions that do not comply with the requirement for unity of invention.
Invention 1: Claims 1-27
Invention 2: Claims 28-56

Since claim 1 has a special technical feature and claims 2-27 have the same or corresponding special technical feature as claim 1, claims 1-27 are classified as invention 1.
Claims 28-56 can be understood to share with claim 1, classified as invention 1, a common technical feature of hydrogen separation or a hydrogen separation membrane. However, since said technical feature does not make a contribution over the prior art in light of the disclosure content of document 4 (particularly, paragraph [0029]) or document 5 (particularly, paragraph [0123]), said feature cannot be said to be a special technical feature. There also are no other same or corresponding special technical features between claims 28-56 and claim 1. Furthermore, claims 28-56 do not depend from claim 1, and are not substantially identical to or similarly closely related to any of the claims classified as invention 1. From the above, claims 28-56 cannot be classified as invention 1.

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
    ☐ The additional search fees were accompanied by the applicant's protest and, where applicable, the payment of a protest fee.
    ☐ The additional search fees were accompanied by the applicant's protest but the applicable protest fee was not paid within the time limit specified in the invitation.
    ☑ No protest accompanied the payment of additional search fees.

Form PCT/ISA/210 (continuation of first sheet) (July 2022)

## INTERNATIONAL SEARCH REPORT
### Information on patent family members

International application No.

**PCT/JP2024/023643**

| Patent document cited in search report | | | Publication date (day/month/year) | Patent family member(s) | | | Publication date (day/month/year) |
|---|---|---|---|---|---|---|---|
| JP | 2019-42710 | A | 22 March 2019 | (Family: none) | | | |
| JP | 2018-202413 | A | 27 December 2018 | JP | 2023-17130 | A | |
| JP | 2016-28812 | A | 03 March 2016 | (Family: none) | | | |
| WO | 2022/230568 | A1 | 03 November 2022 | AU | 2022266349 | A1 | |
| | | | | JP | 2022-169342 | A | |
| | | | | US | 2024/0217818 | A1 | |
| JP | 2018-521833 | A | 09 August 2018 | CN | 108124433 | A | |
| | | | | DE | 102015005732 | A1 | |
| | | | | DK | 3291912 | T3 | |
| | | | | EP | 3291912 | A1 | |
| | | | | ES | 2743848 | T3 | |
| | | | | PT | 3291912 | T | |
| | | | | US | 2018/0141006 | A1 | |
| | | | | WO | 2016/177355 | A1 | |
| US | 2018/0346329 | A1 | 06 December 2018 | WO | 2017/089924 | A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015044162 A
- JP 2015044163 A
- JP 2020131184 A
- US 4544538 B
- US 20080075656 A

**Non-patent literature cited in the description**

- **SHOZO YAGYU**. *Explosive Limits of Gas and Vapor, Japan Society for Safety Engineering*, 1977, vol. 4
- **MASAKOTO KANEZASHI**. Tailoring the Silica Network Structure for Highly Permeable Gas Separation Membranes and Evaluation of Gas Permeation Properties. *MEMBRANE*, 2016, vol. 41 (4), 183-188
- ATLAS OF ZEOLITE FRAMEWORK TYPES. ELSEVIER, 2001
- COLLECTION OF SIMULATED XRD POWDER PATTERNS FOR ZEOLITE. ELSEVIER, 1996
- **HALIL KALIPCILAR et al.** Synthesis and Separation Performance of SSZ-13 Zeolite Membranes on Tubular Supports. *Chem. Mater.*, 2002, vol. 14, 3458-3464